# EUROPÄISCHE PATENTSCHRIFT

(11) **EP 3 707 808 B1**
(45) Veröffentlichungstag und Bekanntmachung des Hinweises auf die Patenterteilung: **10.03.2021**
(21) Anmeldenummer: 18829357.5
(22) Anmeldetag: 19.12.2018
(51) Int. Cl.: H02K 41/03, H02K 9/19, H02K 9/10, H02K 5/18

(54) **STATORMODUL UND PLANARANTRIEBSSYSTEM**
STATOR MODULE AND PLANAR DRIVE SYSTEM
MODULE DE STATOR ET SYSTÈME D'ENTRAÎNEMENT PLANAIRE

(30) Priorität: 27.12.2017 DE 102017131324
(43) Veröffentlichungstag der Anmeldung: 16.09.2020
(73) Patentinhaber: Beckhoff Automation GmbH, 33415 Verl (DE)
(72) Erfinder: NEUFELD, Joerg, 33104 Paderborn (DE); BENTFELD, Lukas, 33098 Paderborn (DE); BRINKMANN, Rolf, 32107 Bad Salzuflen (DE)
(74) Vertreter: Patentanwaltskanzlei WILHELM & BECK
(86) Internationale Anmeldenummer: PCT/EP2018/085861
(87) Internationale Veröffentlichungsnummer: WO 2019/129576

(56) Entgegenhaltungen:
- WO-A2-2009/083891
- US-A1- 2013 069 449

## Beschreibung

Die Erfindung betrifft ein Statormodul eines Planarantriebssystems und ein Planarantriebssystem mit einem Statormodul.

Planarantriebssysteme werden unter anderem in der Automatisierungstechnik, insbesondere der Fertigungstechnik, der Handhabungstechnik und der Verfahrenstechnik eingesetzt. Mittels eines Planarantriebssystems kann ein bewegliches Element einer Anlage oder Maschine in mindestens zwei linear unabhängigen Richtungen bewegt oder positioniert werden. Planarantriebssysteme können einen permanenterregten elektromagnetischen Planarmotor umfassen, wobei der Planarmotor einen Stator mit einer ebenen, planaren Oberfläche und einen über der Oberfläche in mindestens zwei Richtungen beweglichen Läufer aufweist.

Die Erfindung betrifft insbesondere ein Planarantriebssystem mit einem elektromagnetischen Planarmotor, bei dem die Antriebskraft auf den Läufer mittels ortsfest an dem Stator angeordneter und von einem Antriebsstrom durchflossener Leiter erzeugt wird, welche mit an dem Läufer angeordneten Antriebsmagneten wechselwirken. Zur Erzeugung des für die Bewegung des Läufers benötigten Antriebsstroms weist der Stator in der Regel eine oder mehrere Stromerzeugungseinheiten auf.

Zur Erfassung der Position des Läufers über dem Stator kann das Planarantriebssystem eine an dem Stator angeordnete Positionserfassungseinheit umfassen, die mit dem Läufer wechselwirkt. Eine derartige Wechselwirkung kann beispielsweise magnetisch mittels Magnetfeldsensoren und an dem Läufer angeordneten Magneten erfolgen. Für eine genaue Bestimmung der Position des Läufers sollte die Wechselwirkung zwischen dem Läufer und der Positionserfassungseinheit mit einem möglichst hohen Signal-Rausch-Verhältnis erfasst werden.

Der planare Stator des Antriebssystems kann als ein Statormodul ausgebildet sein, welches eine Statoreinheit mit den stromdurchflossenen Leitern sowie elektronische Komponenten zur Erzeugung des Antriebsstroms und zur Erfassung der Position des Läufers umfasst. An der Oberseite des Statormoduls ist in der Regel die Statoreinheit mit den von dem Antriebsstrom durchflossenen Leitern angeordnet. Die Statoreinheit weist in der Regel eine ebene bzw. planare Oberfläche auf, über welche der Läufer im Betrieb entlanggeführt wird. Die elektronischen Komponenten zur Erzeugung des Antriebsstroms und zur Erfassung der Position des Läufers sind in der Regel unterhalb der Statoreinheit in dem Statormodul angeordnet. Um eine ausreichende Kraft auf den Läufer übertragen zu können, müssen mitunter Antriebsströme mit hoher Stromstärke erzeugt werden. Dies kann zu hohen Widerstandsverlusten in den durchflossenen Leitern und damit zu einer starken Erwärmung des Statormoduls führen. Der Antriebsstrom wird zudem in der Regel als ein Wechselstrom erzeugt. Dies kann zu hohen elektromagnetischen Wechselfeldern führen, die an dem Stator angeordnete elektronische Komponenten stören können. Dadurch kann ein funktionsgemäßer Betrieb nicht sichergestellt werden.

Die Druckschriften WO 2013/059934 A1, WO 2015/017933 A1, WO 2015/179962 A1, WO 2015/184553 A1, WO 2015/188281 A1, WO 2017/004716 A1 beschreiben jeweils solch ein Planarantriebssystem, das jeweils einen elektromagnetischen Planarmotor mit einem permanenterregten Läufer und einen Stator mit mehreren bestrombaren Leitern umfasst.

Ferner ist aus US 6,114,781 ein Kühlsystem für einen Linear-oder Planarmotor bekannt.

Aus WO 2009/083891 A1 ist ein Spulenaktuator bekannt, der eine elektrische Spule und einen Stromverstärker in elektrischer Verbindung mit der elektrischen Spule aufweist.

Des Weiteren ist aus US 2013/069449 A1 eine Spulenanordnung für einen Planar- oder Linearmotor bekannt, wobei die Spulenanordnung mehrere Spulenmodule umfasst, wobei jedes der Spulenmodule mindestens einen Spulensatz, eine entsprechende elektrische Schaltung zu und von dem Spulensatz und eine hydraulische Kühlvorrichtung für den Spulensatz und eine hydraulische Leitung zu und von der Kühlvorrichtung aufweist.

Es ist Aufgabe der Erfindung, eine besonders gut kühlbare Statoreinheit für ein Planarantriebssystem und ein besonders kompaktes Planarantriebssystem bereitzustellen.

Diese Aufgabe wird mittels eines Statormoduls gemäß Patentanspruch 1 und eines Planarantriebssystems gemäß Patentanspruch 10 gelöst. Vorteilhafte Ausführungsformen sind in den abhängigen Ansprüchen angegeben.

Es wurde erkannt, dass ein verbessertes Statormodul für ein Planarantriebssystem dadurch bereitgestellt werden kann, dass das Statormodul eine sich in einer Ebene erstreckende Moduloberseite und eine zur Moduloberseite gegenüberliegende Modulunterseite, eine Statoreinheit und eine Kühleinheit aufweist. Die Statoreinheit weist wenigstens einen mit einem Antriebsstrom bestrombaren Spulenleiter zur Erzeugung eines Magnetfelds zum Antreiben eines an der Moduloberseite positionierbaren Läufers des Planarantriebssystems auf. Die Statoreinheit ist an der Moduloberseite angeordnet. Die Kühleinheit weist einen Gehäusedeckel und einen Gehäuseboden auf, wobei der Gehäusedeckel zwischen der Statoreinheit und dem Gehäuseboden angeordnet ist. Der Gehäusedeckel ist an einer Deckeloberseite des Gehäusedeckels zumindest teilweise thermisch mit einer Statorunterseite der Statoreinheit verbunden. Der Gehäusedeckel ist auf einer zur Statoreinheit abgewandten Deckelunterseite thermisch mit dem Gehäuseboden verbunden. Der Gehäuseboden ist an der Modulunterseite angeordnet und weist an der Modulunterseite einen ersten Befestigungsabschnitt auf. Der erste Befestigungsabschnitt ist thermisch mit einer Wärmesenke verbindbar. Der Gehäusedeckel ist ausgebildet, Wärme aus der Statoreinheit an den Gehäuseboden zu leiten, wobei der Gehäuseboden ausgebildet ist, die Wärme vom Gehäusedeckel zumindest teilweise an den ersten Befestigungsabschnitt zu leiten.

Diese Ausgestaltung hat den Vorteil, dass das Statormodul rückseitig auf einer zur Moduloberseite gegenüberliegenden Modulunterseite entwärmt werden kann. Die rückseitige Kühlung des Statormoduls hat den Vorteil, dass die Statoreinheit beidseitig (sowohl oberseitig als auch unterseitig) gekühlt wird, sodass eine Überhitzung der Statoreinheit zuverlässig vermieden wird. Dadurch kann die durch den Antriebsstrom in der Statoreinheit erzeugte Wärme zuverlässig abgeführt werden. Dadurch wird ein funktionsgemäßer Betrieb der Statoreinheit auch bei hohen Umgebungstemperaturen ermöglicht. Ferner kann das Statormodul auch in bei hohen Umgebungstemperaturen eingesetzt werden, sodass der Einsatzbereich des Statormoduls breit ist.

In einer weiteren Ausführungsform weist der Gehäusedeckel auf der zur Statoreinheit zugewandten Seite einen ersten Gehäuseabschnitt und einen zweiten Gehäuseabschnitt auf, wobei der erste Gehäuseabschnitt und der zweite Gehäuseabschnitt aneinander angrenzen, wobei der Gehäusedeckel an dem ersten Gehäuseabschnitt wenigstens eine erste Wärmeleitstruktur aufweist, wobei die erste Wärmeleitstruktur wenigstens ein Wärmeleitelement umfasst, wobei das erste Wärmeleitelement sich in Richtung der Statoreinheit erstreckt und an einer Kontaktfläche an der ersten Statoreinheit anliegt sowie thermisch mit der Statoreinheit gekoppelt ist, wobei in dem zweiten Gehäuseabschnitt eine Steuereinheit des Statormoduls angeordnet ist. Diese Ausgestaltung hat den Vorteil, dass der Gehäusedeckel thermisch gut leitend mit der Statoreinheit verbunden ist.

In einer weiteren Ausführungsform umfasst die erste Wärmeleitstruktur eine Vielzahl von ersten Wärmeleitelementen, wobei die ersten Wärmeleitelemente beabstandet zueinander angeordnet sind. Dadurch ist eine Wirbelstrombildung innerhalb des Gehäusedeckels reduziert, sodass eine Erwärmung des Gehäusedeckels reduziert ist. Ferner kann die Steuereinheit besonders nah an der Statoreinheit angeordnet sein, sodass Stromwege von der Steuereinheit hin zur Statoreinheit besonders kurz gehalten sind. Dadurch wird eine zuverlässige Ansteuerung der Statoreinheit durch die Steuereinheit begünstigt.

In einer weiteren Ausführungsform ist das erste Wärmeleitelement stiftförmig ausgebildet, wobei der Gehäusedeckel einen plattenförmig ausgebildeten Deckelabschnitt aufweist, wobei der Deckelabschnitt beabstandet zu der Statoreinheit angeordnet ist, wobei mit einer zur ersten Kontaktfläche gegenüberliegenden Seite jeweils das erste Wärmeleitelement mit dem Deckelabschnitt verbunden ist, wobei das erste Wärmeleitelement geneigt, vorzugsweise senkrecht, zu dem Deckelabschnitt ausgerichtet ist. Dadurch kann das erste Wärmeleitelement besonders kurz ausgebildet werden, sodass ein Materialaufwand zur Herstellung des Gehäusedeckels besonders gering ist. Ferner ist ein Wärmepfad zwischen der Statoreinheit und dem Deckelabschnitt dadurch besonders kurz, dass Umwege in der Übertragung der Wärme vermieden werden.

In einer weiteren Ausführungsform begrenzen der Deckelabschnitt und die Statoreinheit einen ersten Innenraum des Statormoduls, wobei der erste Innenraum mit einer thermisch leitfähigen und elektrisch isolierenden Vergussmasse derart verfüllt ist, dass die Steuereinheit in der Vergussmasse eingebettet ist und die Vergussmasse ausgebildet ist, Wärme aus der Statoreinheit und/oder der Steuereinheit an den Gehäusedeckel zu übertragen. Die Vergussmasse kann zusätzlich eine stoffschlüssige Verbindung der Statoreinheit an dem Gehäusedeckel sicherstellen. Ferner wird durch die Vergussmasse eine Durchbiegung der Statoreinheit bei Einleitung einer Last über die Moduloberseite in die Statoreinheit zuverlässig über die Vergussmasse hin zum Gehäusedeckel mechanisch abgestützt.

In einer weiteren Ausführungsform ist der zweite Gehäuseabschnitt an der Deckeloberseite eben ausgebildet, wobei der Gehäusedeckel auf der zur Statoreinheit zugewandten Seite einen Rand aufweist. Der Rand ist vorzugsweise umlaufend um den Gehäusedeckel ausgebildet. Der Rand erstreckt sich in Richtung der Statoreinheit. Die erste Wärmeleitstruktur ist zwischen dem zweiten Gehäuseabschnitt und dem Rand angeordnet, wobei die zweite Wärmeleitstruktur sich über den gesamten ersten Gehäuseabschnitt zwischen dem Rand und dem zweiten Gehäuseabschnitt erstreckt. Dadurch kann besonders viel Wärme über die erste Wärmeleitstruktur von der Statoreinheit an den Gehäusedeckel übertragen werden.

In einer weiteren Ausführungsform weist der Gehäusedeckel einen plattenförmig ausgebildeten Deckelabschnitt, auf einer zum Gehäuseboden zugewandten Seite einen weiteren Rand, eine zweite Wärmeleitstruktur und einen Mittelbereich auf. Der weitere Rand ist an dem Deckelabschnitt angeordnet und erstreckt sich in Richtung des Gehäusebodens, wobei die zweite Wärmeleitstruktur sich nach innen an den weiteren Rand anschließt und wenigstens ein zweites Wärmeleitelement aufweist. Das zweite Wärmeleitelement ist auf der zum Gehäuseboden abgewandten Seite mit dem Deckelabschnitt verbunden und auf der dem Gehäuseboden zugewandten Seite thermisch mit dem Gehäuseboden verbunden. Innenseitig der zweiten Wärmeleitstruktur ist der Mittelbereich angeordnet. Der Mittelbereich ist durch die zweite Wärmeleitstruktur umschlossen, wobei der Mittelbereich plan ausgebildet ist und beabstandet zum Gehäuseboden angeordnet ist. Mittels der zweiten Wärmeleitstruktur kann zuverlässig die vom Gehäusedeckel aufgenommene Wärme von dem Gehäusedeckel an den Gehäuseboden übertragen werden, sodass der Gehäusedeckel einen besonders niedrigen thermischen Widerstand aufweist. Durch den geringen thermischen Widerstand kann eine besonders gute Kühlung sichergestellt werden. Ferner stellt der Deckelabschnitt des Gehäusedeckels durch seine plattenförmige Ausgestaltung eine zuverlässige Wärmeverteilung in Querrichtung in dem Gehäusedeckel sicher, sodass auch die erste Wärmeleitstruktur versetzt zu der zweiten Wärmeleitstruktur angeordnet sein kann. Dadurch wird ein zusätzlicher konstruktiver Freiheitsgrad zur Auslegung des Statormoduls bereitgestellt, durch den flexibel die Geometrie der Steuereinheit festgelegt werden kann.

In einer weiteren Ausführungsform weist das Statormodul ein Sensormodul auf. Der Gehäusedeckel und der Gehäuseboden begrenzen einen zweiten Innenraum. In dem zweiten Innenraum ist das Sensormodul angeordnet. Das Sensormodul ist elektrisch mit der Steuereinheit verbunden. Das Sensormodul weist wenigstens eine Positionserfassungseinheit zur Erfassung eines Magnetfelds des Läufers, eine Leiterplatte und wenigstens eine Verarbeitungseinheit auf. Die Positionserfassungseinheit ist mit der Leiterplatte verbunden, wobei die Leiterplatte die Verarbeitungseinheit mit der Positionserfassungseinheit verbindet. Die Verarbeitungseinheit ist auf einer dem Gehäusedeckel zugewandten Seite der Leiterplatte angeordnet. In dem Deckelabschnitt ist auf einer dem Gehäuseboden zugewandten Seite eine Verarbeitungseinheitsaufnahme angeordnet. Die Verarbeitungseinheitsaufnahme ist korrespondierend zur Verarbeitungseinheit ausgebildet, wobei die Verarbeitungseinheit zumindest abschnittsweise in die Verarbeitungseinheitsaufnahme eingreift. Vorzugsweise ist die Verarbeitungseinheit thermisch mit dem Deckelabschnitt verbunden, wobei der Deckelabschnitt ausgebildet ist, zur Kühlung der Verarbeitungseinheit Wärme aus der Verarbeitungseinheit abzuführen und an den Gehäuseboden zu leiten. Durch die Anordnung des Sensormoduls zwischen dem Gehäuseboden und dem Gehäusedeckel wird das Sensormodul keinen hohen Wirbelströmen durch das Magnetfeld der Statoreinheit ausgesetzt. Des Weiteren wird eine gute Erfassung des Magnetfelds des Läufers begünstigt. Ferner kann die thermische Belastung des Sensormoduls gering gehalten werden. Um eine besonders leistungsfähige Verarbeitungseinheit, die jedoch häufig eine hohe Verlustwärme aufweist, für schnelle Erfassungszeiten des Magnetfelds des Läufers am Sensormodul einzusetzten, kann die Verarbeitungseinheit thermisch mit dem Gehäusedeckel gekoppelt sein, sodass die Verlustwärme aus der Verarbeitungseinheit abgeführt werden kann. Sollte jedoch die Verarbeitungseinheit nur eine geringe Verlustwärme abgeben, so kann die Verarbeitungseinheit auch beabstandet zu dem Gehäusedeckel in der Aussparung angeordnet sein.

In einer weiteren Ausführungsform weist die Leiterplatte wenigstens einen Gehäusedurchlass auf, wobei der Gehäusedurchlass zumindest abschnittsweise korrespondierend zu dem zweiten Wärmeleitelement ausgebildet ist. Das zweite Wärmeleitelement durchgreift den Gehäusedurchlass und liegt stirnseitig an dem Gehäuseboden an. Dadurch kann die vom Gehäusedeckel an den Gehäuseboden zu übertragende Wärme an dem Sensormodul vorbeigeführt werden, ohne dass das Sensormodul selbst im Wärmepfad liegt. Dadurch kann ein besonders hoher Wärmestrom von der Statoreinheit hin zu der Modulunterseite sichergestellt werden.

In einer weiteren Ausführungsform weist die zweite Wärmeleitstruktur mehrere zweite Wärmeleitelemente auf, wobei die zweiten Wärmeleitelemente in einem vordefinierten Abstand, vorzugsweise in einem regelmäßigen Abstand zueinander angeordnet sind. Zwischen den zweiten Wärmeleitelementen ist ein Zwischenraum angeordnet, wobei in dem Zwischenraum zumindest abschnittsweise die Leiterplatte des Sensormoduls angeordnet ist. Dadurch kann ein besonders kompakter Aufbau und gleichzeitig eine zuverlässige Erfassung des Magnetfelds des Läufers realisiert werden.

In einer weiteren Ausführungsform weist das Statormodul eine Modulabdeckung und eine weitere Steuereinheit auf. Der Gehäuseboden und die Modulabdeckung begrenzen einen dritten Innenraum, wobei in dem dritten Innenraum die weitere Steuereinheit angeordnet ist, wobei die Modulabdeckung auf einer zum Gehäusedeckel abgewandten Seite und versetzt zu dem ersten Befestigungsabschnitt angeordnet ist, wobei die Modulabdeckung thermisch mit der weiteren Steuereinheit verbunden ist, wobei auf einer zum Gehäuseboden abgewandten Seite die Modulabdeckung eine Kühlrippenstruktur aufweist.

In einer weiteren Ausführungsform ist der dritte Innenraum mit einer weiteren Vergussmasse derart verfüllt, dass die weitere Steuereinheit in der Vergussmasse eingebettet ist, wobei die weitere Vergussmasse thermisch leitend ausgebildet ist und die weitere Steuereinheit thermisch mit der Modulabdeckung verbindet, wobei die Modulabdeckung thermisch leitend und ausgebildet ist, eine weitere Wärme der weiteren Vergussmasse an die Kühlrippenstruktur zu übertragen, und die Kühlrippenstruktur ausgebildet ist, die weitere Wärme an eine Umgebung zu übertragen. Ferner wird über die Modulabdeckung zusätzlich eine Kühlung der weiteren Steuereinheit ermöglicht.

In einer weiteren Ausführungsform weist der Gehäuseboden an der Modulunterseite einen zweiten Befestigungsabschnitt auf, wobei die Modulabdeckung zwischen dem ersten Befestigungsabschnitt und dem zweiten Befestigungsabschnitt angeordnet ist. Der zweite Befestigungsabschnitt ist thermisch mit der Wärmesenke koppelbar und ausgebildet, Wärme an die Wärmesenke zu leiten. Der erste Befestigungsabschnitt und der zweite Befestigungsabschnitt sind in einer gemeinsamen Ebene angeordnet und parallel zu der Moduloberseite ausgerichtet.

Das Planarantriebssystem weist ein Statormodul, eine Kühleinheit und eine Trägereinrichtung auf, wobei das Statormodul wie oben beschrieben ausgebildet ist. Die Trägereinrichtung umfasst wenigstens ein erstes Trägerelement, wobei das erste Trägerelement mechanisch mit dem Statormodul verbunden ist und das Statormodul trägt, wobei das erste Trägerelement auf einer dem Statormodul zugewandten Seite einen dritten Befestigungsabschnitt aufweist, wobei der erste Befestigungsabschnitt und der dritte Befestigungsabschnitt thermisch miteinander gekoppelt sind und ausgebildet sind, zumindest einen Anteil der Wärme von dem ersten Befestigungsabschnitt an den dritten Befestigungsabschnitt abzuleiten, wobei das erste Trägerelement ausgebildet ist, den Anteil der Wärme abzuleiten. Diese Ausgestaltung hat den Vorteil, dass besonders viel Wärme aus dem Statormodul rückseitig über den dritten Befestigungsabschnitt und das erste Trägerelement abgeführt werden kann, sodass eine Überhitzung sowohl der weiteren Steuereinheit als auch des Statormoduls zuverlässig vermieden werden kann.

In einer weiteren Ausführungsform weist die Kühleinrichtung wenigstens ein Wärmeträgermedium auf, wobei das erste Trägerelement wenigstens einen ersten Leitungsraum fluidisch abgedichtet gegenüber einer Umgebung des ersten Trägerelements begrenzt, wobei das Wärmeträgermedium in dem Leitungsraum angeordnet ist und thermisch mit dem dritten Befestigungsabschnitt gekoppelt ist, wobei das Wärmeträgermedium ausgebildet ist, die den Anteil der Wärme aus dem ersten Trägerelement abzuführen und zu der Wärmesenke zu leiten.

In einer weiteren Ausführungsform weist die Trägereinrichtung ein zweites Trägerelement auf, wobei das zweite Trägerelement einen zweiten Leitungsraum fluidisch abgedichtet gegenüber der Umgebung des zweiten Trägerelements begrenzt. Das zweite Trägerelement ist versetzt zu dem ersten Trägerelement angeordnet, wobei das zweite Trägerelement einen vierten Befestigungsabschnitt auf einer dem Statormodul zugewandten Seite aufweist. Der zweite Befestigungsabschnitt und der vierte Befestigungsabschnitt sind thermisch miteinander verbunden und ausgebildet, Wärme aus dem zweiten Befestigungsabschnitt an den vierten Befestigungsabschnitt zu leiten, wobei der vierte Befestigungsabschnitt thermisch mit dem zweiten Leitungsraum verbunden ist. Das Wärmeträgermedium den zweiten Leitungsraum durchströmt, wobei das Wärmeträgermedium ausgebildet ist, die Wärme vom vierten Befestigungsabschnitt abzuführen. Dadurch kann eine zuverlässige aktive Kühlung bereitgestellt werden, die unterseitig des Statormoduls nur einen geringen Bauraum bedarf aufweist.

In einer weiteren Ausführungsform weist die Trägereinrichtung eine Fluidleitung auf. Die Fluidleitung verbindet fluidisch den ersten Leitungsraum mit dem zweiten Leitungsraum. In dem zweiten Leitungsraum und der Fluidleitung ist das Wärmeträgermedium angeordnet. Das Wärmeträgermedium durchströmt den ersten Leitungsraum, die Fluidleitung und den zweiten Leitungsraum. Dabei ist das Wärmeträgermedium ausgebildet, die Wärme vom vierten Befestigungsabschnitt abzuführen. Dadurch wird eine aktive Kühlung der Trägerelemente ermöglicht, wodurch besonders viel Wärme über die Trägerelemente aus dem Statormodul abgeführt werden kann, sodass auch bei einer thermischen hohen Beanspruchung der Statormodule, insbesondere wenn zahlreiche Läufer in kurzen Zeitabschnitten über das Statormodul bewegt werden, insbesondere wenn beispielsweise Läufer über dem Statormodul abgebremst werden, besonders viel Wärme aus dem Statormodul an die Wärmesenke geleitet werden kann.

In einer weiteren Ausführungsform weist die Kühleinheit eine Förderpumpe und einen Wärmetauscher auf, wobei der Wärmetauscher eine Primärseite und eine Sekundärseite aufweist, wobei die Förderpumpe fluidisch mit dem Leitungsraum verbunden und mit der Primärseite des Wärmetauschers verbunden ist. Die Förderpumpe ist ausgebildet, das Wärmeträgermedium in einem Kreislauf zwischen der Primärseite und dem Leitungsraum zu fördern, wobei die Sekundärseite mit der Wärmesenke thermisch verbunden ist. Der Wärmetauscher ist ausgebildet, die Wärme von der Primärseite an die Sekundärseite zu leiten und an der Sekundärseite an die Wärmesenke zu übertragen. Dadurch kann das Wärmeträgermedium ein flüssiges Kühlmittel sein, das besonders viel Wärme aufnehmen kann. Durch die Einbringung des Wärmetauschers kann eine besonders hohe Temperaturdifferenz zwischen den Trägerelementen und den Befestigungsabschnitten der Trägerelemente und dem Wärmeträgermedium ermöglicht werden, sodass besonders viel Wärme aus den Trägerelementen und somit auch aus dem Statormodul an das Wärmeträgermedium übertragen werden kann.

In einer weiteren Ausführungsform weist das erste Trägerelement zumindest abschnittsweise ein Hohlprofil auf, oder weist das erste Trägerelement ein plattenförmig ausgebildetes Vollprofil auf. Die Ausgestaltung als Hohlprofil hat den Vorteil, dass das Trägerelement mechanisch steif und sehr leicht ist. Das Vollprofil hat den Vorteil, dass besonders viel Wärme mittels des ersten Trägerelements abgeführt werden kann.

Nachfolgend wird die Erfindung anhand von Figuren näher erläutert. Dabei zeigen:
- Figur 1: eine perspektivische Darstellung eines Planarantriebssystems von oben;
- Figur 2: eine Schnittansicht entlang einer in Figur 1 gezeigten Schnittebene A-A durch das in Figur 1 gezeigte Planarantriebssystem;
- Figur 3: eine perspektivische Explosionsansicht des Statormoduls mit Blickrichtung von oben auf das Statormodul;
- Figur 4: eine perspektivische Explosionsansicht des Statormoduls mit Blickrichtung von unten auf das Statormodul;
- Figur 5: eine perspektivische Darstellung mit einer Teilschnittansicht durch das Statormodul des in den Figuren 1 bis 4 gezeigten Planarantriebssystems mit Blickrichtung von unten auf das Planarantriebssystem;
- Figur 6: eine perspektivische Darstellung eines Gehäusebodens des in den Figuren 1 bis 5 gezeigten Statormoduls mit Blickrichtung von unten auf den Gehäuseboden;
- Figur 7: eine perspektivische Darstellung des in Figur 6 gezeigten Gehäusebodens mit Blickrichtung von oben auf den Gehäuseboden;
- Figur 8: eine perspektivische Darstellung eines Gehäusedeckels des in den Figuren 1 bis 5 gezeigten Statormoduls mit Blickrichtung von oben auf den Gehäusedeckel;
- Figur 9: eine perspektivische Darstellung des in Figur 8 gezeigten Gehäusedeckels mit Blickrichtung von unten auf den Gehäusedeckel;
- Figur 10: eine perspektivische Darstellung eines in den Figuren 3 und 4 gezeigten Sensormoduls mit Blickrichtung von oben auf das Sensormodul;
- Figur 11: eine perspektivische Darstellung eines in den Figuren 3 und 4 gezeigten Leistungsmoduls mit Blickrichtung von unten auf das Leistungsmodul;
- Figur 12: eine perspektivische Darstellung der in den Figuren 3 und 4 gezeigten Statoreinheit mit Blickrichtung von unten auf die Statoreinheit;
- Figur 13: eine perspektivische Darstellung des in Figur 11 gezeigten Leistungsmoduls und der in Figur 12 gezeigten Statoreinheit mit Blickrichtung von unten auf das Leistungsmodul und die Statoreinheit;
- Figur 14: einen vergrößerten Ausschnitt entlang einer in Figur 1 gezeigten Schnittebene B-B durch das in Figur 1 gezeigte Planarantriebssystem;
- Figur 15: eine Schnittansicht entlang einer in Figur 1 gezeigten Schnittebene C-C durch das Statormodul;
- Figur 16: eine perspektivische Schnittansicht entlang der in Figur 1 gezeigten Schnittebene A-A durch eine Weiterbildung des in Figur 1 gezeigten Planarantriebssystem;
- Figur 17: eine perspektivische Darstellung eines Planarantriebssystems mit Blickrichtung von oben auf das Planarantriebssystem.

In den nachfolgenden Figuren wird auf ein Koordinatensystem Bezug genommen. Das Koordinatensystem weist eine x-Achse (Längsrichtung), eine y-Achse (Querrichtung) und eine z-Achse (Höhenrichtung) auf. Das Koordinatensystem ist beispielhaft als Rechtssystem ausgebildet und dient zum erleichternden Verständnis des in den Figuren gezeigten Planarantriebssystems 1.

Die Erfindung betrifft im Wesentlichen Weiterentwicklungen der in den Veröffentlichungen WO 2013/059934 A1, WO 2015/017933 A1, WO 2015/179962 A1, WO 2015/184553 A1, WO 2015/188281 A1 und WO 2017/004616 A1 offenbarten Planarantriebssysteme.

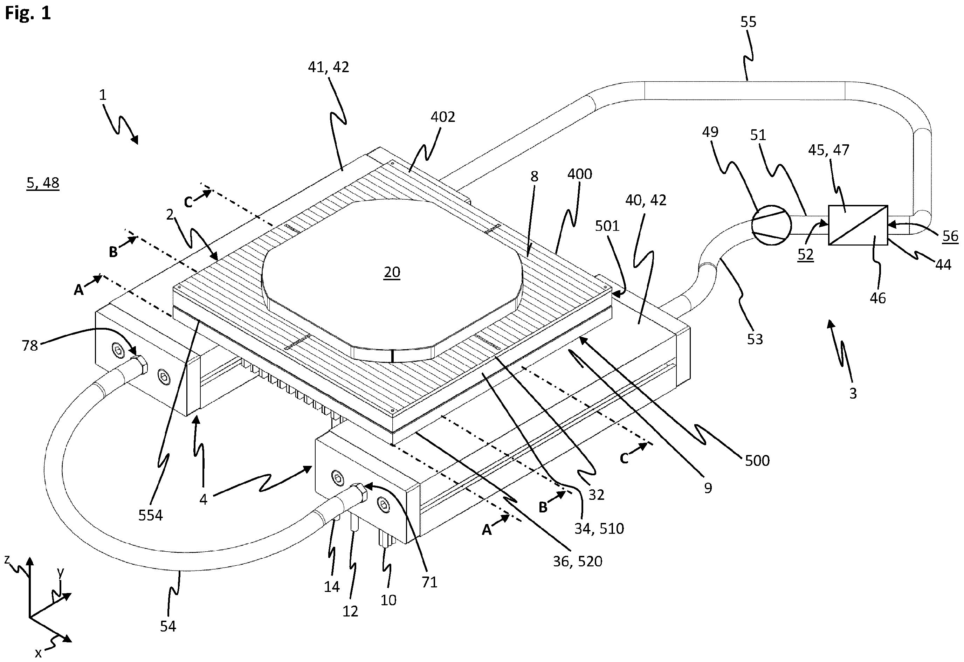

Figur 1 zeigt eine perspektivische Darstellung eines Planarantriebssystems 1 gemäß einer ersten Ausführungsform mit Blickrichtung von oben auf das Planarantriebssystem 1. Das Planarantriebssystem 1 weist ein Statormodul 2, eine Kühleinrichtung 3, eine Trägereinrichtung 4 und einen Läufer 20 auf.

Das Statormodul 2 umfasst eine Statoreinheit 400 und eine Kühleinheit 500. Die Statoreinheit 400 weist oberseitig auf einer dem Betrachter zugewandten Seite eine sich in einer xy-Ebene erstreckende Moduloberseite 8 auf. Die Ausgestaltung der Moduloberseite 8 ist frei wählbar. So ist beispielhaft die Moduloberseite 8 rechteckförmig, insbesondere wie in Figur 1 dargestellt, quadratisch ausgebildet. Die Moduloberseite 8 ist im Wesentlichen plan ausgebildet und erstreckt sich über eine gesamte Oberseite der Statoreinheit 400. Das Statormodul 2 ist in der Ausführungsform flach ausgebildet, sodass eine Erstreckung in z-Richtung deutlich kleiner ist als eine Erstreckung des Statormoduls 2 in x- und/oder y-Richtung.

In Figur 1 ist oberseitig der Moduloberseite 8 der Läufer 20 angeordnet. Die geometrische Ausgestaltung des Läufers 20 ist in Figur 1 nur beispielhaft als Platte dargestellt und frei wählbar.

Gegenüberliegend zur Moduloberseite 8 in z-Richtung versetzt weist das Statormodul 2 auf einer dem Betrachter abgewandten Seite eine Modulunterseite 9 auf. Beispielhaft sind die Moduloberseite 8 und die Modulunterseite 9 parallel zueinander verlaufend angeordnet.

Die Statoreinheit 400 weist mindestens einen mit einem Antriebsstrom beaufschlagbaren Spulenleiter 402 auf. Die Statoreinheit 400 kann beispielhaft, wie in Figur 1 angedeutet, eine Mehrzahl von Spulenleitern 402 aufweisen. Mittels des Antriebsstroms in dem Spulenleiter 402 kann ein Magnetfeld erzeugt werden, das in Wechselwirkung mit wenigstens einem in Figur 1 nicht dargestellten Antriebsmagnet des Läufers 20 tritt und den Läufer 20 antreibt. Der Läufer 20 ist im Betrieb beweglich über der Moduloberseite 8 angeordnet und kann sowohl in x-Richtung als auch in y-Richtung angetrieben werden. Auch kann der Läufer 20 in Höhenrichtung von der Moduloberseite 8 weg (begrenzt) angehoben werden oder bei nachlassendem Antriebsstrom auf die Moduloberseite 8 abgesetzt werden. In der Bewegung ist der Läufer 20 frei. Insbesondere kann hierbei der Läufer 20 in x-Richtung und/oder y-Richtung und/oder z-Richtung zeitgleich bewegt werden. Auch kann der Läufer 20 um die y-Achse oder x-Achse verkippt werden. Eine Rotation um die z-Achse ist ebenso denkbar. Die einzelnen Bewegungsrichtungen des Läufers 20 können aber auch miteinander kombiniert werden und müssen nicht seriell nacheinander durchgeführt werden. Dies kann jeweils durch entsprechende Ansteuerung der Spulenleiter 402 beziehungsweise mit dem Antriebsstrom erzielt werden.

Seitlich weist die Statoreinheit 400 eine erste Seitenfläche 32 auf, vorzugsweise vier erste Seitenflächen 32, die rechtwinklig zueinander angeordnet sind. Unterhalb der Statoreinheit 400 ist die Kühleinheit 500 angeordnet.

Die Kühleinheit 500 umfasst ein Modulgehäuse 501 mit einem Gehäusedeckel 510 und einem Gehäuseboden 520. Der Gehäusedeckel 510 weist wenigstens eine zweite Seitenfläche 34 auf. Die erste Seitenfläche 32 und die zweite Seitenfläche 34 können fluchtend angeordnet sein. Eine versetzte Anordnung, beispielsweise in y-Richtung oder in x-Richtung der beiden Seitenflächen 32, 34 zueinander, ist ebenso denkbar.

In Figur 1 ist unterseitig des Gehäusedeckels 510 der Gehäuseboden 520 angeordnet. Der Gehäuseboden 520 weist seitlich eine dritte Seitenfläche 36 auf. Die dritte Seitenfläche 36 ist in Figur 1 fluchtend zur ersten und zweiten Seitenfläche 32, 34 angeordnet. Auch könnte die dritte Seitenfläche 36 versetzt zu der ersten und/oder zweiten Seitenfläche 32, 34 angeordnet sein. Durch die fluchtende Anordnung der Seitenflächen 32, 34, 36 weist das Statormodul 2 in Längs- und Querrichtung eine besonders kompakte Ausgestaltung auf.

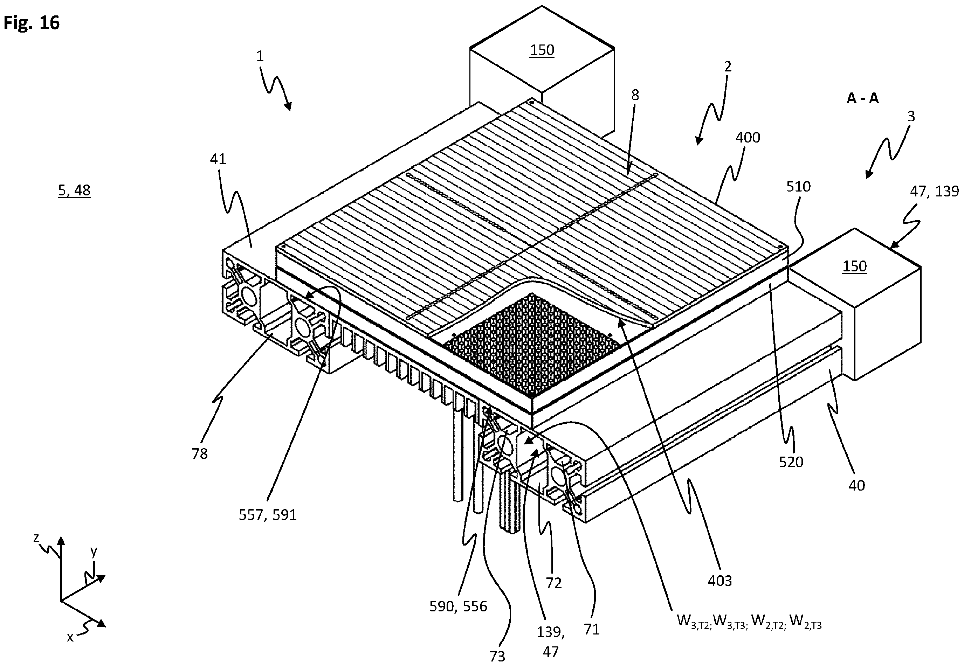

Wie in Figur 1 dargestellt, sind ebenso der Gehäusedeckel 510 und der Gehäuseboden 520 flach ausgebildet, sodass jeweils eine Erstreckung in Längsrichtung und/oder in Querrichtung deutlich größer ist als eine Erstreckung in Höhenrichtung. Dabei ist der Gehäusedeckel 510 zwischen einer in Fig. 16 dargestellten Statorunterseite 403 und dem Gehäuseboden 520 angeordnet. Der Gehäuseboden 520 weist unterseitig die Modulunterseite 9 auf.

In Figur 1 wird von unten her eine Energieversorgungsleitung 10 zur Versorgung des Statormoduls 2 mit elektrischer Energie an das Statormodul 2 geführt. Die elektrische Energie wird dazu benötigt, den Antriebsstrom zur Erzeugung des Magnetfelds mit dem Spulenleiter 402 zu erzeugen. Ferner wird die elektrische Energie benötigt, um weitere Komponenten des Statormoduls 2, auf die in den weiteren Figuren eingegangen wird, mit Betriebsenergie und/oder Versorgungsenergie zu versorgen. Des Weiteren ist beispielhaft wenigstens eine Datenleitung 12 und vorzugsweise eine weitere Datenleitung 14 vorgesehen. Die Datenleitungen 12, 14 können dabei Teil eines Datennetzwerks sein. Die Datenleitung 12 und die weitere Datenleitung 14 sind versetzt zueinander angeordnet und ebenso versetzt zur Energieversorgungsleitung 10 angeordnet und werden unterseitig, vorzugsweise parallel zueinander, an das Statormodul 2 geführt.

Die Trägereinrichtung 4 weist beispielhaft ein erstes Trägerelement 40 und ein zweites Trägerelement 41 als Teil eines Maschinenbetts 42 auf. Das erste Trägerelement 40 und das zweite Trägerelement 41 sind stangenförmig ausgebildet und verlaufen parallel zueinander. Die Trägerelemente 40, 41 sind in Figur 1 beispielhaft in ihrer Haupterstreckungsrichtung in y-Richtung ausgerichtet. Zusätzlich zu der in Figur 1 gezeigten Ausgestaltung der Trägereinrichtung 4 kann die Trägereinrichtung 4 mehrere weitere Trägerelemente (nicht dargestellt) aufweisen, die beispielsweise kreuzförmig zu dem ersten und/oder zweiten Trägerelement 40, 41 angeordnet sind und mit dem ersten und/oder zweiten Trägerelement 40, 41 verbunden sind.

Das Maschinenbett 42 ist vorzugsweise ortsfest ausgebildet und kann ferner beispielsweise eine nicht dargestellte Bodenplatte oder einen Sockel einer Fertigungshalle umfassen. Das Maschinenbett 42 kann zusätzlich auch in der Figur nicht dargestellte Dämpferlager aufweisen, um schwingungsarm das Trägerelement 40, 41 zu lagern.

Die Kühleinrichtung 3 weist eine Wärmesenke 5 und einen Kühlkreislauf 43 auf. Der Kühlkreislauf 43 umfasst einen Wärmetauscher 44, ein Wärmeträgermedium 47, eine Förderpumpe 49 und wenigstens eine Fluidleitung 51, 53, 54, 55. Der Kühlkreislauf 43 ist im Wesentlichen in Figur 1 nur symbolisch dargestellt. Der Wärmetauscher 44 weist eine Primärseite 45 und eine Sekundärseite 46 auf. Die Sekundärseite 46 ist mit der Wärmesenke 5 verbunden. Die Wärmesenke 5 kann beispielsweise die Umgebung 48 des Wärmetauschers 44 sein. Beispielsweise könnte der Wärmetauscher 44 als Plattenwärmetauscher ausgebildet sein.

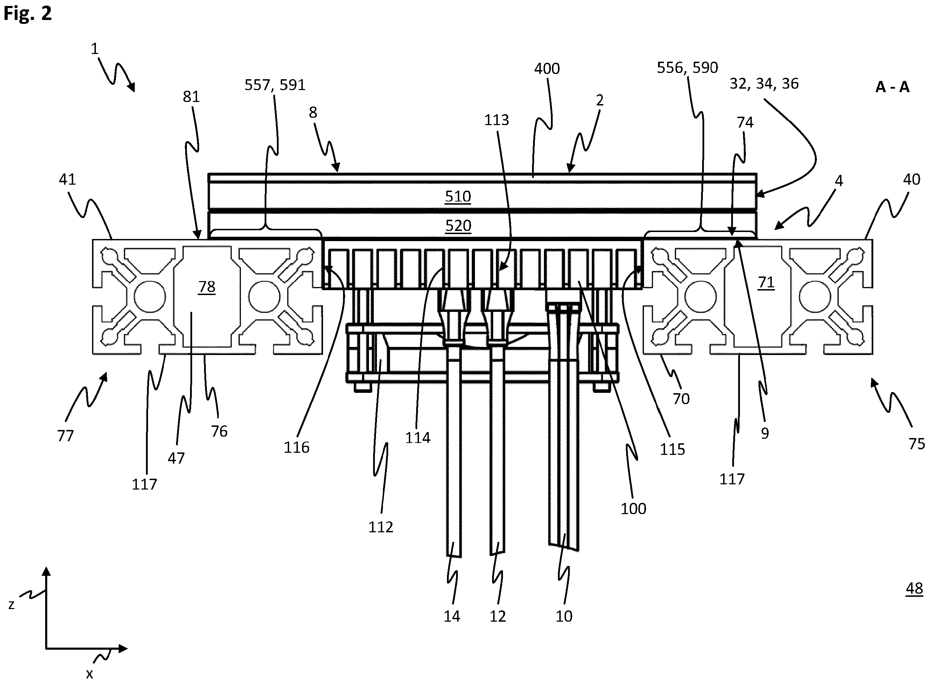

In der Ausführungsform ist beispielhaft die Förderpumpe 49 eingangsseitig mittels einer ersten Fluidleitung 51 mit einer Ausgangsseite 52 der Primärseite 45 des Wärmetauschers 44 fluidisch verbunden. Das erste Trägerelement 40 begrenzt wenigstens einen in Fig. 2 dargestellten ersten Leitungsraum 71und das zweite Trägerelement 41 begrenzt einen zweiten Leitungsraum 78 (die Leitungsräume 71, 78 sind detailliert in Figur 2 gezeigt). Ausgangsseitig ist die Förderpumpe 49 mittels einer zweiten Fluidleitung 53 mit dem ersten Leitungsraum des ersten Trägerelements 40 fluidisch verbunden. Der erste Leitungsraum 71 des ersten Trägerelements 40 ist auf einer zur zweiten Fluidleitung 53 gegenüberliegenden Seite mittels einer dritten Fluidleitung 54 fluidisch mit dem zweiten Leitungsraum 78 des zweiten Trägerelements 41 verbunden. Auf einer zur dritten Fluidleitung 54 gegenüberliegenden Seite ist der zweite Leitungsraum 78 des zweiten Trägerelements 41 mittels einer vierten Fluidleitung 55 mit einer Eingangsseite 56 der Primärseite 45 fluidisch verbunden.

Das Wärmeträgermedium 47 ist in der Ausführungsform beispielhaft als Fluid, vorzugsweise als Flüssigkeit, ausgebildet und umfasst wenigstens eines der folgenden Kühlmittel: Wasser, Additiv, Korrosionsschutzmittel, Frostschutzmittel, Öl, 1,1,1,2-Tetrafluorethan.

Im Betrieb des Kühlkreislaufs 43 fördert die Förderpumpe 49 das Wärmeträgermedium 47 in einem Kreislauf zwischen der Primärseite 45 und den Trägerelementen 40, 41. In einer Weiterbildung des in Figur 1 gezeigten Kühlkreislaufs 43 kann dieser auch als Wärmepumpenkreislauf ausgebildet sein.

Figur 2 zeigt eine Schnittansicht entlang einer in Figur 1 gezeigten Schnittebene A-A durch das in Figur 1 gezeigte Planarantriebssystem 1, wobei aus Gründen der Übersichtlichkeit auf eine Schraffur der Schnittflächen verzichtet wird.

Das erste und zweite Trägerelement 40, 41 weist ein Trägerprofil 70 auf. Das Trägerprofil 70 ist ein Hohlprofil. Das Trägerprofil 70 kann beispielsweise als Frontprofil 50x100 Typ MA1-4 der Fa. KANYA (s. S.70 PVS/RVS®-Gesamtkatalog 2017 (Stand 10/2016) oder online unter: http://www.kanya.com/de/produkte/list/details/product/frontprofil-50x100/ (Zugriff: 24.11.2017)ausgebildet sein. Das Trägerprofil 70 weist unterseitig und zusätzlich wenigstens auf der dem gegenüberliegenden Trägerelement 40, 41 jeweils zugewandten Seite einen Befestigungsbereich 75, 77 auf.

Das Trägerprofil 70 ist derart gebildet, dass das Trägerprofil 70 wenigstens einen ersten Leitungsraum 71 umfangsseitig derart begrenzt, dass der erste Leitungsraum 71 fluidisch gegenüber der Umgebung 48 abgegrenzt ist. Der erste Leitungsraum 71 ist in der Ausführungsform im Wesentlichen rechteckförmig ausgebildet und mittig angeordnet, wobei seitlich versetzt zu dem ersten Leitungsraum 71 jeweils der erste Befestigungsbereich 75 des Trägerprofils 70 angeordnet sein kann.

An einem Ende des ersten Trägerelements 40 ist der erste Leitungsraum 71 fluidisch mit der zweiten Fluidleitung 53 und an einem anderen Ende des ersten Trägerelements 40 fluidisch mit der dritten Fluidleitung 54 verbunden. Der erste Leitungsraum 71 ist mit dem Wärmeträgermedium 47, vorzugsweise vollständig, gefüllt.

Auf einer zum Statormodul 2 zugewandten Seite (die oberseitig in Figur 2 angeordnet ist) weist das erste Trägerelement 40 eine erste Befestigungsfläche 74 auf. Die erste Befestigungsfläche 74 ist plan ausgebildet und erstreckt sich in einer xy-Ebene. An der ersten Befestigungsfläche 74 weist das erste Trägerelement 40 einen ersten Befestigungsabschnitt 556 auf. Der erste Befestigungsabschnitt 556 erstreckt sich etwa von einer dem zweiten Trägerelement 41 zugewandten Seite des ersten Trägerelements 40 bis hin zu einer Mitte des ersten Trägerelements 40. Dadurch ragt in Figur 2 das erste Trägerelement 40 seitlich über die Seitenfläche des Statormoduls 2 in x-Richtung.

Das Trägerprofil 70 des zweiten Trägerelements 41 ist identisch zum Trägerprofil 70 des ersten Trägerelements 40 ausgebildet und begrenzt einen zweiten Leitungsraum 78. An einem Ende des zweiten Trägerelements 41 ist der zweite Leitungsraum 78 mit der vierten Fluidleitung 55 und an einem anderen Ende des zweiten Trägerelements 41 mit der dritten Fluidleitung 54 verbunden. Der zweite Leitungsraum 78 ist mit dem Wärmeträgermedium 47 gefüllt.

Oberseitig weist das zweite Trägerelement 41 eine zweite Befestigungsfläche 81 auf. Die zweite Befestigungsfläche 81 ist plan ausgebildet. Die erste Befestigungsfläche 74 und die zweite Befestigungsfläche 81 sind in der gleichen xy-Ebene angeordnet und sind parallel zu der Moduloberseite 8 ausgerichtet. An der zweiten Befestigungsfläche 81 weist das zweite Trägerelement 41 einen zweiten Befestigungsabschnitt 557 auf. Der zweite Befestigungsabschnitt 557 erstreckt sich etwa von einer dem ersten Trägerelement 40 zugewandten Seite des zweiten Trägerelements 41 bis hin zu einer Mitte des zweiten Trägerelements 41. Dadurch ragt in Figur 2 das zweite Trägerelement 41 seitlich über die Seitenfläche 32, 34, 36 des Statormoduls 2 in x-Richtung.

Das Statormodul 2 weist an der Modulunterseite 9 einen dritten Befestigungsabschnitt 590 und einen in x-Richtung versetzt zu dem dritten Befestigungsabschnitt 590 angeordneten vierten Befestigungsabschnitt 591 auf. Der dritte Befestigungsabschnitt 590 und der vierte Befestigungsabschnitt 591 grenzen jeweils seitlich an zwei gegenüberliegende dritte Seitenflächen 36 des Gehäusebodens 520 an. Mit dem dritten Befestigungsabschnitt 590 liegt das Statormodul 2 flächig auf dem ersten Befestigungsabschnitt 556 auf, sodass der dritte Befestigungsabschnitt 590 thermisch mit dem ersten Trägerelement 40 gekoppelt ist. Mit dem vierten Befestigungsabschnitt 591 liegt das Statormodul 2 flächig auf dem zweiten Befestigungsabschnitt 557 auf, sodass der vierte Befestigungsabschnitt 591 thermisch mit dem zweiten Trägerelement 41 gekoppelt ist.

Zusätzlich kann ein erstes Befestigungsmittel (in Figur 2 nicht dargestellt) vorgesehen sein, um das Statormodul 2 an den Trägerelementen 40, 41 zu fixieren. Das erste Befestigungsmittel kann klammerförmig ausgebildet sein und an einem Ende mit dem Statormodul 2 und an dem anderen Ende mit dem Befestigungsbereich 75, 77 des Trägerelements 40, 41 verbunden sein.

Das Statormodul 2 kann eine Modulabdeckung 110 aufweisen, die in z-Richtung nach unten über die Modulunterseite 9 herausragt. In x-Richtung ist die Modulabdeckung 110 zwischen dem ersten Trägerelement 40 und dem zweiten Trägerelement 41 angeordnet. Ferner begrenzt die Modulabdeckung 110 in x-Richtung den dritten und vierten Befestigungsabschnitt 590, 591.

Von unten sind die Energieversorgungsleitung 10 und die Datenleitung 12, 14 durch die Modulabdeckung 110 geführt. Die Modulabdeckung 110 weist eine Kühlrippenstruktur 113 mit mehreren versetzt zueinander angeordneten Kühlrippen 114 auf. Optional ist unterseitig ist an der Modulabdeckung 110 zusätzlich ein erster Lüfter 112 des Statormoduls 2 angeordnet. Der erste Lüfter 112 ist ausgebildet, aus der Umgebung 48 Luft 139 über die Modulabdeckung 110 und die Kühlrippenstruktur 113 zur Kühlung der Modulabdeckung 110 zu führen. Dabei kann der erste Lüfter 112 beabstandet zu der Modulabdeckung 110 an der Modulabdeckung 110 sein.

Das erste Trägerelement 40 weist eine erste Trägerelementseitenfläche 115 auf, die auf einer der Modulabdeckung 110 zugewandten Seite des ersten Trägerelements 40 angeordnet ist. Auf einer in x-Richtung gegenüberliegenden Seite weist das zweite Trägerelement 41 eine zweite Trägerelementseitenfläche 116 auf. Die zweite Trägerelementseitenfläche 116 ist auf einer dem ersten Trägerelement 40 zugewandten Seite des zweiten Trägerelements 41 angeordnet. Die erste Trägerelementseitenfläche 115 und die zweite Trägerelementseitenfläche 116 sind parallel zueinander angeordnet. Dabei ist zwischen der ersten Trägerelementseitenfläche 115 und der zweiten Trägerelementseitenfläche 116 die Modulabdeckung 110 angeordnet. Vorzugweise liegt die Modulabdeckung 110 seitlich an den Trägerelementseitenflächen 115, 116 an.

In Höhenrichtung ist die Modulabdeckung 110 flach ausgebildet und dabei kürzer ausgebildet als die Trägerelemente 40, 41. Durch die flache Ausgestaltung der Modulabdeckung 110 kann teilweise auch der erste Lüfter 112, wie in Figur 2 gezeigt, zwischen dem ersten Trägerelement 40 und dem zweiten Trägerelement 41 in Höhenrichtung angeordnet sein. Der erste Lüfter 112 ragt über eine Unterseite 117 der Trägerelemente 40, 41 nur abschnittweise heraus. Bei einer besonders flachen Ausgestaltung des ersten Lüfters 112 kann auch der erste Lüfter 112 vollständig zwischen dem ersten Trägerelement 40 und dem zweiten Trägerelement 41 angeordnet sein, sodass das Planarantriebssystem 1 besonders kompakt ausgebildet ist.

Seitlich auf einer dem Betrachter zugewandten Seite sind die Energieversorgungsleitung 10 und die Datenleitung 12, 14 am ersten Lüfter 112 zu der Modulabdeckung 110 geführt. Diese Ausgestaltung hat den Vorteil, dass auch bei einer flachen Ausgestaltung des ersten Lüfters 112 ein Abknicken der Energieversorgungsleitung 10 und/oder der Datenleitung 12, 14 zuverlässig vermieden werden kann, da hierbei ein ausreichender Bauraum zwischen den beiden Trägerelementen 40, 41 für die Führung der Energieversorgungsleitung 10 und/oder der Datenleitung 12, 14 sichergestellt ist.

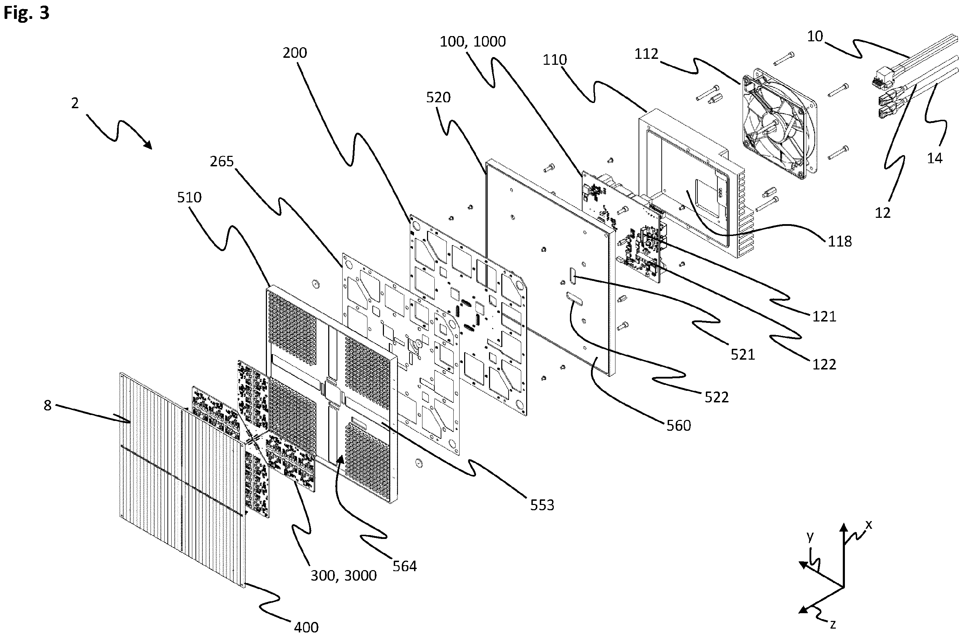

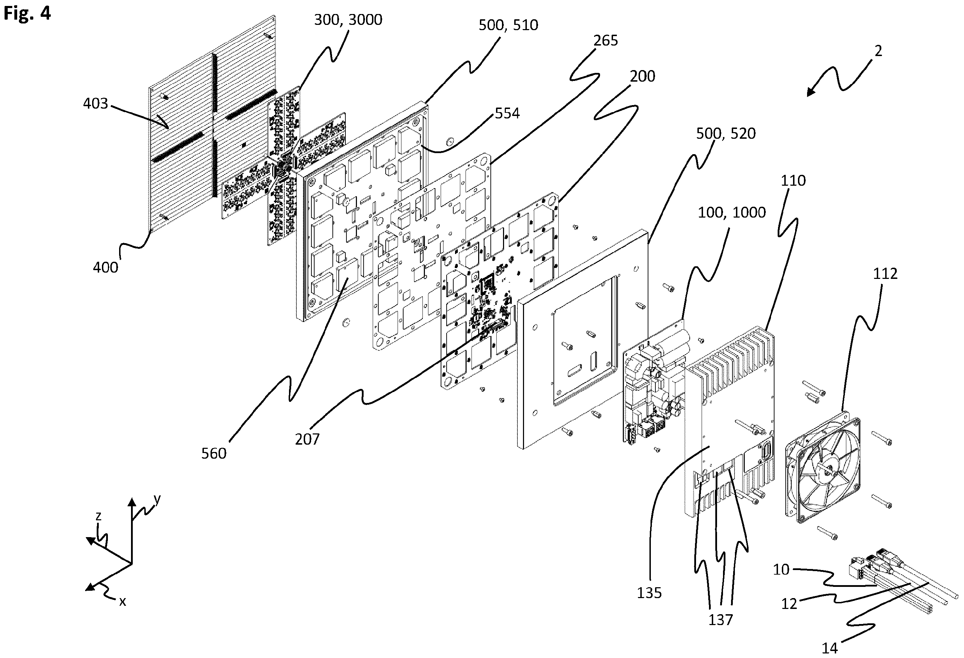

Figur 3 zeigt eine perspektivische Explosionsansicht des Statormoduls 2 mit Blickrichtung von oben auf das Statormodul 2 und Figur 4 zeigt eine perspektivische Explosionsdarstellung des Statormoduls 2 mit Blickrichtung von unten auf das Statormodul 2.

In Figur 3 sind jeweils die Oberseiten der von dem Statormodul 2 umfassten Komponenten zu sehen. In Figur 4 sind jeweils die Unterseiten der von dem Statormodul 2 umfassten Komponenten zu sehen. Um Wiederholungen zu vermeiden, bezieht sich die folgende Beschreibung auf die Figuren 3 und 4, ohne dass im Einzelnen nochmals auf die jeweilige Figur 3 oder Figur 4 genau einzeln verwiesen wird.

Das Statormodul 2 umfasst zusätzlich zu den in den vorherigen Figuren beschriebenen Komponenten eine im Allgemeinen auch als Steuereinheit 3000 bezeichnetes Leistungsmodul 300, eine Isolationsschicht 265, ein Sensormodul 200 und eine im Allgemeinen auch als weitere Steuereinheit 1000 bezeichnetes Anschlussmodul 100.

Der Gehäusedeckel 510 liegt an einer Statorunterseite 403 der Statoreinheit 400 zumindest abschnittsweise an und ist thermisch und mechanisch mit der Statoreinheit 400 verbunden. Der Gehäusedeckel 510 weist eine Deckeloberseite 553 auf. Die Deckeloberseite 553 ist der Statorunterseite 403 zugewandt. Ferner weist der Gehäusedeckel 510 eine Deckelunterseite 554 auf, wobei die Deckelunterseite 554 in geschlossenem Zustand des Modulgehäuses 501 oberseitig an einer Gehäusebodenoberseite 534 des Gehäusebodens 520 abschnittsweise anliegt.

Das Leistungsmodul 300 ist kreuzförmig ausgebildet und ist unterseitig der Statoreinheit 400 und oberseitig des Gehäusedeckels 510 in einem ersten Innenraum 564 angeordnet, der durch den Gehäusedeckel 510 und die Statoreinheit 400 begrenzt wird. Unterseitig des Gehäusedeckels 510 sind in einem zweiten Innenraum 560, den der Gehäusedeckel 510 zusammen mit dem Gehäuseboden 520 begrenzt, die Isolationsschicht 265 und das Sensormodul 200 angeordnet. Dabei ist die Isolationsschicht 265 unterseitig des Gehäusedeckels 510 und oberseitig des Sensormoduls 200 angeordnet. Das Sensormodul 200 ist benachbart zu dem Gehäuseboden 520 zwischen der Isolationsschicht 265 und dem Gehäuseboden 520 angeordnet. Der Gehäuseboden 520 begrenzt den zweiten Innenraum 560 auf einer zum ersten Innenraum 564 abgewandten Seite.

Das Anschlussmodul 100 ist unterseitig angrenzend an den Gehäuseboden 520 angeordnet. Ein dritter Innenraum 118 wird durch den Gehäuseboden 520 und die Modulabdeckung 110 begrenzt.

Das Anschlussmodul 100 weist oberseitig eine erste Kontakteinheit 121 und eine versetzt zur ersten Kontakteinheit 121 angeordnete zweite Kontakteinheit 122 auf. Die Kontakteinheit 121, 122 kann, wie dargestellt, als Element einer Steckverbindung ausgebildet sein. Insbesondere kann die erste und/oder zweite Kontakteinheit 121, 122 buchsenartig ausgebildet sein.

An der Unterseite 135 der Modulabdeckung 110 ist eine erste Aussparung 137 in der Modulabdeckung 110 vorgesehen. Durch die erste Aussparung 137 werden die Energieversorgungsleitung 10 und die Datenleitung 12, 14 durch die Modulabdeckung 110 in den dritten Innenraum 118 hindurchgeführt.

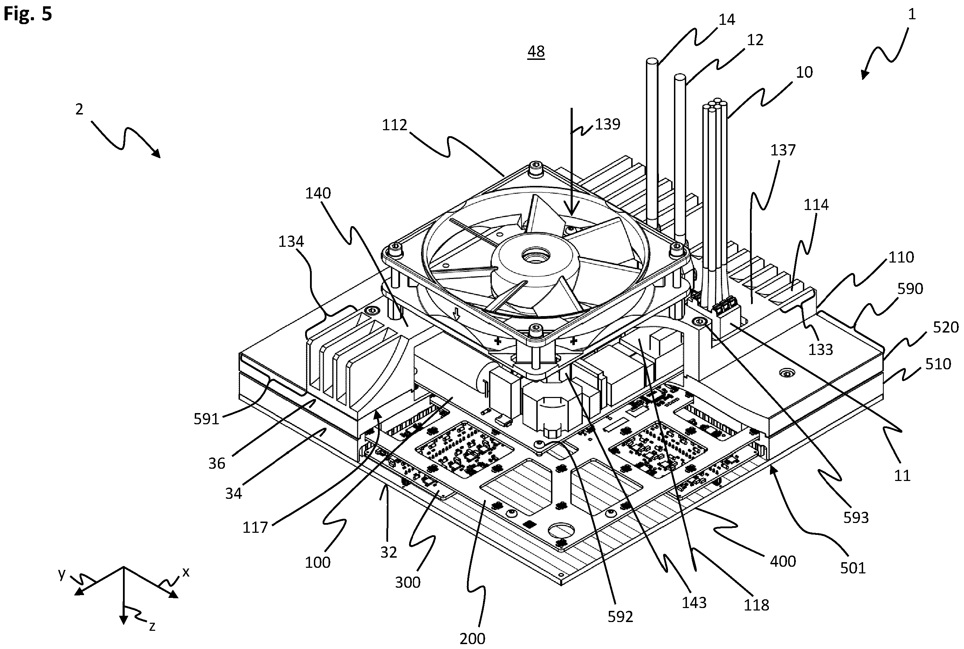

Figur 5 zeigt eine perspektivische Darstellung mit einer Teilschnittansicht durch das Statormodul 2 mit Blickrichtung von unten auf das Planarantriebssystem 1.

Die Modulabdeckung 110 ist wannenartig ausgebildet und begrenzt zusammen mit dem Gehäuseboden 520 auf einer der Statoreinheit 400 abgewandten Seite den dritten Innenraum 118. Das Anschlussmodul 100 ist mittels Anschlussmittel 11 mit der Energieversorgungsleitung 10 und der Datenleitung 12, 14 verbunden. Die Energieversorgungsleitung 10 und die Datenleitung 12, 14 sind in y-Richtung versetzt zu dem ersten Lüfter 112 und den Kühlrippen 114 geführt und in das Anschlussmittel 11 eingesteckt.

Die in Figur 2 dargestellte Kühlrippenstruktur 113 ist beidseitig in y-Richtung an der Modulabdeckung 110 ausgebildet und weist jeweils einen ersten Kühlrippenabschnitt 133 und einen zweiten Kühlrippenabschnitt 134 auf. Zwischen dem ersten Kühlrippenabschnitt 133 und dem zweiten Kühlrippenabschnitt 134 ist eine Unterseite 135 der Modulabdeckung 110 überwiegend plan ausgebildet. Die Kühlrippen 114 des ersten Kühlrippenabschnitts 133 sind aufgrund der Aussparung 137 gegenüber dem zweiten Kühlrippenabschnitt 134 in y-Richtung und in z-Richtung kürzer ausgebildet.

In der Ausführungsform erstreckt sich zwischen dem dritten Befestigungsabschnitt 590 und dem vierten Befestigungsabschnitt 591 die Modulabdeckung 110 in y-Richtung über eine gesamte Breite des Modulgehäuses 501 und endet fluchtend an der dritten Seitenfläche 36. Auch kann die Modulabdeckung 110 in y-Richtung kürzer als eine Erstreckung des Modulgehäuses 501 in y-Richtung ausgebildet sein, sodass die Modulabdeckung 110 und das Modulgehäuse 501 seitlich eine Stufung ausbilden. Ferner kann dadurch das Statormodul 2 auch über einen Querträger der Trägereinrichtung 4 abgestützt sein. Auch kann die Trägereinrichtung 4 als massive Platte mit Aussparungen ausgebildet sein.

Das Anschlussmodul 100 ist an dem Gehäuseboden 520 mittels eines zweiten Befestigungsmittels, das beispielsweise als Schraube oder einer Kombination aus Gewindebolzen und Schraube ausgebildet ist, an dem Gehäuseboden 520 befestigt. Auch die Modulabdeckung 110 ist mittels eines dritten Befestigungsmittels am Gehäuseboden 520 befestigt. Das dritte Befestigungsmittel kann eine Schraube sein.

Der dritte Innenraum 118 kann mit einer ersten Vergussmasse 143 vergossen sein. Die erste Vergussmasse 143 kann im Allgemeinen auch als weitere Vergussmasse 143 bezeichnet sein. Auch kann auf den Verguss des dritten Innenraums 118 verzichtet werden. Die erste Vergussmasse 143 ist elektrisch nichtleitend, jedoch wärmeleitend ausgebildet. Vorzugsweise besteht die erste Vergussmasse 143 unter anderem aus zumindest einem der folgenden ersten Werkstoffe: Matrixmaterial, duroplastischer Kunststoff, Epoxidkunststoff, Partikelmaterial, in das Matrixmaterial eingebettetes Partikelmaterial, Polyurethan, ein zwei-Komponentensystem basierend auf einem Harz und einem Härter. Die erste Vergussmasse 143 weist einen ersten Wärmeleitkoeffizienten auf. Der erste Wärmeleitkoeffizient beträgt vorzugsweise zwischen 0,5 und 0,7 W/m*K, vorzugsweise 0,6 W/m*K.

Vorzugsweise ist der dritte Innenraum 118 vollständig mit der ersten Vergussmasse 143 vergossen, sodass das Anschlussmodul 100 in der ersten Vergussmasse 143 eingebettet ist. Die erste Vergussmasse 143 koppelt thermisch das Anschlussmodul 100 mit der Modulabdeckung 110. Die Modulabdeckung 110 weist einen wärmeleitenden, vorzugsweise einen der folgenden zweiten Werkstoffe auf: Metall, wärmeleitfähige Keramik, wärmeleitfähigen Kunststoff, Aluminium.

Über die Energieversorgungsleitung 10 ist das Anschlussmodul 100 mit einer elektrischen Energiequelle, beispielsweise mit einem Energieversorgungsnetz, verbindbar. Im Betrieb des Planarantriebssystems 1 wird über die Energieversorgungsleitung 10 elektrische Energie bereitgestellt. Primärseitig kann beispielsweise die elektrische Energiequelle die elektrische Energie beispielsweise als eine einphasige oder mehrphasige, insbesondere dreiphasige, Wechselspannung bereitstellen. Auch kann die elektrische Energiequelle eine Gleichspannung bereitstellen. Die Phasen der Wechselspannung können jeweils einen Spannungseffektivwert von 230V und eine Frequenz von 50Hz aufweisen. Das Anschlussmodul 100 ist ausgebildet, eine Antriebsenergie und eine Versorgungsenergie aus elektrischer Energie der elektrischen Energiequelle zu erzeugen.

Das Anschlussmodul 100 ist derart ausgebildet, dass sekundärseitig an der Kontakteinheit 121, 122 das Anschlussmodul 100 die Antriebsenergie als eine Gleichspannung und/oder einen Gleichstrom bereitstellt. Das Anschlussmodul 100 kann hierzu einen oder mehrere Gleichrichter und/oder ein AC/DC-Netzteil umfassen. Insbesondere kann das Anschlussmodul 100 ausgebildet sein, sekundärseitig die Antriebsenergie als eine Gleichspannung von nicht mehr als 150V, insbesondere nicht mehr als 120V, insbesondere nicht mehr als 60V, bereitzustellen. Die Versorgungsenergie kann als eine Gleichspannung mit einer Spannung von nicht mehr als 10V, insbesondere mit einer Spannung von 6V bis 7V, beispielsweise mit einer Spannung von 7V, bereitgestellt werden.

Bei der Umwandlung der primärseitig bereitgestellten elektrischen Energie hin zur sekundärseitig bereitgestellten Antriebsenergie erwärmt sich das Anschlussmodul 100 auf Grund von Widerstandsverlusten und erzeugt eine erste Wärme W₁. Ist das Anschlussmodul 100 in der ersten Vergussmasse 143 vergossen, überträgt das Anschlussmodul 100 die erste Wärme W₁ auf die erste Vergussmasse 143. Die erste Vergussmasse 143 leitet die erste Wärme W₁ an die Modulabdeckung 110 weiter. Durch den wärmeleitenden zweiten Werkstoff der Modulabdeckung 110 erwärmt sich die Modulabdeckung 110 im Wesentlichen gleichmäßig vom dritten Innenraum 118 nach außen hin.

Bei Aktivierung des ersten Lüfters 112 saugt dieser unterseitig Luft 139 aus der Umgebung 48 an und führt diese von unten an die Unterseite 135 der Modulabdeckung 110. Durch das Vorsehen eines Spalts zwischen einem Lüfterrahmen des ersten Lüfters 112 und der Unterseite 135 der Modulabdeckung 110 kann die Luft 139 an der Unterseite 135 der Modulabdeckung 110 derart umgeleitet werden, dass die Luft 139 entlang der Unterseite 135 der Modulabdeckung 110 in Richtung der Kühlrippen 114 und entlang der Kühlrippen 114 strömt. Dabei nimmt die Luft 139 einen ersten Anteil der ersten Wärme W₁ von der Modulabdeckung 110 auf, sodass zuverlässig das Anschlussmodul 100 in dem dritten Innenraum 118 gekühlt wird und eine Überhitzung des Anschlussmoduls 100 zuverlässig vermieden werden kann.

Zusätzlich kann bei einer thermischen Kopplung der ersten und zweiten Trägerelementseitenfläche 115, 116 des ersten und zweiten Trägerelements 40, 41 mit der Modulabdeckung 110 auch ein zweiter Anteil der ersten Wärme W₁ von der Modulabdeckung 110 an das erste und zweite Trägerelement 40, 41 übertragen werden.

Alternativ wäre auch denkbar, dass auf die erste Vergussmasse 143 verzichtet wird. Zusätzlich können wenigstens eine Eintrittsöffnung und eine Austrittsöffnung in der Modulabdeckung 110 vorgesehen sein, die die Umgebung 48 mit dem dritten Innenraum 118 fluidisch verbinden. Dabei können die Eintrittsöffnung oberhalb des ersten Lüfters 112 und die Austrittsöffnung beispielsweise im Bereich der Kühlrippenstruktur 113 angeordnet sein. In diesem Fall fördert der erste Lüfter 112 bei Aktivierung einen Teil der Luft 139 direkt in den dritten Innenraum 118, in dem die Luft 139 das Anschlussmodul 100 umströmt und dabei die erste Wärme W₁ aufnimmt. Über die Austrittsöffnung tritt die erwärmte Luft 139 aus dem dritten Innenraum 118 aus.

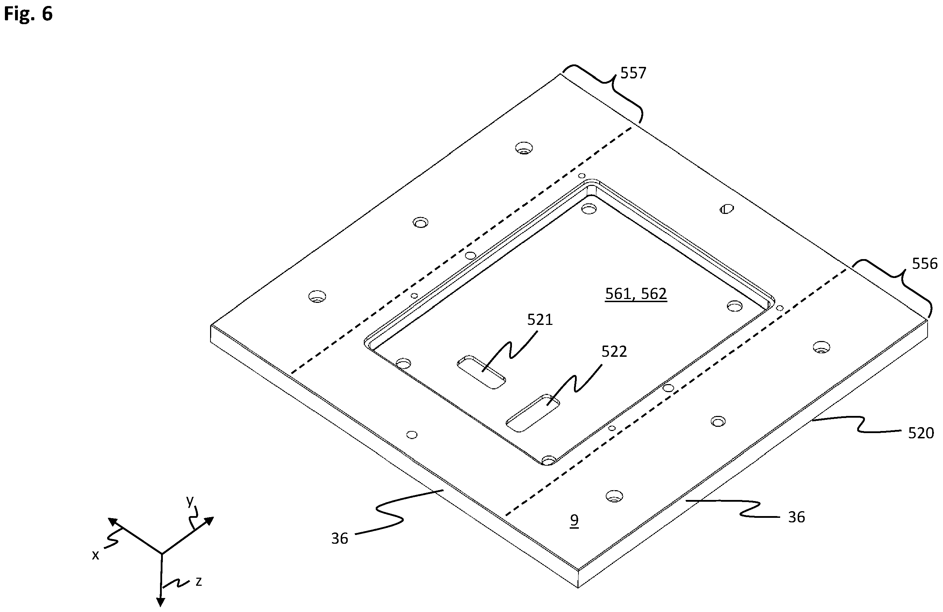

Figur 6 zeigt eine perspektivische Darstellung des Gehäusebodens 520 des in den Figuren 1 bis 5 gezeigten Statormoduls mit Blickrichtung von unten auf den Gehäuseboden 520.

Der Gehäuseboden 520 ist plattenförmig ausgebildet. Dabei ist in z-Richtung der Gehäuseboden 520 deutlich schmaler ausgebildet als in x- und y-Richtung. Der Gehäuseboden 520 weist wenigstens einen der folgenden thermisch leitfähigen dritten Werkstoffe auf: Metall, wärmeleitfähige Keramik, wärmeleitfähigen Kunststoff, Aluminium,. Der dritte Werkstoff kann identisch mit dem zweiten Werkstoff der in Figur 2 dargestellten Modulabdeckung 110 sein.

Um den dritten Innenraum 118 zu vergrößern, ist in dem Gehäuseboden 520 eine zweite Aussparung 561 vorgesehen. Die zweite Aussparung 561 ist in einer Unteransicht rechteckförmig ausgebildet, und teilweise liegt in der zweiten Aussparung 561 das Anschlussmodul. Die zweite Aussparung 561 ist in x- und y-Richtung im Wesentlichen mittig in dem Gehäuseboden 520 positioniert. Die zweite Aussparung 561 weist einen zweiten Aussparungsgrund 562 auf. Der zweite Aussparungsgrund 562 trennt räumlich den dritten Innenraum 118 vom zweiten Innenraum. Dabei dient im Wesentlichen der zweite Aussparungsgrund 562 als Abschirmung des Anschlussmoduls von dem Sensormodul. Zusätzlich kann über den zweiten Aussparungsgrund 562 oberseitig auch ein weiterer Anteil der ersten Wärme von dem Anschlussmodul abgeführt werden, sodass das Anschlussmodul beidseitig zuverlässig über den Gehäuseboden 520 und die Modulabdeckung gekühlt werden kann. Dabei kann der abgeführte Anteil der in Figur 5 dargestellten ersten Wärme W₁ über den zweiten Aussparungsgrund 562 hin zum Befestigungsabschnitt 556, 557 nach außen hingeleitet werden.

Die zweite Aussparung 561 ist zwischen dem ersten Befestigungsabschnitt 556 und dem zweiten Befestigungsabschnitt 557 in x-Richtung angeordnet. Dabei ist die zweite Aussparung 561 in y-Richtung schmaler ausgebildet als der Gehäuseboden 520. Dadurch weist der Gehäuseboden 520 umfangsseitig um die zweite Aussparung 561 eine durchlaufende, unterbrechungsfreie Fläche der Modulunterseite 9 auf. Die Modulunterseite 9 wird in einem Bereich zwischen der zweiten Aussparung 561 und der dritten Seitenfläche 36 in Querrichtung und zwischen dem ersten Befestigungsabschnitt 556 und dem zweiten Befestigungsabschnitt 557 in montiertem Zustand des Statormoduls durch die Modulabdeckung, insbesondere durch die in Figur 2 dargestellte Kühlrippenstruktur 113, verdeckt.

Ferner ist im zweiten Aussparungsgrund 562 eine erste Verbindungsöffnung 521 und eine zweite Verbindungsöffnung 522 angeordnet. Die erste Verbindungsöffnung 521 und die zweite Verbindungsöffnung 522 sind versetzt zueinander angeordnet. Die Verbindungsöffnungen 521, 522 sind langlochförmig ausgebildet und verbinden fluidisch den dritten Innenraum 118 mit dem zweiten Innenraum 560. Die erste Verbindungsöffnung 521 ist korrespondierend zu der in Figur 3 dargestellte ersten Kontakteinheit 121 und die zweite Verbindungsöffnung 522 ist korrespondierend zu der in Figur 3 dargestellten zweiten Kontakteinheit 122 ausgebildet. In montiertem Zustand des Statormoduls durchgreift die erste Kontakteinheit 121 die erste Verbindungsöffnung 521 und die zweite Kontakteinheit 122 die zweite Verbindungsöffnung 522.

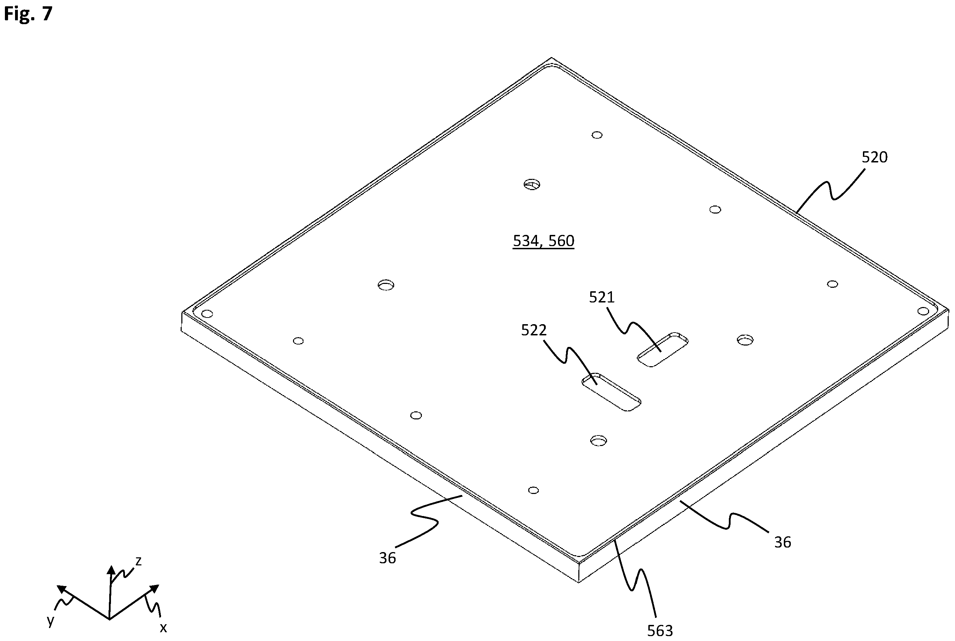

Figur 7 zeigt eine perspektivische Darstellung des Gehäusebodens 520 mit Blickrichtung von oben auf den Gehäuseboden 520.

Der Gehäuseboden 520 weist auf einer der Statoreinheit 400 zugewandten Seite eine im Wesentlichen ebene Ausgestaltung einer Gehäusebodenoberseite 534 auf. Die Gehäusebodenoberseite 534 ist dabei senkrecht zu der dritten Seitenfläche 36 angeordnet und erstreckt sich beispielhaft in einer xy-Ebene. Außenseitig kann der Gehäuseboden 520 einen ersten Rand 563 aufweisen. Der erste Rand 563 grenzt an die dritte Seitenfläche 36 des Gehäusebodens 520 an. Dabei ragt der erste Rand 563 über die Gehäusebodenoberseite 534. Die Gehäusebodenoberseite 534 wird umfangsseitig durch den ersten Rand 563 umfasst. Die Verbindungsöffnung 521, 522 mündet an der Gehäusebodenoberseite 534. Die Gehäusebodenoberseite 534 begrenzt den zweiten Innenraum 560 auf einer zur Statoreinheit 400 zugewandten Seite.

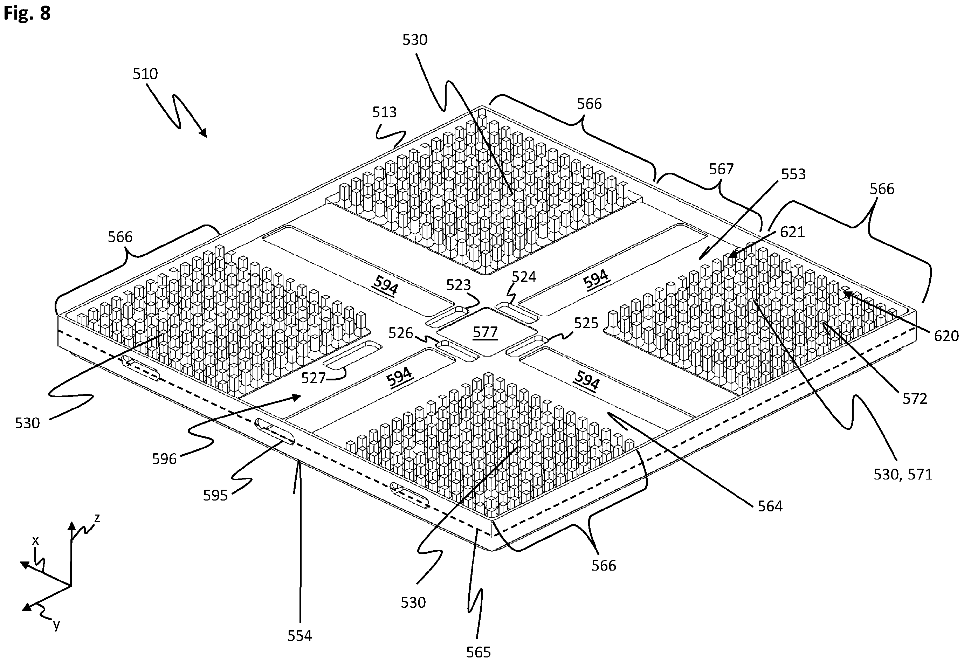

Figur 8 zeigt eine perspektivische Darstellung des Gehäusedeckels 510 des in den Figuren 1 bis 5 gezeigten Statormoduls 2 mit Blickrichtung von oben auf den Gehäusedeckel 510.

Der Gehäusedeckel 510 weist oberseitig einen zweiten Rand 513 und einen Deckelabschnitt 565 auf. Der zweite Rand 513 wird im Allgemeinen auch als Rand 513 bezeichnet. Der Deckelabschnitt 565 ist plattenförmig ausgebildet und erstreckt sich in einer xy-Ebene. Der Deckelabschnitt 565 nimmt dabei, bis auf den zweiten Rand 513, die gesamte Breite in x- und y-Richtung des Gehäusedeckels 510 ein. Auf einer der Statoreinheit 400 zugewandten Seite ist der zweite Rand 513 an dem Deckelabschnitt 565 angeordnet. Der zweite Rand 513 ist vorzugsweise senkrecht zu dem Deckelabschnitt 565 angeordnet und ist umlaufend an dem Deckelabschnitt 565 verlaufend ausgebildet. Der zweite Rand 513 erstreckt sich in Richtung der Statoreinheit. Der zweite Rand 513 begrenzt zusammen mit dem Deckelabschnitt 565 den ersten Innenraum 564.

Der Gehäusedeckel 510 weist auf der zur Statoreinheit zugewandten Seite einen ersten Gehäuseabschnitt 566 und einen zweiten Gehäuseabschnitt 567 auf. Innenseitig wird der erste Gehäuseabschnitt 566 durch den kreuzförmig ausgebildeten zweiten Gehäuseabschnitt 567 begrenzt. Außenseitig wird der erste Gehäuseabschnitte 566 durch den zweiten Rand 513 begrenzt. Der erste Gehäuseabschnitt 566 teilt sich in der Draufsicht in vier quadratischen ausgebildet Erstreckungsbereiche auf. Der erste Gehäuseabschnitt 566 weist eine erste Wärmeleitstruktur 530 auf. Der zweite Gehäuseabschnitt 567 ist frei von der ersten Wärmeleitstruktur 530 und weist somit an der Deckeloberseite 553 eine im Wesentlichen plane Ausgestaltung auf.

Die erste Wärmeleitstruktur 530 weist jeweils eine Vielzahl von einzelnen ersten Wärmeleitelementen 571 auf, die in einem regelmäßigen Muster beabstandet zueinander angeordnet sind. Beispielsweise weist die erste Wärmeleitstruktur 530 mehrere in x-Richtung verlaufende erste Reihen 620 mit jeweils einer Vielzahl von ersten Wärmeleitelementen 571 auf, in Figur 8 von dreizehn ersten Wärmeleitelementen 571, die in jeweils einer der ersten Reihe 620 beabstandet zueinander an dem Deckelabschnitt 565 angeordnet sind. Ferner weist die erste Wärmeleitstruktur 530 mehrere in y-Richtung verlaufende zweite Reihen 621 einer Vielzahl von ersten Wärmeleitelementen 571 auf, in Figur 8 von dreizehn ersten Wärmeleitelementen 571, die in jeweils einer der zweiten Reihe 621 beabstandet zueinander an dem Deckelabschnitt 565 angeordnet sind. Dabei sind die ersten Wärmeleitelemente 571 in einer Matrix von n ersten Reihen 620 und m zweiten Reihen 621 angeordnet. Die ersten Reihen 620 sind senkrecht zu den zweien Reihen 621 angeordnet, wobei die Anzahl n, m der Reihen 620, 621 jeweils frei wählbar ist, vorteilhafterweise jedoch identisch ist.

Jedes der ersten Wärmeleitelemente 571 ist stiftförmig ausgebildet und in z-Richtung länger ausgebildet als sich das erste Wärmeleitelement 571 in x- oder y-Richtung erstreckt. Auf der zur Statoreinheit abgewandten Seite ist jedes der ersten Wärmeleitelemente 571 mit dem Deckelabschnitt 565 materialeinheitlich, insbesondere einstückig verbunden. Auf einer zur Statoreinheit zugewandten Seite weist jedes der Wärmeleitelemente 571 eine erste Kontaktfläche 572 auf. Die ersten Kontaktflächen 572 aller ersten Wärmeleitelemente 571 verlaufen jeweils in einer gemeinsamen Ebene, die in der Ausführungsform beispielhaft als xy-Ebene ausgebildet ist. Die erste Kontaktfläche 572 endet dabei auf der gleichen Ebene wie der zweite Rand 513. Die erste Kontaktfläche 572 liegt im montierten Zustand an der Statoreinheit unterseitig an. Das erste Wärmeleitelement 571 weist in der Ausführungsform beispielhaft einen im Wesentlichen quadratischen Querschnitt bei einem Schnitt in der Nähe der ersten Kontaktfläche 572 in einer xy-Ebene auf. Das erste Wärmeleitelement 571 weist eine Querschnittsfläche mit einem ersten Flächeninhalt auf. Durch das Vorsehen von einer Vielzahl von ersten Wärmeleitelementen 571, die beabstandet zueinander angeordnet sind, wird ein Wirbelstrom in der ersten Wärmeleitstruktur 530 gering gehalten, sodass eine Erwärmung der ersten Wärmeleitstruktur 530 durch Wirbelströme zuverlässig vermieden werden kann. Um ein Abbrechen des ersten Wärmeleitelements 571 von dem Deckelabschnitt 565 zu vermeiden, kann das erste Wärmeleitelement 571 am Fuß verbreitert ausgebildet sein.

Der Gehäusedeckel 510 weist wenigstens einen der folgenden thermisch leitfähigen vierten Werkstoffe auf: Metall, wärmeleitfähige Keramik, wärmeleitfähigen Kunststoff, Aluminium. Der vierte Werkstoff kann identisch zu dem zweiten Werkstoff der Modulabdeckung und/oder dem Gehäusebodensein. Dies ist insbesondere von Vorteil, wenn der Gehäusedeckel 510 und/oder der Gehäuseboden und/oder die Modulabdeckung jeweils einen identischen metallischen zweiten, dritten und vierten Werkstoff aufweist. Dadurch wird eine Potentialdifferenz eines Standardelektrodenpotentials in einer elektrochemischen Spannungsreihe zwischen dem zweiten bis vierten Werkstoff vermieden. Durch Vermeidung der Potentialdifferenz, wird kein Redox-System zwischen der Modulabdeckung und/oder dem Gehäuseboden und/oder dem Gehäusedeckel 510 ausgebildet, so dass eine elektrochemische Korrosion auf Basis der Potentialdifferenz zwischen dem zweiten bis vierten Werkstoff vermieden werden kann.

In der Ausführungsform ist in dem zweiten Gehäuseabschnitt 567 eine kreuzförmig zueinander angeordnete erste Aufnahme 594 vorgesehen, die ebenso mittig zu der Erstreckung des Gehäusedeckels 510 in x-Richtung oder y-Richtung verläuft. Die erste Aufnahme 594 ist in der Draufsicht rechteckförmig und länglich ausgebildet.

In mittiger Lage weist ferner der Deckelabschnitt 565 eine zweite Aufnahme 577 auf. Die zweite Aufnahme 577 weist eine im Wesentlichen quadratische Ausgestaltung in der Draufsicht auf. Dabei ist zwischen einer Seitenkante der zweiten Aufnahme 577 und der ersten Aufnahme 594 jeweils eine dritte bis sechste Verbindungsöffnung 523, 524, 525, 526 angeordnet. Zwischen einer der ersten Aufnahmen 594 und dem ersten Gehäuseabschnitt 566 ist eine siebte Verbindungsöffnung 527 im zweiten Gehäuseabschnitt 567 angeordnet. Die dritte bis siebte Verbindungsöffnung 523, 524, 525, 526, 527 verbindet fluidisch den ersten Innenraum 564 mit dem zweiten Innenraum.

In einer Abwandlung der in Figur 8 gezeigten Ausführungsform kann die erste Wärmeleitstruktur 530 auch als ein einzelner Quader pro ersten, dritten, vierten und fünften Gehäuseabschnitt 566, 568, 569, 570 ausgebildet sein. Auch kann die erste Wärmeleitstruktur 530 auch nur ein einziges quaderförmiges Wärmeleitelement 571 umfassen, das sich in xy-Richtung über den gesamten ersten Gehäuseabschnitt 566 erstreckt. Diese Ausgestaltung eignet sich besonders für Gehäusedeckel 510 aus einem nicht magnetisierbaren Werkstoff.

Auch kann alternativ zu der in Figur 8 gezeigten Ausgestaltung des ersten Wärmeleitelements 571 das erste Wärmeleitelement 571 eine runde, rautenförmige oder polygonförmige erste Kontaktfläche 572 aufweisen, mit der das erste Wärmeleitelement 571 an der Statoreinheit unterseitig anliegt.

Alternativ zu der in Figur 8 gezeigten Ausgestaltung der ersten Wärmeleitstruktur 530 mit dem stiftförmig ausgebildeten ersten Wärmeleitelement 571 wäre auch denkbar, dass die erste Wärmeleitstruktur 530 ein wabenförmiges Muster aufweist, sodass an einzelnen Seiten das erste Wärmeleitelement 571 mit dem nächsten ersten Wärmeleitelement 571 verbunden ist, jedoch an den anderen Flächen beabstandet zu dem gegenüberliegend angeordneten ersten Wärmeleitelement 571 angeordnet ist. Auch wäre eine Gitterstruktur aus gekreuzten Stegen oder ähnlichen Strukturen aus nebeneinander angeordneten ersten Wärmeleitelementen 571 denkbar. Auch wäre denkbar, dass die erste Wärmeleitstruktur 530 aus einem geschäumten Werkstoff, beispielsweise aus einem Aluminiumschaum ist. Auch wäre ein unregelmäßiges Muster zur Anordnung des ersten Wärmeleitelements 571 denkbar.

Zusätzlich ist in der Ausführungsform im zweiten Rand 513 eine Einfüllöffnung 595 vorgesehen. Die Einfüllöffnung 595 dient dazu, dass in der Montage des Statormoduls nach Anordnung des Leistungsmoduls 300 in dem zweiten Gehäuseabschnitt 567 und der Montage des Gehäusedeckels 510 an der Statoreinheit 400 über die Einfüllöffnung 595 der erste Innenraum 564 mit einer zweiten Vergussmasse 596 verfüllt wird und das Leistungsmodul 300 in der zweiten Vergussmasse 596 eingebettet ist. Die zweite Vergussmasse 596 kann im Allgemeinen auch als Vergussmasse 596 bezeichnet sein.

Die zweite Vergussmasse 596 ist vorzugsweise elektrisch isolierend und thermisch leitend ausgebildet. Vorzugsweise weist die zweite Vergussmasse 596 einen der folgenden fünften Werkstoffe auf: Matrixmaterial, duroplastischer Kunststoff, Epoxidkunststoff, in das Matrixmaterial eingebettetes Partikelmaterial, Polyurethan, ein zwei-Komponentensystem basierend auf einem Harz und einem Härter. Vorzugsweise sind der erste Werkstoff und der fünfte Werkstoff identisch. Die zweite Vergussmasse 596 weist einen zweiten Wärmeleitkoeffizienten auf. Der zweite Wärmeleitkoeffizient beträgt zwischen 0,5 und 0,7 W/m*K, vorzugsweise 0,6 W/m*K.

Die zweite Vergussmasse 596 hat den Vorteil, dass ein Eindringen von Feuchtigkeit in das Leistungsmodul 300 vermieden wird. Ferner wird sichergestellt, dass eine gute thermische Anbindung zwischen dem Gehäusedeckel 510 und der Statoreinheit 400 sichergestellt ist. Durch das Vorsehen der ersten Wärmeleitstruktur 530 auf einer der zur Statoreinheit 400 zugewandten Seite und des Auffüllens eines Vergussraums zwischen den einzelnen ersten Wärmeleitelementen 571 mit der nicht magnetischen zweiten Vergussmasse 596 kann ein Wirbelstrom in dem Gehäusedeckel 510, insbesondere im Bereich der ersten Wärmeleitstruktur 530, besonders gering gehalten werden, sodass eine Erwärmung des Gehäusedeckels 510 durch Wirbelstromeinflüsse zuverlässig vermieden werden kann.

Durch die thermisch leitfähige Ausgestaltung der zweiten Vergussmasse 596 wird ferner eine zuverlässige gute thermische Anbindung zwischen der Statoreinheit 400 und dem Gehäusedeckel 510 zusätzlich zur ersten Wärmeleitstruktur 530 bereitgestellt.

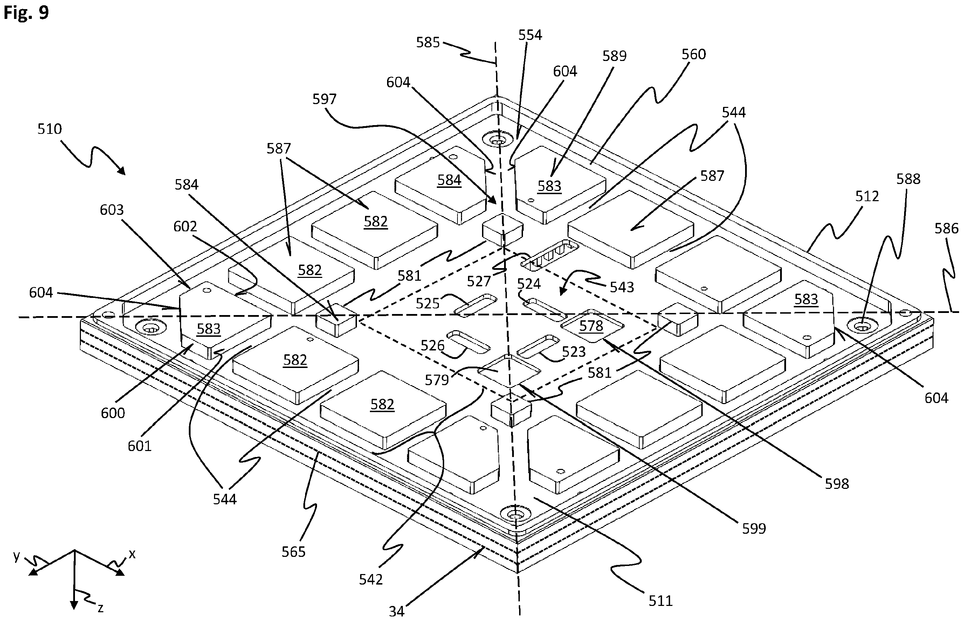

Figur 9 zeigt eine perspektivische Darstellung des Gehäusedeckels 510 mit Blickrichtung von unten auf den Gehäusedeckel 510.

Der Gehäusedeckel 510 weist an der Deckelunterseite 554 einen dritten Rand 512, eine dritte Aussparung 511, einen ersten Mittelbereich 543 und eine zweite Wärmeleitstruktur 542 auf. Im Allgemeinen kann der erste Mittelbereich 543 auch als Mittelbereich bezeichnet werden. Ferner kann der dritte Rand 512 im Allgemeinen auch als weiterer Rand 512 bezeichnet werden.

Der dritte Rand 512 ist nach innen hin (in x- und y-Richtung) von der zweiten Seitenfläche 34 des Gehäusedeckels 510 weg versetzt angeordnet und ist umlaufend ausgebildet. Der dritte Rand 512 erstreckt sich in Richtung des Gehäusebodens. Eine Außenseite des dritten Rands 512 ist korrespondierend zu einer Innenseite des in Figur 7 dargestellten ersten Rands 563 ausgebildet, sodass beim Schließen des Modulgehäuses 501 der erste Rand 563 außenseitig den dritten Rand 512 umgreift. Somit begrenzt der dritte Rand 512 umfangsseitig (in xy-Richtung) den zweiten Innenraum 560.

Alternativ zu der versetzten Anordnung des dritten Rands 512 zu der zweiten Seitenfläche 34 kann aber auch der dritte Rand 512 bündig zu der zweiten Seitenfläche 34 ausgerichtet sein und der dritte Rand 512 den ersten Rand 563 umfangsseitig umgreifen. Auch ist eine beabstandete Anordnung des ersten Rands 563 und des dritten Rands 512 in x- und/oder y-Richtung denkbar.

Der dritte Rand 512 begrenzt umfangsseitig die dritte Aussparung 511. Die dritte Aussparung 511 weist in der Unteransicht eine im Wesentlichen rechteckförmige, vorzugsweise quadratische Ausgestaltung, auf. In der dritten Aussparung 511 sind die zweite Wärmeleitstruktur 542 und der erste Mittelbereich 543 des Gehäusedeckels 510 angeordnet. An den dritten Rand 512 schließt sich nach innen hin die zweite Wärmeleitstruktur 542 an. Die zweite Wärmeleitstruktur 542 ist umlaufend um den ersten Mittelbereich 543 angeordnet, der sich nach innen hin an die zweite Wärmeleitstruktur 542 anschließt.

Die dritte Aussparung 511 weist einen dritten Aussparungsgrund auf. Der dritte Aussparungsgrund ist im ersten Mittelbereich 543 eben ausgebildet und erstreckt sich in einer xy-Ebene. Im ersten Mittelbereich 543 sind die dritte bis siebte Verbindungsöffnung 523 bis 527 angeordnet. Die dritten bis siebten Verbindungsöffnungen 523 bis 527 sind als Durchgangsöffnungen ausgebildet und verbinden den ersten Innenraummit dem zweiten Innenraum 560. Die dritte bis siebte Verbindungsöffnung 523 bis 527 kann jeweils langlochförmig ausgebildet sein. Dabei ist die dritte bis sechste Verbindungsöffnung 523 bis 526 jeweils geneigt, vorzugsweise senkrecht, zu der nächsten dritten bis sechsten Verbindungsöffnung 523 bis 526 angeordnet. Die dritte bis sechste Verbindungsöffnung 523 bis 526 sind um eine Mitte des Gehäusedeckels 510 herum angeordnet.

Im ersten Mittelbereich 543 kann ferner zusätzlich wenigstens eine erste Verarbeitungseinheitsaufnahme 578 und eine zweite Verarbeitungseinheitsaufnahme 579 angeordnet sein. Die erste und zweite Verarbeitungseinheitsaufnahme 578, 579 sind zueinander identisch ausgebildet und weisen in der Unteransicht eine quadratische Ausgestaltung auf. Die Verarbeitungseinheitsaufnahmen 578, 579 sind als Einbuchtung in dem Gehäusedeckel 510 ausgebildet, sodass oberseitig (in Figur 9 unterseitig gezeichnet auf Grund des Blicks von unten auf den Gehäusedeckel 510) die Verarbeitungseinheitsaufnahme 578, 579 geschlossen ausgebildet ist.

Die erste Verarbeitungseinheitsaufnahme 578 weist einen ersten Aufnahmegrund 598 und die zweite Verarbeitungseinheitsaufnahme 579 einen zweiten Aufnahmegrund 599 auf. Der erste Aufnahmegrund 598 und zweite Aufnahmegrund 599 sind in einer gemeinsamen xy-Ebene verlaufend angeordnet. Der erste Aufnahmegrund 598 und der zweite Aufnahmegrund 599 sind parallel zu der Moduloberseite 8 und dem dritten Aussparungsgrund ausgerichtet. Zwischen der ersten Verarbeitungseinheitsaufnahme 578 und der zweiten Verarbeitungseinheitsaufnahme 579 kann die dritte Verbindungsöffnung 523 angeordnet sein.

Die zweite Wärmeleitstruktur 542 weist wenigstens ein zweites Wärmeleitelement 581, beispielhaft ein drittes Wärmeleitelement 582 und ein viertes Wärmeleitelement 583 auf.

Das zweite Wärmeleitelement 581 weist in der Unteransicht eine rechteckförmige, insbesondere eine im Wesentlichen quadratische Ausgestaltung auf, wobei eine Erstreckung in x- und y-Richtung größer ist als eine Erstreckung in z-Richtung. Das zweite Wärmeleitelement 581 weist unterseitig eine zweite Kontaktfläche 584 auf. Die zweite Kontaktfläche 584 ist plan ausgebildet und parallel zur Moduloberseite 8. In der Ausführungsform sind beispielhaft vier zweite Wärmeleitelemente 581 vorgesehen, wobei die zweiten Wärmeleitelemente 581 mit einer innenliegenden Ecke den ersten Mittelbereich 543 begrenzen. Die zweiten Wärmeleitelemente 581 sind dabei so angeordnet, dass der erste Mittelbereich 543 in der Unteransicht eine rechteckförmige, vorzugsweise quadratische Ausgestaltung aufweist. Somit ist jedes der zweiten Wärmeleitelemente 581 zum jeweils benachbarten in x- oder y-Richtung angeordneten nächsten zweiten Wärmeleitelement 581 in einem gleichen Abstand angeordnet. Dabei sind jeweils zwei zweite Wärmeleitelemente 581 auf einer Diagonalen 585, 586 des Gehäusedeckels 510 angeordnet.

Die zweite Kontaktfläche 584 weist einen zweiten Flächeninhalt auf. Der zweite Flächeninhalt ist deutlich größer (beispielsweise um einen Faktor 2 bis 20) als der erste Flächeninhalt der ersten Kontaktfläche.

Das dritte Wärmeleitelement 582 und das vierte Wärmeleitelement 583 sind außenseitig des zweiten Wärmeleitelements 581 zwischen dem dritten Rand 512 und dem zweiten Wärmeleitelement 581 angeordnet.

Das dritte Wärmeleitelement 582 weist in der Unteransicht eine im Wesentlichen rechteckförmige, vorzugsweise quadratische, Ausgestaltung auf. Unterseitig weist das dritte Wärmeleitelement 582 eine dritte Kontaktfläche 587 auf. Die dritte Kontaktfläche 587 ist plan ausgebildet und in einer gemeinsamen Ebene mit der zweiten Kontaktfläche 584 angeordnet. Die dritte Kontaktfläche weist einen dritten Flächeninhalt auf. Der dritte Flächeninhalt ist deutlich größer (beispielsweise um einen Faktor 2 bis 10) als der zweite Flächeninhalt.

Das vierte Wärmeleitelement 583 weist in der Unteransicht eine im Wesentlichen fünfeckförmige Ausgestaltung auf. Unterseitig weist das vierte Wärmeleitelement 583 eine vierte Kontaktfläche 589 auf. Die vierte Kontaktfläche 589 ist plan ausgebildet und in einer gemeinsamen Ebene mit der zweiten Kontaktfläche 584 und der dritten Kontaktfläche 587 angeordnet. Die vierte Kontaktfläche 589 weist einen vierten Flächeninhalt auf. Der dritte Flächeninhalt ist größer (beispielsweise um einen Faktor 1,1 bis 2) als der vierte Flächeninhalt. In geschlossenem Zustand des Modulgehäuses 501 liegt die zweite Kontaktfläche 584, die dritte Kontaktfläche 587 und die vierte Kontaktfläche 589 an der Gehäusebodenoberseite 534 an. Durch das Anliegen ist der Gehäuseboden 520 mit der zweiten Wärmeleitstruktur 542 thermisch gekoppelt.

Das vierte Wärmeleitelement 583 weist eine erste bis fünfte Wärmeleitelementseitenfläche 600 bis 604 auf. Die erste bis vierte Wärmeleitelementseitenfläche 600 bis 603 ist senkrecht zur nächsten Wärmeleitelementseitenfläche 600 bis 603 angeordnet. Die fünfte Wärmeleitelementseitenfläche 604 verbindet die vierte Wärmeleitelementseitenfläche 603 mit der ersten Wärmeleitelementseitenfläche 600 und ist schräg geneigt, vorzugsweise in einem 45°-Winkel, zu der ersten Wärmeleitelementseitenfläche 600 und der vierten Wärmeleitelementseitenfläche 603 angeordnet.

In Umfangsrichtung (x- oder y-Richtung) zwischen den vierten Wärmeleitelementen 583 sind mehrere dritte Wärmeleitelemente 582 angeordnet. In der Ausführungsform sind beispielsweise zwischen zwei vierten Wärmeleitelementen 583 jeweils zwei dritte Wärmeleitelemente 582 angeordnet.

Zwischen dem dritten und vierten Wärmeleitelement 582, 583 sowie zwischen zwei nebeneinander angeordneten dritten Wärmeleitelementen 582 sind jeweils ein erster Zwischenraum 544 angeordnet. Der erste Zwischenraum 544 kann nutartig ausgebildet sein. Der erste Zwischenraum 544 erstreckt sich in seiner Haupterstreckungsrichtung entweder in x-Richtung oder in y-Richtung und wird außenseitig durch den dritten Rand 512 begrenzt. In der Haupterstreckungsrichtung des ersten Zwischenraums 544 ist fluchtend gegenüberliegend jeweils in mittiger Lage zu dem ersten Zwischenraum 544 (quer zu der Haupterstreckungsrichtung des ersten Zwischenraums 544) das dritte Wärmeleitelement 582 oder das vierte Wärmeleitelement 583 angeordnet.

In der Ausführungsform ist eine Vielzahl von dritten und vierten Wärmeleitelementen 582, 583 vorgesehen. Dabei grenzen beabstandet zu einer ersten Diagonale 585 jeweils zwei vierte Wärmeleitelemente 583 an. Das vierte Wärmeleitelement 583 ist so zu der ersten Diagonale 585 gedreht ausgerichtet, dass die fünfte Wärmeleitelementseitenfläche 604 der ersten Diagonale 585 zugewandt ist und die fünfte Wärmeleitelementseitenfläche 604 parallel zu der ersten Diagonale 585 ausgerichtet ist. Dadurch weist ein zweiter Zwischenraum 597 zwischen den zwei vierten Wärmeleitelementen 583 an der ersten Diagonale 585 eine konstante Breite auf und verläuft entlang der ersten Diagonale 585. Der zweite Zwischenraum 597 mündet innenseitig an dem zweiten Wärmeleitelement 581, das direkt auf der ersten Diagonale 585 derart angeordnet ist, dass das zweite Wärmeleitelement 581 in der Unteransicht in zwei gleich große rechtwinklige Dreiecke durch die erste Diagonale 585 geteilt ist.

Auf einer zweiten Diagonale 586 sind jeweils zwei weitere vierte Wärmeleitelemente 583 gegenüberliegend zueinander derart gedreht angeordnet, dass die fünfte Wärmeleitelementseitenfläche 604 nach außen zum dritten Rand 512 gerichtet ist und die fünfte Wärmeleitelementseitenfläche 604 senkrecht zu der zweiten Diagonale 586 ausgerichtet ist. Die zweite Diagonale 586 verläuft mittig durch die zwei vierten Wärmeleitelemente 583. Dadurch ist hinreichend Bauraum zwischen der fünften Wärmeleitelementseitenfläche 604 und dem dritten Rand 512 zur Anordnung einer Verbindungsdurchlasses 588 zur Durchführung eines vierten Befestigungsmittels (nicht in Figur 9 dargestellt) durch den Gehäusedeckel 510 bereitgestellt.

Von besonderem Vorteil ist, wenn die zweite Wärmeleitstruktur 542 eine konstante Breite in xy-Richtung aufweist und mehr als 50 %, insbesondere mehr als 75 %, insbesondere mehr als 85 % einer Gesamtfläche des Gehäusedeckels 510 in der x- und y-Richtung umfasst. Von besonderem Vorteil ist, wenn der erste Mittelbereich 543 möglichst klein gewählt ist, um eine zuverlässige Wärmeübertragung zwischen dem Gehäusedeckel 510 und dem Gehäuseboden 520 sicherzustellen.

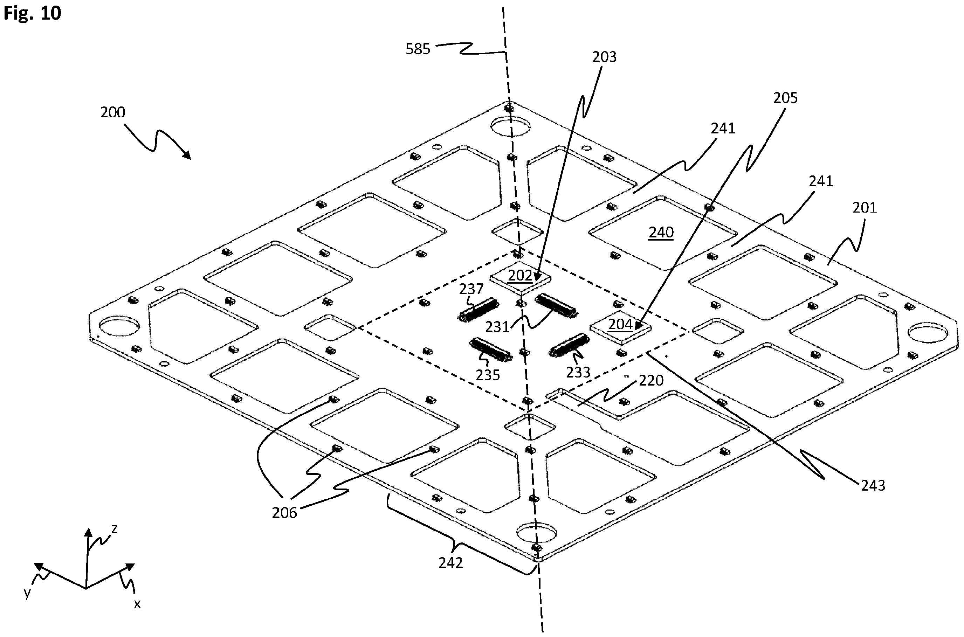

Figur 10 zeigt eine perspektivische Darstellung mit Blickrichtung von oben auf das Sensormodul 200.

Das Sensormodul 200 weist eine erste Leiterplatte 201, eine erste Verarbeitungseinheit 202 und eine beabstandet zur ersten Verarbeitungseinheit 202 angeordnete zweite Verarbeitungseinheit 204 auf. Die erste Leiterplatte 201 kann im Allgemeinen auch als Leiterplatte 201 bezeichnet sein. Ferner umfasst das Sensormodul 200 eine Vielzahl von Positionserfassungseinheiten 206, die an einer Oberseite der elastisch ausbildbaren ersten Leiterplatte 201 angeordnet sind. Die erste Verarbeitungseinheit 202 und die zweite Verarbeitungseinheit 204 sind mittels der ersten Leiterplatte 201 elektrisch miteinander verbunden. Ferner verbindet die erste Leiterplatte 201 die Positionserfassungseinheiten 206 mit den Verarbeitungseinheiten 202, 204.

Die Positionserfassungseinheiten 206 können in einem regelmäßigen Muster an der Oberseite der ersten Leiterplatte 201 und/oder an der Unterseite der ersten Leiterplatte 201 angeordnet sein. Auch können die Positionserfassungseinheiten 206 in der ersten Leiterplatte 201 integriert ausgebildet sein. Insbesondere kann das Muster derart gewählt werden, dass die Positionserfassungseinheiten 206 zueinander einen gleichmäßigen Abstand aufweisen.

Die Positionserfassungseinheiten 206 sind ausgebildet, eine Position des Läufers 20 über der Statoreinheit 400 zu erfassen, um ein die Position des Läufers 20 repräsentierendes Sensorsignal zu erzeugen. Insbesondere können die Positionserfassungseinheiten 206 beispielsweise ausgebildet sein, ein Magnetfeld eines Magneten des Läufers 20 zu detektieren. Dabei kann es sich bei dem Magneten des Läufers 20 beispielsweise um einen Antriebsmagneten des Läufers 20 handeln. Die Positionserfassungseinheit 206 kann beispielsweise ein Magnetfeldsensor, insbesondere ein digitaler oder analoger Hall-Sensor, sein. Auch kann die Positionserfassungseinheit 206 ausgebildet sein, eine Raumrichtung des Magnetfelds des Magneten zu erfassen.

Das Sensormodul 200 weist oberseitig an der ersten Leiterplatte 201 ein erstes bis viertes Koppelelement 231, 233, 235, 237 auf, wobei das erste bis vierte Koppelelement 231, 233, 235, 237 Teil einer jeweiligen Steckverbindung ist. Das erste bis vierte Koppelelement 231, 233, 235, 237 ist beispielhaft als Stecker ausgebildet und durchgreift in montiertem Zustand des Sensormoduls 200 die dritte bis siebte Verbindungsöffnung. Dabei greift das erste bis vierte Koppelelement 231, 233, 235, 237 in ein korrespondierend zum ersten bis vierten Koppelelement 231, 233, 235, 237 ausgebildetes Gegenelement des Leistungsmoduls 300 ein und verbindet das Leistungsmodul 300 mit dem Sensormodul 200 elektrisch. Ein Spalt an der dritten bis sechsten Verbindungsöffnung zu dem ersten bis vierten Koppelelement 231, 233, 235, 237 kann durch ein Dichtmittel vermieden werden, sodass die zweite Vergussmasse beim Vergießen des ersten Innenraums nicht vom ersten Innenraum in den zweiten Innenraum übertreten kann.

Das Sensormodul 200 ist elektrisch mit dem Anschlussmodul verbunden. Dazu weist das Sensormodul 200 unterseitig (in Figur 4 gezeigt) eine dritte Kontakteinheit 207 auf, die korrespondierend zur ersten Kontakteinheit 121 des Anschlussmoduls ausgebildet ist und die ineinander eingreifen, um das Sensormodul 200 elektrisch mit dem Anschlussmodul zu verbinden. Die dritte Kontakteinheit 207 kann als Steckereinheit ausgebildet sein. Wie in den Figuren 3 und 4 gezeigt, ist die dritte Kontakteinheit 207 gegenüberliegend zur ersten Kontakteinheit 121 angeordnet, sodass die erste und/oder die dritte Kontakteinheit 121, 207 die erste Verbindungsöffnung 521 in dem Gehäuseboden 520 durchgreifen. Dabei ist das Sensormodul 200 von dem Anschlussmodul 100 elektrisch über die erste und dritte Kontakteinheit 121, 207 mit der Datenleitung 12, 14 verbunden.

Die Versorgungsenergie kann beispielsweise für den Betrieb der Positionserfassungseinheiten 206 und/oder der ersten und/oder zweiten Verarbeitungseinheit 202, 204 bereitgestellt werden. Die Versorgungsenergie kann eine Gleichspannung mit einer Spannung von nicht mehr als 20V, insbesondere mit einer Spannung von 5V bis 15V, etwa mit einer Spannung von 10V, sein.

Die erste und zweite Verarbeitungseinheit 202, 204 kann als integrierte Schaltung, etwa als Mikroprozessor, FPGA oder Mikrocontroller ausgebildet sein.

Die Verarbeitungseinheit 202, 204 ist dazu ausgebildet, die von der Positionserfassungseinheit 206 gewonnene Information über eine Position des Läufers 20 aus der Positionserfassungseinheit 206 auszulesen und zu verarbeiten. Beispielsweise kann die Verarbeitungseinheit 202, 204 einen Eingang aufweisen, über den ein Informationssignal der Positionserfassungseinheit 206 eingelesen werden kann. Die Verarbeitungseinheit 202, 204 kann dazu ausgebildet sein, das eingelesene Sensorsignal zu Kommunikationsdaten zu verarbeiten, die zur Übertragung über das mit dem Statormodul 2 verbundene Datennetzwerk geeignet sind.

Die erste Verarbeitungseinheit 202 weist oberseitig eine erste Anlagefläche 203 und die zweite Verarbeitungseinheit 204 oberseitig eine zweite Anlagefläche 205 auf. Die erste Anlagefläche 203 und die zweite Anlagefläche 205 können in einer gemeinsamen xy-Ebene angeordnet sein. In montiertem Zustand des Statormoduls greift die erste Verarbeitungseinheit 202 in die korrespondierend zur ersten Verarbeitungseinheit 202 ausgebildete erste Verarbeitungseinheitsaufnahme ein. Die zweite Verarbeitungseinheit 204 greift in die korrespondierend zur zweiten Verarbeitungseinheit 204 ausgebildete zweite Verarbeitungseinheitsaufnahme ein.

Vorteilhafterweise liegt die erste Anlagefläche 203 am ersten Aufnahmegrund 598 und die zweite Anlagefläche 205 am zweiten Aufnahmegrund 599 an, wenn sich die erste Verarbeitungseinheit 202 und/oder die zweite Verarbeitungseinheit 204 im Regelbetrieb auf eine Temperatur erwärmt die größer ist als eine Temperatur des Gehäusedeckels. Durch das Anlegen der Verarbeitungseinheit 202, 204 am Aufnahmegrund 598, 599 kann thermisch die Verarbeitungseinheit 202, 204 mit dem in Figur 9 dargestellten Gehäusedeckel 510 gekoppelt werden, sodass eine im Betrieb der Verarbeitungseinheit 202, 204 entstehende Wärme aus der Verarbeitungseinheit 202, 204 zuverlässig in den Gehäusedeckel 510 abgeführt wird und ein Überhitzen der Verarbeitungseinheit 202, 204 vermieden werden kann. Die aus der Verarbeitungseinheit 202, 204 abgegebene Wärme kann dabei von dem Gehäusedeckel 510 über die zweite Wärmeleitstruktur 542 an den Gehäuseboden 520 übertragen werden.

Alternativ ist der erste Aufnahmegrund 598 und/oder der zweite Aufnahmegrund 599 beabstandet zu der zugeordneten Anlagefläche 203, 205 angeordnet. Diese Ausgestaltung ist insbesondere denkbar, wenn die erste Verarbeitungseinheit 202 und/oder zweite Verarbeitungseinheit 204 besonders energieeffizient ist und nur eine geringe Abwärme erzeugt. Zusätzlich werden lange Toleranzketten in dem Statormodul vermieden.

In der ersten Leiterplatte 201 sind im Wesentlichen korrespondierend zu der zweiten Wärmeleitstruktur ausgebildete Gehäusedurchlässe 240 vorgesehen, wobei zwischen jeweils zwei Gehäusedurchlässen 240 jeweils ein erster Steg 241 oder ein zweiter Steg 266 angeordnet ist, der die Gehäusedurchlässe 240 voneinander trennt. Der erste Steg 241 erstreckt sich in seiner Haupterstreckungsrichtung in x-Richtung oder in y-Richtung. Der zweite Steg 266 verläuft entlang der ersten Diagonalen 585. Auf dem ersten Steg 241 und dem zweiten Steg 266 ist wenigstens eine Positionserfassungseinheit 206 angeordnet.

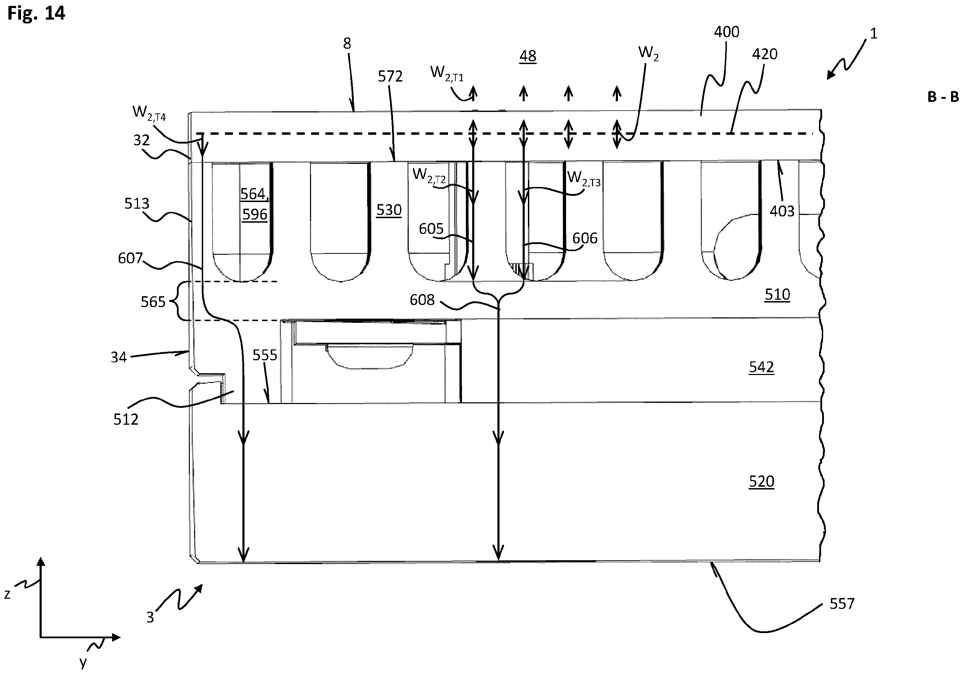

Die Geometrie der Gehäusedurchlässe 240 ist jeweils korrespondierend zum zweiten bis vierten Wärmeleitelement 581 bis 583 ausgebildet. In montiertem Zustand der Statormoduls 2 durchgreifen die zweiten bis vierten Wärmeleitelement 581 bis 583 die jeweils zugeordneten Gehäusedurchlässe 240, sodass das Sensormodul 200 von der Wärmeübertragung des Gehäusedeckels 510 an den Gehäuseboden 520 im Wesentlichen abgekoppelt ist und ein Wärmepfad (auf den in den Figuren 14 bis 16 detailliert eingegangen wird) kurz gehalten ist.

Durch die korrespondierende Ausgestaltung der ersten Leiterplatte 201 zu der zweiten Wärmeleitstruktur kann eine Fläche der ersten Leiterplatte 201 besonders groß gehalten werden, sodass hinreichend Platz auf der ersten Leiterplatte 201 zur Anordnung der Positionserfassungseinheiten 206, insbesondere am ersten Steg 241 und/oder am zweiten Steg 266, und der ersten und/oder zweiten Verarbeitungseinheit 202, 204 vorhanden ist. Ferner können die Positionserfassungseinheiten 206 in dem vordefinierten Muster angeordnet sein und gleichzeitig ein großer Gesamtflächeninhalt der zweiten bis vierten Flächeninhalte der zweiten bis vierten Kontaktfläche bereitgestellt werden. Durch die Abstimmung der Geometrie der zweiten Wärmeleitstruktur und des Musters der Anordnung der Positionserfassungseinheiten 206 zueinander, können die Positionserfassungseinheiten 206 gut den Läufer erfassen und gleichzeitig eine hohe Wärmeübertragung zwischen Gehäusedeckel und Gehäuseboden sichergestellt sein.

Durch die korrespondierende Ausgestaltung der ersten Leiterplatte 201 sind die Gehäusedurchlässe 240 ausschließlich in einem Randbereich 242 der ersten Leiterplatte 201 angeordnet, während in einem zweiten Mittelbereich 243 der ersten Leiterplatte 201 auf Gehäusedurchlässe verzichtet wird. Der Randbereich 242 der ersten Leiterplatte 201 umschließt in Umfangsrichtung den zweiten Mittelbereich 243 der ersten Leiterplatte 201. In x- und y-Richtung weist der Randbereich 242 etwa die Erstreckung und Positionierung wie die zweite Wärmeleitstruktur 542 auf. Gleiches gilt auch für den zweiten Mittelbereich 243 der ersten Leiterplatte 201 und den ersten Mittelbereich 543 des Gehäusedeckels 510.

Zusätzlich kann in der ersten Leiterplatte 201 ein Verbindungsausschnitt 220 vorgesehen sein. Der Verbindungsausschnitt 220 ist als Durchbruch in der ersten Leiterplatte 201 ausgebildet. Der Verbindungsausschnitt 220 mündet seitlich außenseitig in y-Richtung an einem Gehäusedurchlass 240 für das dritte Wärmeleitelement. In x-Richtung ist der Verbindungsausschnitt 220 zwischen den Gehäusedurchlässen 240 für zwei zweite Wärmeleitelemente angeordnet. Wie in den Figuren 3 und 4 erkennbar, ist der Verbindungsausschnitt 220 in z-Richtung über der zweiten Verbindungsöffnung 522 des Gehäusebodens 520 und über der zweiten Kontakteinheit 122 angeordnet. In montiertem Zustand des Statormoduls 2 durchgreift die zweite Kontakteinheit 122 sowohl die zweite Verbindungsöffnung 522 als auch den Verbindungsausschnitt.

Von besonderem Vorteil ist, wie in Figuren 3 und 4 gezeigt, wenn zwischen dem Sensormodul 200 und dem Gehäusedeckel 510 zusätzlich eine Isolationsschicht 265 vorgesehen ist und an der ersten Leiterplatte anliegt. Die Isolationsschicht 265 isoliert elektrisch die erste Leiterplatte 201 von dem Gehäusedeckel 510. Die Isolationsschicht 265 ist in der Draufsicht geometrisch identisch wie die erste Leiterplatte ausgebildet. Auf die Isolationsschicht 265 kann auch verzichtet werden, wenn der Gehäusedeckel aus einem elektrisch nicht leitfähigen Werkstoff gefertigt ist.

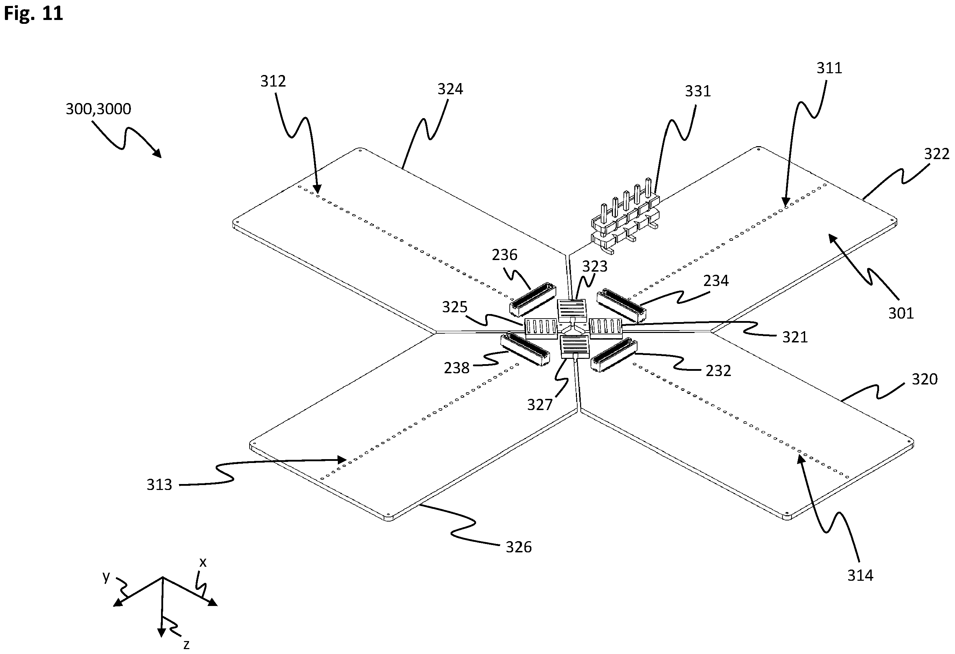

Figur 11 zeigt eine perspektivische Darstellung des in den Figuren 3 und 4 gezeigten Leistungsmoduls 300 von unten.

Das Leistungsmodul 300 ist an seiner Unterseite 301 im Wesentlichen eben ausgebildet. Das Leistungsmodul 300 weist eine kreuzförmig ausgebildete Grundstruktur auf, wobei innenseitig ein erstes bis viertes Gegenelement 232, 234, 236, 238 vorgesehen ist, das in montiertem Zustand des Statormoduls in das in Figur 10 gezeigte erste bis vierte Koppelelement 231, 233, 235, 237 eingreift. Dadurch ist das Sensormodul 200 elektrisch mit dem Leistungsmodul 300 verbunden. Die Unterseite 301 ist in montiertem Zustand des Leistungsmoduls 300 der Deckeloberseite im zweiten Gehäuseabschnitt zugewandt. In der Ausführungsform ist das Leistungsmodul 300 in z-Richtung flacher ausgebildet als die erste Wärmeleitstruktur, sodass die erste Wärmeleitstruktur in montiertem Zustand des Leistungsmoduls 300 am Gehäusedeckel seitlich am Leistungsmodul 300 vorbeigeführt ist.

Das Leistungsmodul 300 weist eine erste Moduleinheit 320, eine zweite Moduleinheit 322, eine dritte Moduleinheit 324 und eine vierte Moduleinheit 326 auf. Soweit im Folgenden keine Unterschiede beschrieben werden, sind die ersten bis vierten Moduleinheiten 320, 322, 324, 326 identisch zueinander ausgebildet. Die erste Moduleinheit 320 und die dritte Moduleinheit 324 erstrecken sich in ihrer Haupterstreckungsrichtung in x-Richtung, während hingegen sich die zweite Moduleinheit 322 und die vierte Moduleinheit 326 in ihrer Haupterstreckungsrichtung in y-Richtung erstrecken, sodass die erste bis vierte Moduleinheit 320, 322, 324, 326 kreuzförmig das Leistungsmodul 300 ausbilden. Die ersten bis vierten Moduleinheiten 320, 322, 324, 326 sind über Verbindungsmittel 321, 323, 325, 327 elektrisch leitend miteinander verbunden. Zusätzlich können die Verbindungsmittel 321, 323, 325, 327 dazu ausgebildet sein, die Moduleinheiten 320, 322, 324, 326 mechanisch starr miteinander zu verbinden.

Jede der ersten bis vierten Moduleinheiten 320, 322, 324, 326 weist in mittiger Lage bezogen auf eine Breite quer zur Haupterstreckungsrichtung eine erste bis vierte Kontaktstruktur 311, 312, 313, 314 auf, die in der Ausführungsform beispielhaft als Buchsenkontaktstruktur ausgebildet ist. Die erste bis vierte Kontaktstruktur 311, 312, 313, 314 erstreckt sich durch das Leistungsmodul 300 in z-Richtung, sodass oberseitig die erste bis vierte Kontaktstruktur 311, 312, 313, 314 kontaktierbar ist.

Das Leistungsmodul 300 ist elektrisch mit dem Anschlussmodul verbunden. Dazu weist das Leistungsmodul 300 unterseitig eine vierte Kontakteinheit 331 auf, die korrespondierend zu der zweiten Kontakteinheit ausgebildet ist. Die zweite und vierte Kontakteinheit, 331 greifen ineinander ein, um das Leistungsmodul 300 elektrisch mit dem Anschlussmodul zu verbinden. Die vierte Kontakteinheit 331 kann, wie in Figur 11 gezeigt, als Steckereinheit ausgebildet sein. Wie in den Figuren 3 und 4 gezeigt, ist die vierte Kontakteinheit 331 gegenüberliegend zur zweiten Kontakteinheit 122 angeordnet, sodass die zweite und/oder die vierte Kontakteinheit 122, 331 die zweite Verbindungsöffnung 522 und die siebte Verbindungsöffnung durchgreifen. Dabei wird das Leistungsmodul 300 von dem Anschlussmodul elektrisch über die zweite und vierte Kontakteinheit 122, 331 mit der Antriebsenergie versorgt.

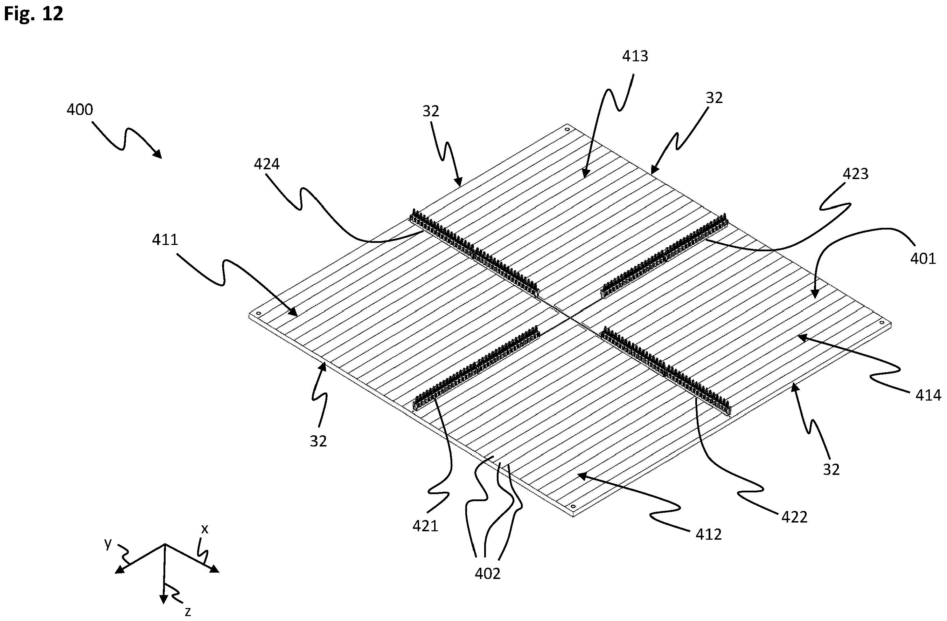

Figur 12 zeigt eine perspektivische Darstellung der in den Figuren 1 bis 5 gezeigten Statoreinheit 400 mit Blickrichtung von unten auf die Statoreinheit 400.

Die Statoreinheit 400 ist als quaderförmige Platte ausgebildet, deren Ausdehnung in z-Richtung geringer ist als in x-und y-Richtung. Die Statoreinheit 400 weist eine zweite Leiterplatte 401, insbesondere eine mehrlagige zweite Leiterplatte 401 auf. Die zweite Leiterplatte 401 weist ein isolierendes Material auf. Ferner weist die zweite Leiterplatte 401 eine Mehrzahl von Spulenleitern 402 auf. Die Spulenleiter 402 sind als elektrisch leitende, insbesondere metallische, Leiterbahnen der zweiten Leiterplatte 401 ausgebildet. Die Leiterbahnen können in verschiedenen Ebenen angeordnete sein und unterschiedliche Richtungen zu einander ausgerichtet sein. Ein einzelner Spulenleiter 402 kann jeweils eine Dicke (in z-Richtung) größer 10 µm, insbesondere größer 50 µm, insbesondere größer 100 µm aufweisen. Zusätzlich kann der Spulenleiter 402 eine Dicke kleiner 1 mm, insbesondere kleiner 500 µm, aufweisen. Insbesondere kann der Spulenleiter 402 eine Dicke von 210 µm aufweisen.

Durch die mehrlagige Ausgestaltung der zweiten Leiterplatte 401 ist die Statoreinheit 400 besonders kompakt ausgebildet. Ferner weist die zweite Leiterplatte 401 dadurch einen hohen Anteil an elektrisch leitfähigem Material auf. In der Ausführungsform wird als elektrisch leitfähiges Material ein Metall, vorzugsweise Kupfer, verwendet, sodass die Statoreinheit 400 insgesamt eine gute thermische Leitfähigkeit aufweist. Bei Bestromung eines einzelnen Spulenleiters 402 und eines damit einhergehenden Widerstandsverlustes erwärmt sich der bestromte Spulenleiter 402. Dies entspricht einer lokalen Erwärmung der Statoreinheit 400. Die gute thermische Leitfähigkeit der Statoreinheit 400 hat zur Folge, dass, ausgehend von der lokalen Erwärmung, sich die durch den Spulenleiter 402 in die Statoreinheit 400 eingebrachte Wärme innerhalb der Statoreinheit 400 gleichmäßig verteilt, sodass - zeitlich betrachtet - zügig nach der Bestromung beispielsweise eines der Spulenleiters 402 die Statoreinheit 400 im Wesentlichen gleichmäßig erwärmt ist.

Die Statoreinheit 400 weist unterseitig eine fünfte bis achte Kontaktstruktur 421, 422, 423, 424 auf. Die fünfte und siebte Kontaktstruktur 421 und 423 erstrecken sich in y-Richtung und sind in mittiger Lage bezogen auf die Erstreckung der Statoreinheit 400 in x-Richtung angeordnet. Die sechste und achte Kontaktstruktur 422, 424 sind in mittiger Lage bezüglich der Erstreckung der Statoreinheit 400 in y-Richtung angeordnet und verlaufen in x-Richtung. Die fünfte bis achte Kontaktstruktur 421, 422, 423, 424 sind somit kreuzförmig angeordnet und können als Einpressverbinder ausgebildet sein. Dabei greift in montiertem Zustand der Statoreinheit 400 an dem Leistungsmodul die fünfte bis achte Kontaktstruktur 421 bis 424 in die jeweils zugeordnete erste bis vierte Kontaktstruktur ein. Dadurch wird ein elektrischer und thermischer Kontakt zwischen der Statoreinheit 400 und dem Leistungsmodul sichergestellt. Ferner ist die fünfte bis achte Kontaktstruktur 421 bis 424 elektrisch mit den Spulenleitern 402 verschaltet.

Die fünfte bis achte Kontaktstruktur 421, 422, 423, 424 teilen die Statoreinheit 400 in einen ersten Statorsektor 411, einen zweiten Statorsektor 412, einen dritten Statorsektor 413 und einen vierten Statorsektor 414 auf. Soweit im Folgenden keine Unterschiede beschrieben werden, sind die ersten bis vierten Statorsektoren 411, 412, 413, 414 jeweils identisch aufgebaut. Jeder der ersten bis vierten Statorsektoren 411, 412, 413, 414 wird nach außen hin in x- und y-Richtung seitlich durch die erste Seitenfläche 32 und nach innen hin durch jeweils zwei der fünften bis achten Kontaktstrukturen 421, 422, 423, 424 begrenzt. Die ersten bis vierten Statorsektoren 411, 412, 413, 414 umfassen ihrerseits jeweils einen Teil der länglichen Spulenleiter 402. Jeder der Spulenleiter 402 ist vollständig in einem der ersten bis vierten Statorsektoren 411, 412, 413, 414 angeordnet.

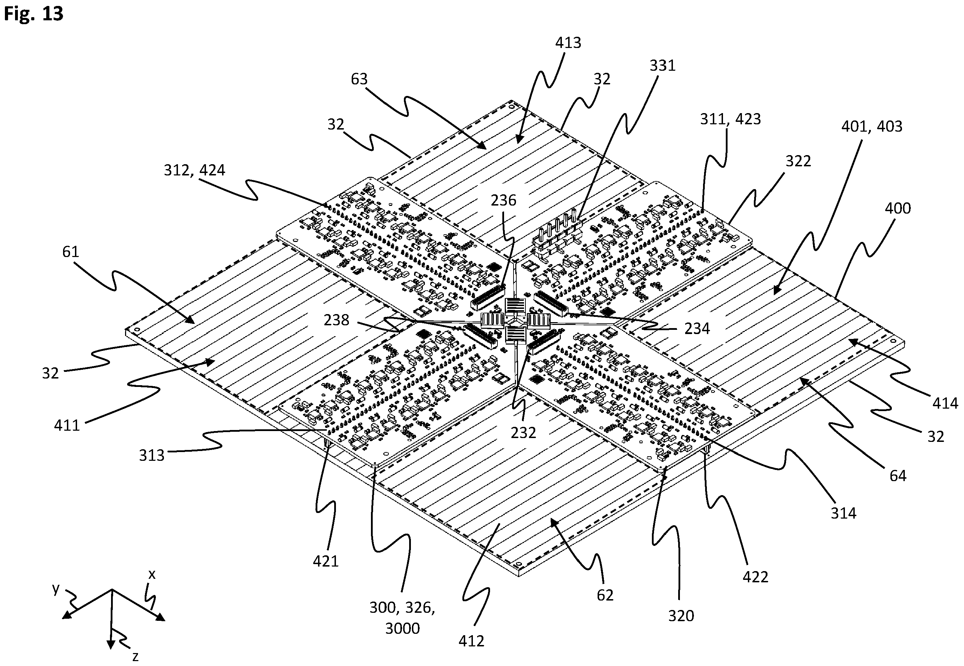

Figur 13 zeigt eine perspektivische Darstellung des in Figur 11 gezeigten Leistungsmoduls 300 und der in Figur 12 gezeigten Statoreinheit 400 mit Blickrichtung von unten auf das Leistungsmodul 300 und die Statoreinheit 400.

Das kreuzförmige Leistungsmodul 300 ist unterhalb (in Figur 13 oberhalb gezeichnet) der Statoreinheit 400 angeordnet und überdeckt in einer Unteransicht einen kreuzförmigen Bereich der Statoreinheit 400, in dem die fünfte bis achte Kontaktstruktur 421, 422, 423, 424 angeordnet ist. Die fünfte Kontaktstruktur 421 greift in die dritte Kontaktstruktur 313 ein und bildet einen ersten elektrischen und thermischen Kontakt aus. Die sechste Kontaktstruktur 422 greift in die vierte Kontaktstruktur 314 ein und bildet einen zweiten elektrischen und thermischen Kontakt aus. Die siebte Kontaktstruktur 423 greift in die erste Kontaktstruktur 311 ein und bildet einen dritten elektrischen und thermischen Kontakt aus. Die achte Kontaktstruktur 424 greift in die zweite Kontaktstruktur 312 ein und bildet einen vierten elektrischen und thermischen Kontakt aus.

Über dem ersten Statorsektor 411 ist ein erster Freiraum 61 ausgebildet. Zusätzlich können über dem zweiten Statorsektor 412 ein zweiter Freiraum 62, über dem dritten Statorsektor 413 ein dritter Freiraum 63 und über dem vierten Statorsektor 414 ein vierter Freiraum 64 ausgebildet sein. Die ersten bis vierten Freiräume 61, 62, 63, 64 sind in Figur 13 mittels strichlierter Linien markiert. Jeder der ersten bis vierten Freiräume 61, 62, 63, 64 ist über dem ersten bis vierten Statorsektor 411, 412, 413, 414 in einem Eckbereich der rechteckigen Statoreinheit 400 angeordnet, wobei der Eckbereich jeweils an die entlang der x-Richtung und an die entlang der y-Richtung verlaufenden ersten Seitenflächen 32 der Statoreinheit 400 angrenzt. Der erste bis vierte Freiraum 61, 62, 63, 64 ist rechteckig ausgebildet und erstreckt sich in x-und y-Richtung zwischen einer der ersten Seitenflächen 32 der Statoreinheit 400 und einer Außenkante des Leistungsmoduls 300.
An den ersten bis vierten Freiräumen 61, 62, 63, 64 ist eine Statorunterseite 403 der Statoreinheit 400 nicht durch das Leistungsmodul 300 verdeckt. Befindet sich das Statormodul in teilmontiertem Zustand, in dem die Statoreinheit 400 nur an dem Leistungsmodul 300 montiert ist, ist die Statorunterseite 403 der Statoreinheit 400 an den Freiräumen 61, 62, 63, 64 von unten her aus zugänglich.

Ein Gesamtflächenanteil aller ersten bis vierten Freiräume 61, 62, 63, 64 beträgt zusammen mehr als 30 % einer Gesamtfläche der Statorunterseite 403. Insbesondere beträgt der Gesamtflächenanteil der ersten bis vierten Freiräume 61, 62, 63, 64 mehr als 40 %, mehr als 50 %, insbesondere 52 % bis 56 %, insbesondere 54 % der Statorunterseite 403 der Statoreinheit 400.

Figur 14 zeigt einen vergrößerten Ausschnitt einer Schnittansicht entlang einer in Figur 1 gezeigten Schnittebene B-B durch das in Figur 1 gezeigte Planarantriebssystem 1.

Das Anschlussmodul ist elektrisch mit dem Sensormodul und dem Leistungsmodul verbunden. Im Betrieb des Planarantriebssystems 1 wird die Antriebsenergie vom Anschlussmodul an das Leistungsmodul übertragen. Das Leistungsmodul wird von der Verarbeitungseinheit auf Grundlage von über die Datenverbindung an die Verarbeitungseinheit bereitgestellten Informationen und der ermittelten Position des Läufers angesteuert und erzeugt mit der Antriebsenergie und auf Basis der Ansteuerung den Spulenstrom und steuert zur Erzeugung des Magnetfelds einen oder mehrere Spulenleiter 402 mit dem Spulenstrom an. Durch dabei in dem Spulenleiter 402 auftretende Widerstandsverluste wird eine zweite Wärme W₂ in die Statoreinheit 400 eingebracht. Durch die gute thermische Leitfähigkeit der Statoreinheit 400 erwärmt sich die Statoreinheit 400 durch die zweite Wärme W₂ gleichmäßig, sodass oberseitig und unterseitig die Statoreinheit 400 im Wesentlichen die gleiche Temperatur aufweist. Ein erster Anteil W_{2,T1} der zweiten Wärme W₂ wird mittels Konvektion und Wärmestrahlung an der Moduloberseite 8 an die Umgebung 48 übertragen.

Ein zweiter Anteil W_{2,T2}, ein dritter Anteil W_{2,T3} und ein vierter Anteil W_{2,T4} der zweiten Wärme W₂ wird durch die Kühleinrichtung 3 unterseitig aus der Statoreinheit 400 abgeführt. Dabei wird der zweite Anteil W_{2,T2} der zweiten Wärme W₂ über einen ersten Wärmepfad 605 von der Statoreinheit 400 unterseitig durch das Anliegen der ersten Kontaktfläche 572 der ersten Wärmeleitstruktur 530 an der Statorunterseite 403 an die erste Wärmeleitstruktur 530 übertragen. Die erste Wärmeleitstruktur 530 leitet den zweiten Anteil W_{2,T2} der zweiten Wärme W₂ entlang des ersten Wärmepfads 605 an den Deckelabschnitt 565 weiter.

Ist der erste Innenraum 564 mit der zweiten Vergussmasse 596 vollständig vergossen, so wird der dritte Anteil W_{2,T3} der zweiten Wärme W₂ entlang eines zweiten Wärmepfads 606 von der zweiten Vergussmasse 596 unterseitig aus der Statoreinheit 400 abgeführt und entlang des zweiten Wärmepfads 606 über die zweite Vergussmasse 596 an den Deckelabschnitt 565 übertragen. Im Deckelabschnitt 565 vereinen sich aufgrund der guten thermischen Leitfähigkeit des vierten Werkstoffs der erste und zweite Wärmepfad 605, 606 zu einem gemeinsamen Wärmepfad 608.

Der gemeinsame Wärmepfad 608 verläuft von oben über den Deckelabschnitt 565 nach unten hin zu der zweiten Wärmeleitstruktur 542. Durch die thermische Kopplung der zweiten Wärmeleitstruktur 542 mit dem Gehäuseboden 520 folgt der gemeinsame Wärmepfad 608 in den Gehäuseboden 520. Im Gehäuseboden 520 verläuft der gemeinsame Wärmepfad 608 hin zu dem ersten und zweiten Befestigungsabschnitt 557. Über den gemeinsamen Wärmepfad 608 wird der zweite und dritte Anteil W_{2,T2}, W_{2,T3} der zweiten Wärme W₂ an den ersten und zweiten Befestigungsabschnitt 557 übertragen und von dort aus in Richtung der Wärmesenke abgeleitet.

Der vierter Anteil W_{2,T4} der zweiten Wärme W₂ wird seitlich angrenzend zur ersten Seitenfläche 32 an der Statorunterseite 403 über die thermische Kopplung des zweiten Rands 513 mit dem Gehäusedeckel 510 aus der Statoreinheit 400 entlang eines dritten Wärmepfads 607 abgeführt. Der vierte Anteil W_{2,T4} der zweiten Wärme W₂ wird vom zweiten Rand 513 an den Deckelabschnitt 565 weitergeleitet. Der Deckelabschnitt 565 leitet angrenzend an die zweite Seitenfläche 34 den vierten Anteil W_{2,T4} der zweiten Wärme W₂ an den dritten Rand 512 entlang des dritten Wärmepfads 607 weiter. Der dritte Rand 512 ist thermisch durch das Anliegen an dem Gehäuseboden 520 gekoppelt. Der dritte Wärmepfad 607 verläuft auf kurzem Weg durch den Gehäuseboden 520 zum ersten und zweiten Befestigungsabschnitt 557 , an dem der vierte Anteil W_{2,T4} der zweiten Wärme W₂ aus dem Statormodul 2 zur Wärmesenke 5 ausgeleitet wird.

Dadurch, dass sowohl oberseitig als auch unterseitig die zweite Wärme W₂ aus der Statoreinheit 400 abgeführt wird, wird ein Überhitzen der vorzugsweise mehrlagig ausgebildeten Statoreinheit 400 zuverlässig verhindert. Insbesondere wird dabei auch eine hohe mechanische Tragfähigkeit der Statoreinheit 400 zum Tragen von Lasten aus dem Läufer sichergestellt.

Durch die thermische Kopplung des dritten Befestigungsabschnitts mit dem ersten Befestigungsabschnitt und des vierten Befestigungsabschnitts 591 mit dem zweiten Befestigungsabschnitt wird der zweite bis vierte Anteil W_{2,T2}, W_{2,T3}, W_{2,T4} der zweiten Wärme W₂ aus dem Gehäuseboden 520 in das Trägerelement 40, 41 abgeleitet. Das Trägerelement 40, 41 nimmt den zweiten bis vierten Anteil W_{2,T2}, W_{2,T3}, W_{2,T4} der zweiten Wärme W₂ über die erste und zweite Befestigungsabschnitte 556, 557 auf.

Das Trägerelement 40, 41 (vgl. Figuren 1 und 2) erwärmt innenseitig das im Trägerelement 40, 41 fließende Wärmeträgermedium 47. Durch die Förderpumpe 49 wird das Wärmeträgermedium 47 im Kreislauf zwischen den Trägerelementen 40, 41 und dem Wärmetauscher 44 über die erste bis vierte Fluidleitungen 51, 53, 54, 55 gefördert. Dadurch führt das Wärmeträgermedium 47 den zweiten bis vierten Anteil W_{2,T2}, W_{2,T3}, W_{2,T4} der zweiten Wärme W₂ aus dem Trägerelement 40, 41 hin zum Wärmetauscher 44. Der Wärmetauscher 44 überträgt den zweiten bis vierten Anteil W_{2,T2}, W_{2,T3}, W_{2,T4} der zweiten Wärme W₂ von der Primärseite 45 an die Sekundärseite 46, sodass das Wärmeträgermedium 47 im Wärmetauscher 44 gekühlt wird. Dadurch kann zuverlässig das Statormodul 2 im Betrieb der Statoreinheit 400 vor Überhitzung geschützt werden.

Durch die thermische Leitfähigkeit des Gehäusebodens 520 und der Modulabdeckung 110 kann ein Teil des zweiten bis vierten Anteils W_{2,T2}, W_{2,T3}, W_{2,T4} der zweiten Wärme W₂ von dem Gehäuseboden 520 von dem gemeinsamen Wärmepfad 607 und dem dritten Wärmepfad 608 an die Modulabdeckung 110 abgeleitet werden. Der an der Modulabdeckung 110 übertragene Teil der zweiten Wärme W₂ wird ähnlich wie die erste Wärme aus der Modulabdeckung 110 an die Umgebung 48 abgegeben.

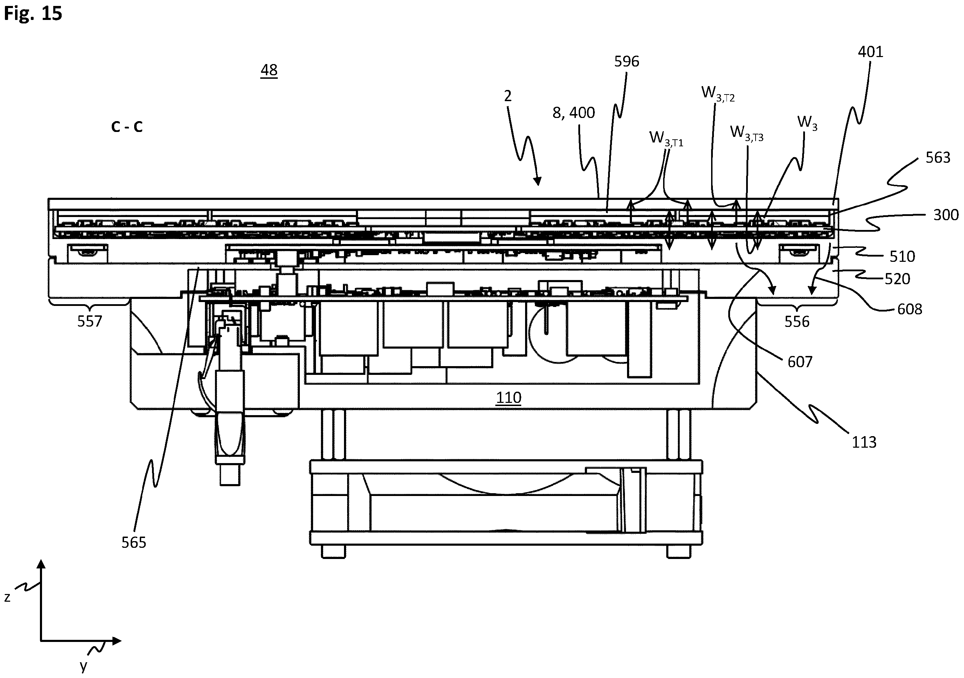

Figur 15 zeigt eine Schnittansicht entlang einer in Figur 1 gezeigten Schnittebene C-C durch das Statormodul 2.

Im Betrieb des Statormoduls 2 erwärmt sich neben der Statoreinheit 400 auch das Leistungsmodul 300 auf Grund von Widerstandsverlusten in dem Leistungsmodul 300. Dabei erzeugt das Leistungsmodul 300 eine dritte Wärme W₃. Dabei wird ein erster Anteil W_{3,T1} der dritten Wärme W₃ über die zweite Vergussmasse 596 nach oben hin in Richtung der Moduloberseite 8 zur Statoreinheit 400 übertragen. Der erste Anteil W_{3,T1} der dritten Wärme W₃ wird von der Statoreinheit 400 aufgenommen.

Ferner wird ein zweiter Anteil W_{3,T2} der dritten Wärme W₃ über die erste bis vierte Kontaktstruktur an die Statoreinheit 400 direkt übertragen. Die thermisch gute Leitfähigkeit der Statoreinheit 400 stellt sicher, dass der zweite Anteil W_{3,T2} der dritten Wärme W₃ in der Statoreinheit 400 seitlich von der Kontaktstruktur in der zweiten Leiterplatte 401 verteilt wird. Dadurch, dass elektrische und elektronische Komponenten des Leistungsmoduls 300, insbesondere H-Brückenschaltungen, räumlich sehr nahe an einer der ersten bis vierten Kontaktstruktur angeordnet sind, kann über die Kontaktstruktur eine gute Kühlung dieser Komponenten erzielt werden.

Dadurch dass die Statoreinheit 400 thermisch sehr gut leitend ausgebildet ist, kann der erste Anteil W_{3,T1} und der zweite Anteil W_{3,T2} der dritten Wärme W₃ wie auch die zweite Wärme W₂ von der Statoreinheit 400 wie zu Figur 14 beschrieben aus der Statoreinheit 400 abgeführt werden.

Ein dritter Anteil W_{3,T3} der dritten Wärme W₃ des Leistungsmoduls 300 wird über die zweite Vergussmasse 596 nach unten hin zum Gehäusedeckel 510 übertragen. Der Gehäusedeckel 510 nimmt den dritten Anteil W_{3,T3} der dritten Wärme W₃ des Leistungsmoduls 300 beispielsweise am Deckelabschnitt 565 auf. Der dritte Anteil W_{3,T3} der dritten Wärme W₃ kann dann über den oben beschriebenen gemeinsamen Wärmepfad 607 und dem dritten Wärmepfad 608 zusammen mit dem zweiten und dritten Anteil der zweiten Wärme aus dem Statormodul 2 dadurch abgeführt werden, dass der Deckelabschnitt 565 in Querrichtung und in Längsrichtung den dritten Anteil W_{3,T3} zu dem gemeinsamen Wärmepfad 608 ableitet.

Das Ableiten des dritten Anteils W_{3,T3} der dritten Wärme W₃ über den dritten Befestigungsabschnitte 556 hat ferner den Vorteil, dass sowohl oberseitig als auch unterseitig das Leistungsmodul 300 gekühlt wird, sodass zuverlässig eine Überhitzung des Leistungsmoduls 300 vermieden werden kann. Insbesondere ist die rückseitige Entwärmung für das Leistungsmodul 300 deshalb wichtig, da durch die Einbettung des Leistungsmoduls 300 in die zweite Vergussmasse 596 eine Kühlung des Leistungsmoduls 300 durch Konvektion im dritten Innenraum 118 nicht möglich ist.

Figur 16 zeigt eine perspektivische Schnittansicht entlang einer in Figur 1 gezeigten Schnittebene A-A durch ein Planarantriebssystem 1 gemäß einer zweiten Ausführungsform.

Das Planarantriebssystem 1 ist im Wesentlichen identisch zu dem in den Figuren 1 bis 16 gezeigten Planarantriebssystem 1 ausgebildet. Im Folgenden wird ausschließlich nur auf die Unterschiede gegenüber dem in den Figuren 1 bis 16 gezeigten Planarantriebssystem 1 eingegangen.

Das Planarantriebssystem 1, das in Figur 16 gezeigt ist, ist dahingehend vereinfacht ausgebildet, dass die in Figur 16 gezeigte Kühleinrichtung 3 besonders einfach ausgebildet ist. Die Kühleinrichtung 3 weist in der Ausführungsform zwar eine Zwangskühlung für den dritten und vierten Befestigungsabschnitt 590, 591 auf, jedoch wird diese dadurch erzielt, dass an einem Ende der Trägerelemente 40, 41 jeweils ein zweiter Lüfter 150 vorgesehen ist und auf den Kühlkreislauf 43, wie in Fig. 1 beschrieben, verzichtet wird. Dabei kann die Anzahl der vorgesehenen zweiten Lüfter 150 der Anzahl der Trägerelemente 40, 41 entsprechen. Auch kann die Anzahl der zweiten Lüfter 150 größer als die Anzahl der Trägerelemente 40, 41 sein, indem beispielsweise an jedem der beiden Enden der Trägerelemente 40, 41 jeweils ein zweiter Lüfter 150 vorgesehen ist. Zusätzlich oder alternativ kann aber auch auf eine Anordnung von zweiten Lüftern 150 an einzelnen Trägerelementen 40, 41 verzichtet werden.

Bei Aktivierung des zweiten Lüfters 150 wird als Wärmeträgermedium 47 Luft 139 aus der Umgebung 48 in den jeweiligen Leitungsraum 71, 78gefördert. Das Wärmeträgermedium 47 durchströmt das Trägerelement 40, 41 und nimmt die an das Trägerelement 40, 41 übertragenen Anteile der zweiten und dritten Wärme W₂, W₃ auf und führt sie aus dem Trägerelement 40, 41 zur Kühlung des Trägerelements 40, 41 ab.

Diese Ausgestaltung hat den Vorteil, dass das Planarantriebssystem 1 besonders einfach und kostengünstig ausgebildet ist. Ferner kann der zweite Lüfter 150 auf einfache Weise auch bei bestehenden Systemen nachgerüstet werden. Dies ist insbesondere dann von Vorteil, wenn sich beispielsweise durch eine geänderte Anwendung ein Belastungsprofil des Statormoduls 2 ändert, insbesondere eine Belastung ansteigt, die beispielsweise nicht mehr über den ersten Lüfter 112 aus dem Statormodul 2 abgeführt werden kann.

Alternativ ist auch denkbar, dass auf den zweiten Lüfter 150 vollständig verzichtet wird und die in den dritten und vierten Befestigungsabschnitt 590, 591 eingebrachten Anteile der zweiten und dritten Wärme W₂, W₃ ausschließlich über Konvektion von dem Trägerelement 40, 41 unterseitig und seitlich an die Umgebung 48 übergeben wird und somit das Statormodul 2 an den ersten und zweiten Befestigungsabschnitten 556, 557 passiv gekühlt wird. Besonders von Vorteil bei der passiven Kühlung des ersten und zweiten Befestigungsabschnitts ist, wenn der erste Lüfter, wie in Figur 2 beschrieben, vorgesehen ist. Diese Ausgestaltung hat den Vorteil, dass das Planarantriebssystem 1 besonders einfach und kostengünstig ausgebildet ist. Diese Ausgestaltung ist insbesondere auch von Vorteil, wenn optional der zweite Lüfter 150 später nachgerüstet werden soll.

In einer Weiterbildung der in Figur 16 gezeigten Ausgestaltung wird auf den zweiten Lüfter 150 verzichtet. Das erste Trägerelement 40 und das zweite Trägerelement 41 weisen als Trägerprofil ein plattenförmiges Vollprofil auf.

Von besonderem Vorteil ist, wenn das erste Trägerelement 40 und das zweite Trägerelement 41 Teil einer unterseitig des Statormoduls 2 angeordneten Trägerplatte (nicht dargestellt) sind, wobei das erste Trägerelement 40 einstückig und materialeinheitlich mit dem zweiten Trägerelement 41 ausgebildet sind. Durch die Verwendung des Vollprofils für das erste und zweite Trägerelement 40, 41 kann das erste und zweite Trägerelement 40, 41 in z-Richtung schmaler als in Figur 16 gezeigt ausgebildet sein. Die in das erste und zweite Trägerelement 40, 41 eingebrachten Anteile der zweiten und dritten Wärme W₂, W₃ leitet das erste und zweite Trägerelement 40, 41 an die Umgebung 48, die die Wärmesenke 5 ausgebildet, ab.

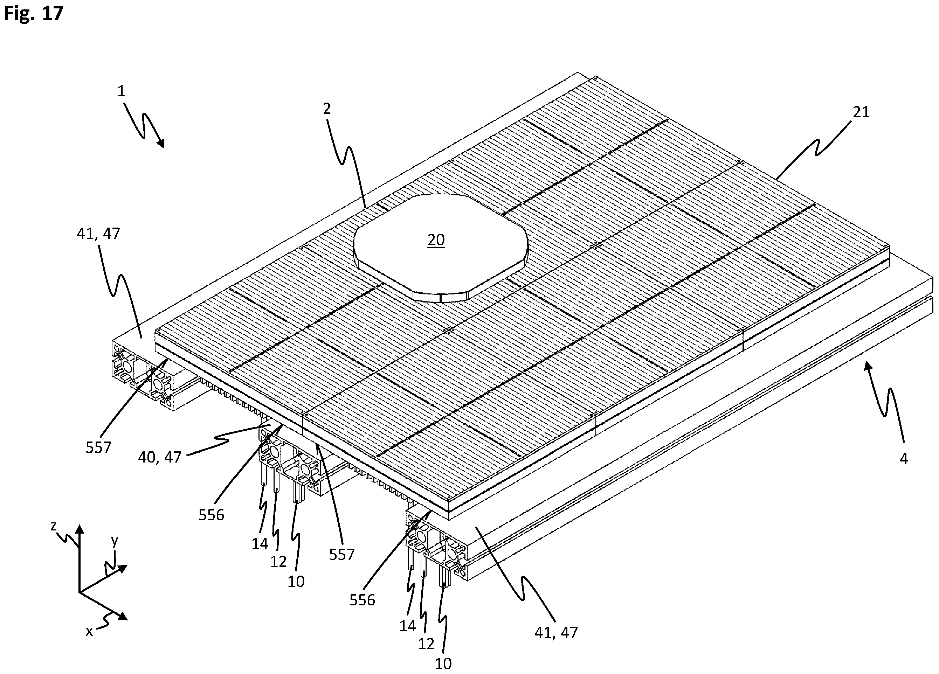

Figur 17 zeigt eine perspektivische Darstellung eines weiteren Planarantriebssystems 1 gemäß mit Blickrichtung von oben auf das Planarantriebssystem 1.

Soweit nicht anders erwähnt, ist das Planarantriebssystem 1 in Figur 17 identisch zu dem in den Figuren 1 bis 16 erläuterten Planarantriebssystem 1 ausgebildet. Auf die Unterschiede wird im Folgend eingegangen.

Das Planarantriebssystem 1 weist eine Vielzahl, insbesondere eine Anzahl von sechs, von in den Figuren 1 bis 16 erläuterten Statormodulen 2 auf, die nebeneinander an den Seitenflächen aneinander anliegend angeordnet sind. Unterseitig ist zur Abstützung der Statormodule 2 die Trägereinrichtung 4 vorgesehen. Die ersten und zweiten Trägerelemente 40, 41 sind hierbei in y-Richtung so breit ausgebildet, dass oberseitig auf jeweils einem Trägerelement 40, 41 in y-Richtung drei Statormodule 2 in einer Reihe aufliegen. Ferner weist das Planarantriebssystem 1 wenigstens zwei Spalten von Statormodulen 2 auf. Dabei liegt beispielsweise ein erstes der Statormodule 2 auf dem ersten Trägerelement 40 mit dem ersten Befestigungsabschnitt 556 und das neben dem Statormodul 2 angeordnete weitere Statormodul 2 mit dem zweiten Befestigungsabschnitt 557 auf dem ersten Trägerelement 40 auf. Dadurch, dass mit dem ersten und zweiten Befestigungsabschnitt 566, 567 jeweils zwei Statormodule 2 benachbart nebeneinander auf dem Trägerelement 40, 41 aufliegen, kann die Trägereinrichtung 4 besonders einfach und kostengünstig ausgebildet werden. Ferner wird besonders wenig Wärmeträgermedium 47 benötigt, um die Statormodule 2 unterseitig zu kühlen.

Es wird darauf hingewiesen, dass die Anordnung der Statormodule 2 auf der Trägereinrichtung 4 in Figur 17 beispielhaft ist. Insbesondere ist hierbei auch denkbar, dass die Statormodule 2 andersartig, beispielsweise über eine große Fläche sich erstreckend, angeordnet sind. Auch kann die Trägereinrichtung 4 entsprechend zu der Anzahl von Reihen von Statormodulen 2 erweitert werden, sodass eine Vielzahl von Trägerelementen 40, 41 vorgesehen sind. In der Ausführungsform sind die Trägerelemente 40, 41 jeweils in y-Richtung versetzt zueinander angeordnet und verlaufen parallel zueinander.

Selbstverständlich können zusätzlich zur Abstützung einer Vielzahl von Statormodulen 2 auch die Trägerelemente 40, 41 kreuzförmig angeordnet sein. Alternativ ist auch denkbar, dass zusätzlich zu den gezeigten Trägerelementen 40, 41 auch Zwischenabstützungen vorgesehen sind, die die Trägerelemente 40, 41 abstützen.

Auch kann entgegen der in Figur 17 gezeigten Ausgestaltung nur ein Teil der Trägerelemente 40, 41 von dem Wärmeträgermedium 47 durchströmt werden. Auch ist denkbar, dass die in Figur 17 gezeigte Ausführungsform mit der in Figur 17 erläuterten Variante kombiniert wird, sodass auf eine Zwangskühlung mittels des Wärmeträgermediums 47 der Trägerelemente 40, 41 verzichtet wird, und unterseitig die Statormodule 2 ausschließlich konvektiv über die Trägerelemente 40, 41 gekühlt werden.

Ferner kann auch vorgesehen sein, dass die Trägerelemente 40, 41 eine weitere Kühlrippenstruktur aufweisen, um eine besonders hohe Kühlleistung konvektiv bereitzustellen. Von besonderem Vorteil ist hierbei, wenn die Kühlrippenstruktur an dem Trägerelement 40, 41 unterseitig in einem Bereich angeordnet ist, der in einem Strömungsbereich des ersten Lüfters liegt.

### Bezugszeichenliste

- 1: Planarantriebssystem
- 2: Statormodul
- 3: Kühleinrichtung
- 4: Trägereinrichtung
- 5: Wärmesenke
- 8: Moduloberseite
- 9: Modulunterseite
- 10: Energieversorgungsleitung
- 11: Anschlussmittel
- 12: Datenleitung
- 14: weitere Datenleitung
- 20: Läufer
- 21: weiteres Statormodul
- 32: erste Seitenfläche (der Statoreinheit)
- 34: zweite Seitenfläche (des Gehäusedeckels)
- 36: dritte Seitenfläche (des Gehäusebodens)
- 40: erstes Trägerelement
- 41: zweites Trägerelement
- 42: Maschinenbett
- 43: Kühlkreislauf
- 44: Wärmetauscher
- 45: Primärseite
- 46: Sekundärseite
- 47: Wärmeträgermedium
- 48: Umgebung
- 49: Förderpumpe
- 51: erste Fluidleitung
- 52: Ausgangsseite
- 53: zweite Fluidleitung
- 54: dritte Fluidleitung
- 55: vierte Fluidleitung
- 56: Eingangsseite
- 61: erster Freiraum
- 62: zweiter Freiraum
- 63: dritter Freiraum
- 64: vierter Freiraum
- 70: erstes Trägerprofil
- 71: erster Leitungsraum
- 74: erste Befestigungsfläche
- 75: erster Befestigungsbereich
- 76: zweites Trägerprofil
- 77: zweiter Befestigungsbereich
- 78: zweiter Leitungsraum
- 81: zweite Befestigungsfläche
- 100: Anschlussmodul
- 110: Modulabdeckung
- 112: erster Lüfter
- 113: Kühlrippenstruktur
- 114: Kühlrippe
- 115: erste Trägerelementseitenfläche
- 116: zweite Trägerelementseitenfläche
- 117: Unterseite des Trägerelements
- 118: dritter Innenraum
- 121: erste Kontakteinheit
- 122: zweite Kontakteinheit
- 133: erster Kühlrippenabschnitt
- 134: zweiter Kühlrippenabschnitt
- 135: Unterseite der Modulabdeckung
- 137: erste Aussparung
- 139: Luft
- 140: Spalt
- 142: Durchführung
- 143: erste Vergussmasse
- 150: zweiter Lüfter
- 200: Sensormodul
- 201: erste Leiterplatte
- 202: erste Verarbeitungseinheit
- 203: erste Anlagefläche
- 204: zweite Verarbeitungseinheit
- 205: zweite Anlagefläche
- 206: Positionserfassungseinheit
- 207: dritte Kontakteinheit
- 220: Verbindungsausschnitt
- 231: erstes Koppelelement
- 232: erstes Gegenelement
- 233: zweites Koppelelement
- 234: zweites Gegenelement
- 235: drittes Koppelelement
- 236: drittes Gegenelement
- 237: viertes Koppelelement
- 238: viertes Gegenelement
- 240: Gehäusedurchlass
- 241: Steg
- 242: Randbereich
- 243: Mittenbereich der ersten Leiterplatte
- 265: Isolationsschicht
- 300: Leistungsmodul
- 301: Unterseite des Leitungsmoduls
- 311: erste Kontaktstruktur
- 312: zweite Kontaktstruktur
- 313: dritte Kontaktstruktur
- 314: vierte Kontaktstruktur
- 320: erste Moduleinheit
- 321: erstes Verbindungsmittel
- 322: zweite Moduleinheit
- 323: zweites Verbindungsmittel
- 324: dritte Moduleinheit
- 325: drittes Verbindungsmittel
- 326: vierte Moduleinheit
- 327: viertes Verbindungsmittel
- 331: vierte Kontakteinheit
- 400: Statoreinheit
- 401: zweite Leiterplatte
- 402: Spulenleiter
- 403: Statorunterseite
- 411: erster Statorsektor
- 412: zweiter Statorsektor
- 413: dritter Statorsektor
- 414: vierter Statorsektor
- 421: fünfte Kontaktstruktur
- 422: sechste Kontaktstruktur
- 423: siebte Kontaktstruktur
- 424: achte Kontaktstruktur
- 500: Kühleinheit
- 501: Modulgehäuse
- 510: Gehäusedeckel
- 511: dritte Aussparung
- 512: dritter Rand (an Unterseite des Gehäusedeckels)
- 513: zweiter Rand (an Oberseite des Gehäusedeckels)
- 520: Gehäuseboden
- 521: erste Verbindungsöffnung
- 522: zweite Verbindungsöffnung
- 523: dritte Verbindungsöffnung
- 524: vierte Verbindungsöffnung
- 525: fünfte Verbindungsöffnung
- 526: sechste Verbindungsöffnung
- 527: siebte Verbindungsöffnung
- 530: erste Wärmeleitstruktur
- 534: Gehäusebodenoberseite
- 542: zweite Wärmeleitstruktur
- 543: Mittelbereich des Gehäusedeckels
- 544: erster Zwischenraum
- 553: Deckeloberseite
- 554: Deckelunterseite
- 555: Bodenoberseite
- 556: erster Befestigungsabschnitt
- 557: zweiter Befestigungsabschnitt
- 560: zweiter Innenraum
- 561: zweite Aussparung
- 562: zweiter Aussparungsgrund
- 563: erster Rand
- 564: erster Innenraum
- 565: Deckelabschnitt
- 566: erster Gehäuseabschnitt
- 567: zweiter Gehäuseabschnitt
- 568: dritter Gehäuseabschnitt
- 569: vierter Gehäuseabschnitt
- 570: fünfter Gehäuseabschnitt
- 571: erstes Wärmeleitelement
- 572: erste Kontaktfläche
- 577: zweite Aufnahme
- 578: erste Verarbeitungseinheitsaufnahme
- 579: zweite Verarbeitungseinheitsaufnahme
- 581: zweites Wärmeleitelement
- 582: drittes Wärmeleitelement
- 583: viertes Wärmeleitelement
- 584: zweite Kontaktfläche
- 585: erste Diagonale
- 586: zweite Diagonale
- 587: dritte Kontaktfläche
- 588: Verbindungsdurchlass
- 589: vierte Kontaktfläche
- 590: dritter Befestigungsabschnitt
- 591: vierter Befestigungsabschnitt
- 592: zweites Befestigungsmittel
- 593: drittes Befestigungsmittel
- 594: erste Aufnahme
- 595: Einfüllöffnung
- 596: zweite Vergussmasse
- 597: zweiter Zwischenraum
- 598: erster Aufnahmegrund
- 599: zweiter Aufnahmegrund
- 600: erste Wärmeleitelementseitenfläche
- 601: zweite Wärmeleitelementseitenfläche
- 602: dritte Wärmeleitelementseitenfläche
- 603: vierte Wärmeleitelementseitenfläche
- 604: fünfte Wärmeleitelementseitenfläche
- 605: erster Wärmepfad
- 606: zweiter Wärmepfad
- 607: dritter Wärmepfad
- 608: gemeinsamer Wärmepfad
- 620: erste Reihe
- 621: zweite Reihe
- 1000: weitere Steuereinheit
- 3000: Steuereinheit
- W₁: erste Wärme (abgegeben vom Anschlussmodul)
- W₂: zweite Wärme (abgegeben von der Statoreinheit)
- W_{2,T1}: erster Anteil der zweiten Wärme
- W_{2,T2}: zweiter Anteil der zweiten Wärme
- W_{2,T3}: dritter Anteil der zweiten Wärme
- W_{2,T4}: vierter Anteil der zweiten Wärme
- W₃: dritte Wärme (abgegeben von dem Leistungsmodul)
- W_{3,T1}: erster Anteil der dritten Wärme
- W_{3,T2}: zweiter Anteil der dritten Wärme
- W_{3,T3}: dritter Anteil der dritten Wärme

## Patentansprüche

1. Statormodul (2) für ein Planarantriebssystem (1)
- wobei das Statormodul (2) eine sich in einer Ebene erstreckende Moduloberseite (8) und eine zur Moduloberseite (8) gegenüberliegende Modulunterseite (9), eine Statoreinheit (400) und eine Kühleinheit (500) aufweist,
- wobei die Statoreinheit (400) wenigstens einen mit einem Antriebsstrom bestrombaren Spulenleiter (402) zur Erzeugung eines Magnetfelds zum Antrieb eines an der Moduloberseite (8) positionierbaren Läufers (20) des Planarantriebssystems (1) aufweist,
- wobei die Statoreinheit (400) an der Moduloberseite (8) angeordnet ist,
**dadurch gekennzeichnet, dass**
- die Kühleinheit (500) einen Gehäusedeckel (510) und einen Gehäuseboden (520) aufweist,
- wobei der Gehäusedeckel (510) zwischen der Statoreinheit (400) und dem Gehäuseboden (520) angeordnet ist,
- wobei der Gehäusedeckel (510) an einer Deckeloberseite (553) des Gehäusedeckels (510) zumindest thermisch mit einer Statorunterseite (403) der Statoreinheit (400) verbunden ist,
- wobei der Gehäusedeckel (510) auf einer zur Statoreinheit (400) abgewandten Deckelunterseite (554) thermisch mit dem Gehäuseboden (520) verbunden ist,
- wobei der Gehäuseboden (520) an der Modulunterseite (9) angeordnet ist und an der Modulunterseite (9) einen ersten Befestigungsabschnitt (556) aufweist,
- wobei der erste Befestigungsabschnitt (556) thermisch mit einer Wärmesenke (5) verbindbar ist,
- wobei der Gehäusedeckel (510) ausgebildet ist, Wärme (W₂, W₃) aus der Statoreinheit (400) an den Gehäuseboden (520) zu leiten,
- wobei der Gehäuseboden (520) ausgebildet ist, die Wärme (W₂, W₃) vom Gehäusedeckel (510) zumindest teilweise an den ersten Befestigungsabschnitt (556) zu leiten.

2. Statormodul (2) nach Anspruch 1,
- wobei der Gehäusedeckel (510) auf der zur Statoreinheit (400) zugewandten Seite einen ersten Gehäuseabschnitt (566) und einen zweiten Gehäuseabschnitt (567) aufweist,
- wobei der erste Gehäuseabschnitt (566) und der zweite Gehäuseabschnitt (567) aneinander angrenzen,
- wobei der Gehäusedeckel (510) an dem ersten Gehäuseabschnitt (566) wenigstens eine erste Wärmeleitstruktur (530) aufweist,
- wobei die erste Wärmeleitstruktur (530) wenigstens ein erstes Wärmeleitelement (571) umfasst,
- wobei das erste Wärmeleitelement (571) sich in Richtung der Statoreinheit (400) erstreckt und an einer Kontaktfläche (572) an der Statoreinheit (400) anliegt sowie thermisch mit der Statoreinheit (400) gekoppelt ist,
- wobei in dem zweiten Gehäuseabschnitt (567) eine Steuereinheit (3000) des Statormoduls (2) angeordnet ist.

3. Statormodul nach Anspruch 2,
- wobei die erste Wärmeleitstruktur (530) eine Vielzahl von ersten Wärmeleitelementen (571) umfasst,
- wobei die ersten Wärmeleitelemente (571) beabstandet zueinander angeordnet sind
- und/oder
- wobei der zweite Gehäuseabschnitt (567) an der Deckeloberseite (553) eben ausgebildet ist,
- wobei der Gehäusedeckel (510) auf der zur Statoreinheit (400) zugewandten Seite einen Rand (513) aufweist,
- wobei der Rand (513) vorzugsweise umlaufend am Gehäusedeckel (510) ausgebildet ist und den Innenraum (564) seitlich begrenzt,
- wobei der Rand (513) sich in Richtung der Statoreinheit (400) erstreckt,
- wobei die erste Wärmeleitstruktur (530) zwischen dem zweiten Gehäuseabschnitt (567) und dem Rand (513) angeordnet ist,
- wobei sich die erste Wärmeleitstruktur (530) über den gesamten ersten Gehäuseabschnitt (566) zwischen dem Rand (513) und dem zweiten Gehäuseabschnitt (567) erstreckt.

4. Statormodul (2) nach Anspruch 2 oder 3,
- wobei das erste Wärmeleitelement (571) stiftförmig ausgebildet ist,
- wobei der Gehäusedeckel (510) einen plattenförmig ausgebildeten Deckelabschnitt (565) aufweist,
- wobei der Deckelabschnitt (565) beabstandet zu der Statoreinheit (400) angeordnet ist,
- wobei mit einer zur Kontaktfläche (572) gegenüberliegenden Seite jeweils das erste Wärmeleitelement (571) mit dem Deckelabschnitt (565) verbunden ist,
- wobei das erste Wärmeleitelement (571) geneigt, vorzugsweise senkrecht, zu dem Deckelabschnitt (565) ausgerichtet ist.

5. Statormodul (2) nach Anspruch 4,
- wobei der Deckelabschnitt (565) und die Statoreinheit (400) einen ersten Innenraum (564) des Statormoduls (2) begrenzen,
- wobei der erste Innenraum (564) mit einer thermisch leitfähigen und elektrisch isolierenden Vergussmasse (596) derart verfüllt ist, dass die Steuereinheit (3000) in der Vergussmasse (596) eingebettet ist und die Vergussmasse (596) ausgebildet ist, Wärme aus der Statoreinheit (400) und/oder der Steuereinheit (3000) an den Gehäusedeckel (510) zu übertragen.

6. Statormodul (2) nach einem der vorhergehenden Ansprüche,
- wobei der Gehäusedeckel (510) einen plattenförmig ausgebildeten Deckelabschnitt (565), auf einer zum Gehäuseboden (520) zugewandten Seite einen weiteren Rand (512), eine zweite Wärmeleitstruktur (542) und einen Mittelbereich (543) aufweist,
- wobei der weitere Rand (512) an dem Deckelabschnitt (565) angeordnet ist und sich in Richtung des Gehäusebodens (520) erstreckt,
- wobei die zweite Wärmeleitstruktur (542) sich nach innen an den weiteren Rand (512) anschließt und wenigstens ein zweites Wärmeleitelement (581) aufweist,
- wobei das zweite Wärmeleitelement (581) auf der zum Gehäuseboden (520) abgewandten Seite mit dem Deckelabschnitt (565) verbunden ist und auf der dem Gehäuseboden (520) zugewandten Seite thermisch mit dem Gehäuseboden (520) verbunden ist,
- wobei innenseitig der zweiten Wärmeleitstruktur (542) der Mittelbereich (543) angeordnet ist und durch die zweite Wärmeleitstruktur (542) umschlossen ist,
- wobei der Mittelbereich (543) plan ausgebildet ist und beabstandet zum Gehäuseboden (520) angeordnet ist.

7. Statormodul (2) nach Anspruch 6,
- aufweisend ein Sensormodul (200),
- wobei der Gehäusedeckel (510) und der Gehäuseboden (520) einen zweiten Innenraum (560) begrenzen,
- wobei in dem zweiten Innenraum (560) das Sensormodul (200) angeordnet ist,
- wobei das Sensormodul (200) elektrisch mit der Steuereinheit (3000) verbunden ist,
- wobei das Sensormodul (200) wenigstens eine Positionserfassungseinheit (206) zur Erfassung eines Magnetfelds des Läufers (20), eine Leiterplatte (201) und wenigstens eine Verarbeitungseinheit (202) aufweist,
- wobei die Positionserfassungseinheit (206) mit der Leiterplatte (201) verbunden ist,
- wobei die Leiterplatte (201) die Verarbeitungseinheit (202) mit der Positionserfassungseinheit (206) verbindet,
- wobei die Verarbeitungseinheit (202) auf einer dem Gehäusedeckel (510) zugewandten Seite der Leiterplatte (201) angeordnet ist,
- wobei in dem Deckelabschnitt (565) auf einer zum Gehäuseboden (520) zugewandten Seite eine Verarbeitungseinheitsaufnahme (578) angeordnet ist,
- wobei die Verarbeitungseinheitsaufnahme(578) korrespondierend zu der Verarbeitungseinheit (202) ausgebildet ist,
- wobei die Verarbeitungseinheit (202) zumindest abschnittsweise in die Verarbeitungseinheitsaufnahme (578) eingreift,
- wobei vorzugsweise die Verarbeitungseinheit (202) thermisch mit dem Deckelabschnitt (565) verbunden ist,
- wobei der Deckelabschnitt (565) ausgebildet ist, zur Kühlung der Verarbeitungseinheit (202) Wärme aus der Verarbeitungseinheit (202) abzuführen und an den Gehäuseboden (520) zu leiten,
und/oder
- wobei die Leiterplatte (201) wenigstens einen Gehäusedurchlass (240) aufweist,
- wobei der Gehäusedurchlass (240) zumindest abschnittsweise korrespondierend zu dem zweiten Wärmeleitelement (581) ausgebildet ist,
wobei das zweite Wärmeleitelement (581) den Gehäusedurchlass (240) durchgreift und stirnseitig an dem Gehäuseboden (520) anliegt,
und/oder
- wobei die zweite Wärmeleitstruktur (542) mehrere zweite Wärmeleitelemente (581) aufweist,
- wobei die zweiten Wärmeleitelemente (581) in einem vordefinierten Abstand, vorzugsweise in regelmäßigem Abstand, zueinander angeordnet sind,
- wobei zwischen den zweiten Wärmeleitelementen (581) ein Zwischenraum (544) angeordnet ist,
- wobei im Zwischenraum (544) zumindest abschnittsweise die Leiterplatte (201) angeordnet ist.

8. Statormodul (2) nach einem der vorhergehenden Ansprüche,
- aufweisend eine Modulabdeckung (110) und eine weitere Steuereinheit (1000),
- wobei der Gehäuseboden (520) und die Modulabdeckung (110) einen dritten Innenraum (118) begrenzen,
- wobei in dem dritten Innenraum (118) die weitere Steuereinheit (1000) angeordnet ist,
- wobei die Modulabdeckung (110) auf einer zum Gehäusedeckel (510) abgewandten Seite und versetzt zu dem ersten Befestigungsabschnitt (556) angeordnet ist,
- wobei die Modulabdeckung (110) thermisch mit der weiteren Steuereinheit (1000) verbunden ist,
- wobei auf einer zum Gehäuseboden (520) abgewandten Seite die Modulabdeckung (110) eine Kühlrippenstruktur (113) aufweist.

9. Statormodul (2) nach Anspruch 8,
- wobei der Gehäuseboden (520) an der Modulunterseite (9) einen zweiten Befestigungsabschnitt (557) aufweist,
- wobei die Modulabdeckung (110) zwischen dem ersten Befestigungsabschnitt (556) und dem zweiten Befestigungsabschnitt (557) angeordnet ist,
- wobei der zweite Befestigungsabschnitt (557) thermisch mit der Wärmesenke (5) koppelbar ist und ausgebildet ist, Wärme (W₂, W₃) an die Wärmesenke (5) zu leiten,
- wobei der erste Befestigungsabschnitt (556) und der zweite Befestigungsabschnitt (557) in einer gemeinsamen Ebene angeordnet sind und parallel zu der Moduloberseite (8) ausgerichtet sind
- und/oder
- wobei der dritte Innenraum (118) mit einer weiteren Vergussmasse (143) derart verfüllt ist, dass die weitere Steuereinheit (1000) in der Vergussmasse (143) eingebettet ist,
- wobei die weitere Vergussmasse (143) thermisch leitend ausgebildet ist und die weitere Steuereinheit (1000) thermisch mit der Modulabdeckung (110) verbindet,
- wobei die Modulabdeckung (110) thermisch leitend und ausgebildet ist, eine weitere Wärme (W₁) der weiteren Vergussmasse (143) an die Kühlrippenstruktur (113) zu übertragen, und die Kühlrippenstruktur (113) ausgebildet ist, die weitere Wärme (W₁) an eine Umgebung (48) zu übertragen.

10. Planarantriebssystem (1)
- aufweisend ein Statormodul (2), eine Kühleinrichtung (3) und eine Trägereinrichtung (4),
- wobei das Statormodul (2) nach einem der vorgehenden Ansprüche ausgebildet ist,
- wobei die Trägereinrichtung (4) wenigstens ein erstes Trägerelement (40) umfasst,
- wobei das erste Trägerelement (40) mechanisch mit dem Statormodul (2) verbunden ist und das Statormodul (2) trägt,
- wobei das erste Trägerelement (40) auf einer dem Statormodul (2) zugewandten Seite einen dritten Befestigungsabschnitt (590) aufweist,
- wobei der erste Befestigungsabschnitt (556) und der dritte Befestigungsabschnitt (590) thermisch miteinander gekoppelt sind und ausgebildet sind, zumindest einen Anteil der Wärme (W₂, W₃) von dem ersten Befestigungsabschnitt (556) an den dritten Befestigungsabschnitt (590) abzuleiten,
- wobei das erste Trägerelement (40) ausgebildet ist, den Anteil der Wärme(W₂, W₃) von dem dritten Befestigungsabschnitt abzuleiten.

11. Planarantriebssystem (1) nach Anspruch 10,
- wobei die Kühleinrichtung (3) wenigstens ein Wärmeträgermedium (47) aufweist,
- wobei das erste Trägerelement (40) wenigstens einen ersten Leitungsraum (71) fluidisch abgedichtet gegenüber einer Umgebung (48) des ersten Trägerelements (40) begrenzt,
- wobei das Wärmeträgermedium (47) in dem ersten Leitungsraum (71) angeordnet ist und thermisch mit dem dritten Befestigungsabschnitt (590) gekoppelt ist,
- wobei das Wärmeträgermedium (47) ausgebildet ist, den Anteil der Wärme (W₂, W₃) aus dem ersten Trägerelement (40) abzuführen und zu der Wärmesenke (5) zu leiten.

12. Planarantriebssystem (1) nach Anspruch 11,
- wobei die Trägereinrichtung (4) ein zweites Trägerelement (41) aufweist,
- wobei das zweite Trägerelement (41) einen zweiten Leitungsraum (78) fluidisch abgedichtet gegenüber der Umgebung (48) des zweiten Trägerelements (41) begrenzt,
- wobei das zweite Trägerelement (41) versetzt zu dem ersten Trägerelement (40) angeordnet ist,
- wobei das zweite Trägerelement (41) einen vierten Befestigungsabschnitt (591) auf einer dem Statormodul (2) zugewandten Seite aufweist,
- wobei der zweite Befestigungsabschnitt (557) und der vierte Befestigungsabschnitt (591) thermisch miteinander verbunden sind und ausgebildet sind, Wärme (W₂, W₃) aus dem zweiten Befestigungsabschnitt (557) an den vierten Befestigungsabschnitt (591) zu leiten,
- wobei der vierte Befestigungsabschnitt (591) thermisch mit dem zweiten Leitungsraum (78) verbunden ist,
- wobei das Wärmeträgermedium (47) den zweiten Leitungsraum (78) durchströmt,
- wobei das Wärmeträgermedium (47) ausgebildet ist, die Wärme vom vierten Befestigungsabschnitt (591) abzuführen.

13. Planarantriebssystem (1) nach Anspruch 12 ,
- wobei die Trägereinrichtung (4) eine Fluidleitung (54) aufweist,
- wobei die Fluidleitung (54) den ersten Leitungsraum (71) mit dem zweiten Leitungsraum (78) fluidisch verbindet,
- wobei in der Fluidleitung (54) das Wärmeträgermedium (47) angeordnet ist,
- wobei das Wärmeträgermedium (47) ausgebildet ist, den ersten Leitungsraum (71), die Fluidleitung (54) und den zweiten Leitungsraum (78) zu durchströmen,
- wobei das Wärmeträgermedium (47) ausgebildet ist, die Wärme vom vierten Befestigungsabschnitt (591) abzuführen.

14. Planarantriebssystem (1) nach einem der Ansprüche 11 bis 13,
- wobei die Kühleinrichtung (3) eine Förderpumpe (49) und einen Wärmetauscher (44) aufweist,
- wobei der Wärmetauscher (44) eine Primärseite (45) und eine Sekundärseite (46) aufweist,
- wobei die Förderpumpe (49) fluidisch mit dem ersten Leitungsraum (71) und mit der Primärseite (45) des Wärmetauschers (44) verbunden ist,
- wobei die Förderpumpe (49) ausgebildet ist, das Wärmeträgermedium (47) in einem Kreislauf zwischen der Primärseite (45) und dem ersten Leitungsraum (71) zu fördern,
- wobei die Sekundärseite (46) mit der Wärmsenke (5) thermisch verbunden ist,
- wobei der Wärmetauscher (44) ausgebildet ist, die Wärme von der Primärseite (45) an die Sekundärseite (46) zu leiten und an der Sekundärseite (46) an die Wärmesenke (5) zu übertragen.

15. Planarantriebssystem nach einem der Ansprüche 10 bis 14,
- wobei das erste Trägerelement (70) zumindest abschnittsweise ein Hohlprofil aufweist, oder
- wobei das erste Trägerelement (70) ein plattenförmig ausgebildetes Vollprofil aufweist.

## Claims

1. Stator module (2) for a planar drive system (1)
- wherein the stator module (2) has a module upper side (8) extending in a plane and a module underside (9) opposite the module upper side (8), a stator unit (400) and a cooling unit (500),
- wherein the stator unit (400) has at least one coil conductor (402) which can be energized by a drive current to generate a magnetic field for driving a moving body (20) of the planar drive system (1), which moving body can be positioned at the module upper side (8),
- wherein the stator unit (400) is arranged at the module upper side (8),
**characterized in that**
- the cooling unit (500) has a housing cover (510) and a housing base (520),
- wherein the housing cover (510) is arranged between the stator unit (400) and the housing base (520),
- wherein the housing cover (510) is at least thermally connected to a stator underside (403) of the stator unit (400) at a cover upper side (553) of the housing cover (510),
- wherein the housing cover (510) is thermally connected to the housing base (520) on a cover underside (554) facing away from the stator unit (400),
- wherein the housing base (520) is arranged at the module underside (9) and has a first fastening portion (556) at the module underside (9),
- wherein the first fastening portion (556) is thermally connectable to a heat sink (5),
- wherein the housing cover (510) is designed to conduct heat (W₂, W₃) from the stator unit (400) to the housing base (520),
- wherein the housing base (520) is designed to conduct the heat (W₂, W₃) from the housing cover (510) to the first fastening portion (556), at least in part.

2. Stator module (2) according to Claim 1,
- wherein the housing cover (510) has a first housing portion (566) and a second housing portion (567) on the side facing the stator unit (400),
- wherein the first housing portion (566) and the second housing portion (567) adjoin one another,
- wherein the housing cover (510) has at least one first heat-conducting structure (530) at the first housing portion (566),
- wherein the first heat-conducting structure (530) comprises at least one first heat-conducting element (571),
- wherein the first heat-conducting element (571) extends in the direction of the stator unit (400) and abuts against the stator unit (400) at a contact face (572) and is thermally coupled to the stator unit (400),
- wherein a control unit (3000) of the stator module (2) is arranged in the second housing portion (567).

3. Stator module according to Claim 2,
- wherein the first heat-conducting structure (530) comprises a plurality of first heat-conducting elements (571),
- wherein the first heat-conducting elements (571) are arranged at a spacing from one another,
- and/or
- wherein the second housing portion (567) is designed to be flat on the cover upper side (553),
- wherein the housing cover (510) has an edge (513) on the side facing the stator unit (400),
- wherein the edge (513) is preferably formed circumferentially at the housing cover (510) and delimits the interior space (564) laterally,
- wherein the edge (513) extends in the direction of the stator unit (400),
- wherein the first heat-conducting structure (530) is arranged between the second housing portion (567) and the edge (513),
- wherein the first heat-conducting structure (530) extends over the entire first housing portion (566) between the edge (513) and the second housing portion (567).

4. Stator module (2) according to Claim 2 or 3,
- wherein the first heat-conducting element (571) is designed in the form of a pin,
- wherein the housing cover (510) has a cover portion (565) designed in the form of a plate,
- wherein the cover portion (565) is arranged at a spacing from the stator unit (400),
- wherein, in each case, the first heat-conducting element (571) is connected to the cover portion (565) by a side opposite the contact face (572),
- wherein the first heat-conducting element (571) is aligned at an angle, preferably perpendicularly, to the cover portion (565).

5. Stator module (2) according to Claim 4,
- wherein the cover portion (565) and the stator unit (400) delimit a first interior space (564) of the stator module (2),
- wherein the first interior space (564) is filled with a thermally conductive and electrically insulating potting compound (596) such that the control unit (3000) is embedded in the potting compound (596), and the potting compound (596) is designed to transfer heat from the stator unit (400) and/or the control unit (3000) to the housing cover (510).

6. Stator module (2) according to one of the preceding claims,
- wherein the housing cover (510) has a cover portion (565) designed in the form of a plate, a further edge (512) on a side facing the housing base (520), a second heat-conducting structure (542) and a centre region (543),
- wherein the further edge (512) is arranged at the cover portion (565) and extends in the direction of the housing base (520),
- wherein the second heat-conducting structure (542) adjoins the further edge (512) internally and has at least one second heat-conducting element (581),
- wherein the second heat-conducting element (581) is connected to the cover portion (565) on the side facing away from the housing base (520) and is thermally connected to the housing base (520) on the side facing the housing base (520),
- wherein the centre region (543) is arranged internally in relation to the second heat-conducting structure (542) and is surrounded by the second heat-conducting structure (542),
- wherein the centre region (543) is designed to be planar and is arranged at a spacing from the housing base (520).

7. Stator module (2) according to Claim 6,
- having a sensor module (200),
- wherein the housing cover (510) and the housing base (520) delimit a second interior space (560),
- wherein the sensor module (200) is arranged in the second interior space (560),
- wherein the sensor module (200) is electrically connected to the control unit (3000),
- wherein the sensor module (200) has at least one position-detection unit (206) for detecting a magnetic field of the moving body (20), a printed circuit board (201) and at least one processing unit (202),
- wherein the position-detection unit (206) is connected to the printed circuit board (201),
- wherein the printed circuit board (201) connects the processing unit (202) to the position-detection unit (206),
- wherein the processing unit (202) is arranged on a side of the printed circuit board (201) which faces the housing cover (510),
- wherein a processing-unit receptacle (578) is arranged in the cover portion (565) on a side facing the housing base (520),
- wherein the processing-unit receptacle (578) is designed to correspond to the processing unit (202),
- wherein the processing unit (202) engages in the processing-unit receptacle (578), at least in certain portions,
- wherein the processing unit (202) is preferably thermally connected to the cover portion (565),
- wherein the cover portion (565) is designed to dissipate heat from the processing unit (202), and to conduct it to the housing base (520), for the purpose of cooling the processing unit (202), and/or
- wherein the printed circuit board (201) has at least one housing passage (240),
- wherein the housing passage (240) is designed to correspond to the second heat-conducting element (581), at least in certain portions,
- wherein the second heat-conducting element (581) passes through the housing passage (240) and abuts against the housing base (520) at the end, and/or
- wherein the second heat-conducting structure (542) has a plurality of second heat-conducting elements (581),
- wherein the second heat-conducting elements (581) are arranged at a predefined spacing, preferably at a regular spacing, from one another,
- wherein an intermediate space (544) is arranged between the two heat-conducting elements (581),
- wherein the printed circuit board (201) is arranged in the intermediate space (544), at least in certain portions.

8. Stator module (2) according to one of the preceding claims,
- having a module cover (110) and a further control unit (1000),
- wherein the housing base (520) and the module cover (110) delimit a third interior space (118),
- wherein the further control unit (1000) is arranged in the third interior space (118),
- wherein the module cover (110) is arranged on a side facing away from the housing cover (510) and such that it is offset from the first fastening portion (556),
- wherein the module cover (110) is thermally connected to the further control unit (1000),
- wherein the module cover (110) has a cooling rib structure (113) on a side facing away from the housing base (520).

9. Stator module (2) according to Claim 8,
- wherein the housing base (520) has a second fastening portion (557) at the module underside (9),
- wherein the module cover (110) is arranged between the first fastening portion (556) and the second fastening portion (557),
- wherein the second fastening portion (557) can be thermally coupled to the heat sink (5) and is designed to conduct heat (W₂, W₃) to the heat sink (5),
- wherein the first fastening portion (556) and the second fastening portion (557) are arranged in a common plane and aligned parallel to the module upper side (8),
- and/or
- wherein the third interior space (118) is filled with a further potting compound (143) such that the further control unit (1000) is embedded in the potting compound (143),
- wherein the further potting compound (143) is designed to be thermally conducting and connects the further control unit (1000) to the module cover (110),
- wherein the module cover (110) is thermally conducting and is designed to transfer a further heat (W₁) of the further potting compound (143) to the cooling rib structure (113), and the cooling rib structure (113) is designed to transfer the further heat (W₁) to the environment (48) .

10. Planar drive system (1)
- having a stator module (2), a cooling device (3) and a carrier device (4),
- wherein the stator module (2) is designed according to one of the preceding claims,
- wherein the carrier device (4) comprises at least one carrier element (40),
- wherein the first carrier element (40) is mechanically connected to the stator module (2) and carries the stator module (2),
- wherein the first carrier element (40) has a third fastening portion (590) on a side facing the stator module (2),
- wherein the first fastening portion (556) and the third fastening portion (590) are thermally coupled to one another and are designed to divert at least a proportion of the heat (W₂, W₃) from the first fastening portion (556) to the third fastening portion (590),
- wherein the first carrier element (40) is designed to divert the proportion of the heat (W₂, W₃) from the third fastening portion.

11. Planar drive system (1) according to Claim 10,
- wherein the cooling device (3) has at least one heat carrier medium (47),
- wherein the first carrier element (40) delimits at least one first conducting space (71) such that it is fluidically sealed with respect to an environment (48) of the first carrier element (40),
- wherein the heat carrier medium (47) is arranged in the first conducting space (71) and is thermally coupled to the third fastening portion (590),
- wherein the heat carrier medium (47) is designed to dissipate the proportion of the heat (W₂, W₃) from the first carrier element (40) and to conduct it to the heat sink (5).

12. Planar drive system (1) according to Claim 11,
- wherein the carrier device (4) has a second carrier element (41),
- wherein the second carrier element (41) delimits a second conducting space (78) such that it is fluidically sealed with respect to the environment (48) of the second carrier element (41),
- wherein the second carrier element (41) is arranged offset from the first carrier element (40),
- wherein the second carrier element (41) has a fourth fastening portion (591) on a side facing the stator module (2),
- wherein the second fastening portion (557) and the fourth fastening portion (591) are thermally connected to one another and are designed to conduct heat (W₂, W₃) from the second fastening portion (557) to the fourth fastening portion (591),
- wherein the fourth fastening portion (591) is thermally connected to the second conducting space (78),
- wherein the heat carrier medium (47) flows through the second conducting space (78),
- wherein the heat carrier medium (47) is designed to dissipate the heat from the fourth fastening portion (591).

13. Planar drive system (1) according to Claim 12,
- wherein the carrier device (4) has a fluid line (54),
- wherein the fluid line (54) fluidically connects the first conducting space (71) to the second conducting space (78),
- wherein the heat carrier medium (47) is arranged in the fluid line (54),
- wherein the heat carrier medium (47) is designed to flow through the first conducting space (71), the fluid line (54) and the second conducting space (78),
- wherein the heat carrier medium (47) is designed to dissipate the heat from the fourth fastening portion (591).

14. Planar drive system (1) according to one of Claims 11 to 13,
- wherein the cooling device (3) has a delivery pump (49) and a heat exchanger (44),
- wherein the heat exchanger (44) has a primary side (45) and a secondary side (46),
- wherein the delivery pump (49) is fluidically connected to the first conducting space (71) and to the primary side (45) of the heat exchanger (44),
- wherein the delivery pump (49) is designed to deliver the heat carrier medium (47) in a circuit between the primary side (45) and the first conducting space (71),
- wherein the secondary side (46) is thermally connected to the heat sink (5),
- wherein the heat exchanger (44) is designed to conduct the heat from the primary side (45) to the secondary side (46) and to transfer it to the heat sink (5) at the secondary side (46).

15. Planar drive system according to one of Claims 10 to 14,
- wherein the first carrier element (70) has a hollow profile, at least in certain portions, or
- wherein the first carrier element (70) has a solid profile designed in the form of a plate.

## Revendications

1. Module de stator (2) destiné à un système d'entraînement planaire (1)
- le module de stator (2) comportant un côté de module supérieur (8) qui s'étend dans un plan et un côté de module inférieur (9) opposé au côté de module supérieur (8), une unité de stator (400) et une unité de refroidissement (500),
- l'unité de stator (400) comportant au moins un conducteur de bobine (402), qui peut être alimenté avec un courant d'entraînement et qui est destiné à générer un champ magnétique destiné à entraîner un rotor (20), positionnable sur le côté de module supérieur (8), du système d'entraînement planaire (1),
- l'unité de stator (400) étant disposée sur le côté de module supérieur (8),
**caractérisé en ce que**
- l'unité de refroidissement (500) comporte un couvercle de boîtier (510) et un fond de boîtier (520),
- le couvercle de boîtier (510) étant disposé entre l'unité de stator (400) et le fond de boîtier (520),
- le couvercle de boîtier (510) étant au moins relié thermiquement sur un côté de couvercle supérieur (553) du couvercle de boîtier (510) à un côté de stator inférieur (403) de l'unité de stator (400),
- le couvercle de boîtier (510) étant relié thermiquement au fond de boîtier (520) sur un côté de couvercle inférieur (554) dirigé à l'opposé de l'unité de stator (400),
- le fond de boîtier (520) étant disposé sur le côté de module inférieur (9) et comportant une première portion de fixation (556) sur le côté de module inférieur (9),
- la première portion de fixation (556) pouvant être reliée thermiquement à un dissipateur thermique (5),
- le couvercle de boîtier (510) étant conçu pour conduire la chaleur (W₂, W₃) de l'unité de stator (400) au fond de boîtier (520),
- le fond de boîtier (520) étant conçu pour conduire la chaleur (W₂, W₃) du couvercle de boîtier (510) au moins partiellement à la première portion de fixation (556) .

2. Module de stator (2) selon la revendication 1,
- le couvercle de boîtier (510) comportant une première portion de boîtier (566) et une deuxième portion de boîtier (567) du côté dirigé vers l'unité de stator (400),
- la première portion de boîtier (566) et la deuxième portion de boîtier (567) étant adjacentes l'une à l'autre,
- le couvercle de boîtier (510) comportant au moins une première structure thermoconductrice (530) sur la première portion de boîtier (566),
- la première structure thermoconductrice (530) comprenant au moins un premier élément thermoconducteur (571),
- le premier élément thermoconducteur (571) s'étendant dans la direction de l'unité de stator (400) et venant en appui sur une surface de contact (572) de l'unité de stator (400) et étant couplé thermiquement à l'unité de stator (400),
- une unité de commande (3000) du module de stator (2) étant disposée dans la deuxième portion de boîtier (567) .

3. Module de stator selon la revendication 2,
- la première structure thermoconductrice (530) comprenant une multitude de premiers éléments thermoconducteurs (571),
- les premiers éléments thermoconducteurs (571) étant disposés à distance les uns des autres
- et/ou
- la deuxième portion de boîtier (567) étant à plat sur le côté de couvercle supérieur (553),
- le couvercle de boîtier (510) comportant un bord (513) du côté dirigé vers l'unité de stator (400),
- le bord (513) étant formé de préférence circonférentiellement sur le couvercle de boîtier (510) et délimitant latéralement l'espace intérieur (564),
- le bord (513) s'étendant en direction de l'unité de stator (400),
- la première structure thermoconductrice (530) étant disposée entre la deuxième portion de boîtier (567) et le bord (513),
- la première structure thermoconductrice (530) s'étendant sur toute la première portion de boîtier (566) entre le bord (513) et la deuxième portion de boîtier (567).

4. Module de stator (2) selon la revendication 2 ou 3,
- le premier élément thermoconducteur (571) étant conçu sous la forme d'une broche,
- le couvercle de boîtier (510) comportant une portion de couvercle (565) en forme de plaque,
- la portion de couvercle (565) étant disposée à distance de l'unité de stator (400),
- le premier élément thermoconducteur (571) étant relié à la portion de couvercle (565) sur un côté opposé à la surface de contact (572),
- le premier élément thermoconducteur (571) étant incliné, de préférence orienté perpendiculairement à la portion de couvercle (565).

5. Module de stator (2) selon la revendication 4,
- la portion de couvercle (565) et l'unité de stator (400) délimitant un premier espace intérieur (564) du module de stator (2),
- le premier espace intérieur (564) étant rempli d'une matière d'enrobage (596) thermoconductrice et électriquement isolante de manière à ce que l'unité de commande (3000) soit incorporée dans la matière d'enrobage (596) et à ce que la matière d'enrobage (596) soit conçue pour transmettre la chaleur de l'unité de stator (400) et/ou de l'unité de commande (3000) au couvercle de boîtier (510).

6. Module de stator (2) selon l'une des revendications précédentes,
- le couvercle de boîtier (510) comportant une portion de couvercle (565) en forme de plaque, sur un côté dirigé vers le fond de boîtier (520) un autre bord (512), une deuxième structure thermoconductrice (542) et une région médiane (543),
- l'autre bord (512) étant disposé sur la portion de couvercle (565) et s'étendant en direction du fond de boîtier (520),
- la deuxième structure thermoconductrice (542) étant contiguë à l'autre bord (512) vers l'intérieur et comportant au moins un deuxième élément thermoconducteur (581),
- le deuxième élément thermoconducteur (581) étant relié à la portion de couvercle (565) du côté opposé au fond de boîtier (520) et étant relié thermiquement au fond de boîtier (520) du côté dirigé vers le fond de boîtier (520),
- la région médiane (543) étant disposée du côté intérieur de la deuxième structure thermoconductrice (542) et étant entourée par la deuxième structure thermoconductrice (542),
- la région médiane (543) étant plane et étant disposée à distance du fond de boîtier (520).

7. Module de stator (2) selon la revendication 6,
- comportant un module de capteur (200),
- le couvercle de boîtier (510) et le fond de boîtier (520) délimitant un deuxième espace intérieur (560),
- le module de capteur (200) étant disposé dans le deuxième espace intérieur (560),
- le module de capteur (200) étant relié électriquement à l'unité de commande (3000),
- le module de capteur (200) comportant au moins une unité de détection de position (206) destinée à détecter un champ magnétique du rotor (20), une carte de circuit imprimé (201) et au moins une unité de traitement (202),
- l'unité de détection de position (206) étant reliée à la carte de circuit imprimé (201),
- la carte de circuit imprimé (201) reliant l'unité de traitement (202) à l'unité de détection de position (206),
- l'unité de traitement (202) étant disposée sur un côté de la carte de circuit imprimé (201) qui est dirigé vers le couvercle de boîtier (510),
- un logement d'unité de traitement (578) étant disposé dans la portion de couvercle (565) sur un côté dirigé vers le fond de boîtier (520),
- le logement d'unité de traitement (578) étant conçu pour correspondre à l'unité de traitement (202),
- l'unité de traitement (202) s'engageant au moins en partie dans le logement d'unité de traitement (578),
- l'unité de traitement (202) étant reliée de préférence thermiquement à la portion de couvercle (565),
- la portion de couvercle (565) étant conçue pour dissiper la chaleur de l'unité de traitement (202) et la conduire vers le fond de boîtier (520) afin de refroidir l'unité de traitement (202),
- et/ou
- la carte de circuit imprimé (201) comportant au moins un passage de boîtier (240),
- le passage de boîtier (240) étant conçu au moins en partie pour correspondre au deuxième élément thermoconducteur (581),
- le deuxième élément thermoconducteur (581) s'étendant à travers le passage de boîtier (240) et venant en appui du côté frontal sur le fond de boîtier (520), et/ou
- la deuxième structure thermoconductrice (542) comportant une pluralité de deuxièmes éléments thermoconducteurs (581),
- les deuxièmes éléments thermoconducteurs (581) étant disposés à une distance prédéfinie, de préférence à intervalles réguliers, les uns des autres,
- un espace intermédiaire (544) étant ménagé entre les deuxièmes éléments thermoconducteurs (581),
- la carte de circuit imprimé (201) étant disposée au moins en partie dans l'espace intermédiaire (544).

8. Module de stator (2) selon l'une des revendications précédentes,
- comportant un capot de module (110) et une autre unité de commande (1000),
- le fond de boîtier (520) et le capot de module (110) délimitant un troisième espace intérieur (118),
- l'autre unité de commande (1000) étant disposée dans le troisième espace intérieur (118),
- le capot de module (110) étant disposé sur un côté opposé au couvercle de boîtier (510) en étant décalé de la première portion de fixation (556),
- le capot de module (110) étant relié thermiquement à l'autre unité de commande (1000),
- le capot de module (110) comportant une structure de nervures de refroidissement (113) sur un côté opposé au fond de boîtier (520).

9. Module de stator (2) selon la revendication 8,
- le fond de boîtier (520) comportant une deuxième portion de fixation (557) sur le côté de module inférieur (9),
- le capot de module (110) étant disposé entre la première portion de fixation (556) et la deuxième portion de fixation (557),
- la deuxième portion de fixation (557) pouvant être couplée thermiquement au dissipateur thermique (5) et étant conçue pour conduire la chaleur (W₂, W₃) vers le dissipateur thermique (5),
- la première portion de fixation (556) et la deuxième portion de fixation (557) étant disposées dans un plan commun et étant orientées parallèlement au côté de module supérieur (8)
- et/ou
- le troisième espace intérieur (118) étant rempli d'une autre matière d'enrobage (143) de manière à ce que l'autre unité de commande (1000) soit incorporée dans la matière d'enrobage (143),
- l'autre matière d'enrobage (143) étant conçue pour être thermoconductrice et reliant thermiquement l'autre unité de commande (1000) au capot de module (110),
- le capot de module (110) étant thermoconducteur et étant conçu pour transmettre davantage de chaleur (W₁) de l'autre matière d'enrobage (143) à la structure de nervures de refroidissement (113), et la structure de nervures de refroidissement (113) étant conçue pour transmettre davantage de chaleur (W₁) vers un environnement (48).

10. Système d'entraînement planaire (1)
- comportant un module de stator (2), un dispositif de refroidissement (3) et un dispositif de support (4),
- le module de stator (2) étant conçu selon l'une des revendications précédentes,
- le dispositif de support (4) comprenant au moins un premier élément de support (40),
- le premier élément de support (40) étant relié mécaniquement au module de stator (2) et supportant le module de stator (2),
- le premier élément de support (40) comportant une troisième portion de fixation (590) sur un côté dirigé vers le module de stator (2),
- la première portion de fixation (556) et la troisième portion de fixation (590) étant couplées thermiquement l'une à l'autre et étant conçues pour dissiper au moins une partie de la chaleur (W₂, W₃) de la première portion de fixation (556) à la troisième portion de fixation (590),
- le premier élément de support (40) étant conçu pour dissiper la partie de chaleur (W₂, W₃) de la troisième portion de fixation.

11. Système d'entraînement planaire (1) selon la revendication 10, le dispositif de refroidissement (3) comportant au moins un milieu caloporteur (47),
- le premier élément de support (40) délimitant au moins un premier espace de conduction (71) de manière étanche aux fluides par rapport à l'environnement (48) du premier élément de support (40),
- le milieu caloporteur (47) étant disposé dans le premier espace de conduction (71) et étant couplé thermiquement à la troisième portion de fixation (590), le milieu caloporteur (47) étant conçu pour dissiper la partie de chaleur (W₂, W₃) du premier élément de support (40) et la conduire vers le dissipateur thermique (5).

12. Système d'entraînement planaire (1) selon la revendication 11,
- le dispositif de support (4) comportant un deuxième élément de support (41),
- le deuxième élément de support (41) délimitant un deuxième espace de conduction (78) de manière étanche aux fluides par rapport à l'environnement (48) du deuxième élément de support (41),
- le deuxième élément de support (41) étant disposé de manière décalée par rapport au premier élément de support (40),
- le deuxième élément de support (41) comportant une quatrième portion de fixation (591) sur un côté dirigé vers le module de stator (2),
- la deuxième portion de fixation (557) et la quatrième portion de fixation (591) étant reliées thermiquement l'une à l'autre et étant conçues pour conduire la chaleur (W₂, W₃) de la deuxième portion de fixation (557) à la quatrième portion de fixation (591),
- la quatrième portion de fixation (591) étant reliée thermiquement au deuxième espace de conduction (78),
- le milieu caloporteur (47) s'écoulant à travers le deuxième espace de conduit (78),
- le milieu caloporteur (47) étant conçu pour dissiper la chaleur de la quatrième portion de fixation (591) .

13. Système d'entraînement planaire (1) selon la revendication 12,
- le dispositif de support (4) comportant une conduite de fluide (54),
- la conduite de fluide (54) reliant fluidiquement le premier espace de conduction (71) au deuxième espace de conduction (78),
- le milieu caloporteur (47) étant disposé dans la conduite de fluide (54),
- le fluide caloporteur (47) étant conçu pour s'écouler à travers le premier espace de conduction (71), la conduite de fluide (54) et le deuxième espace de conduction (78),
- le fluide caloporteur (47) étant destiné à dissiper la chaleur de la quatrième portion de fixation (591) .

14. Système d'entraînement planaire (1) selon l'une des revendications 11 à 13,
- le dispositif de refroidissement (3) comportant une pompe d'alimentation (49) et un échangeur de chaleur (44),
- l'échangeur de chaleur (44) comportant un côté primaire (45) et un côté secondaire (46),
- la pompe d'alimentation (49) étant reliée fluidiquement au premier espace de conduction (71) et au côté primaire (45) de l'échangeur de chaleur (44),
- la pompe d'alimentation (49) étant conçue pour acheminer le milieu caloporteur (47) dans un circuit entre le côté primaire (45) et le premier espace de conduction (71),
- le côté secondaire (46) étant relié thermiquement au dissipateur thermique (5),
- l'échangeur de chaleur (44) étant conçu pour conduire la chaleur du côté primaire (45) au côté secondaire (46) et pour la transmettre au dissipateur thermique (5) du côté secondaire (46).

15. Système d'entraînement planaire selon l'une des revendications 10 à 14,
- le premier élément de support (70) présentant au moins en partie un profil creux, ou
- le premier élément de support (70) présentant un profil plein en forme de plaque.
